(19) Europäisches Patentamt
European Patent Office
Office européen des brevets

(11) EP 2 026 458 A1

(12) **EUROPEAN PATENT APPLICATION**
published in accordance with Art. 153(4) EPC

(43) Date of publication:
**18.02.2009 Bulletin 2009/08**

(21) Application number: **07744159.0**

(22) Date of filing: **25.05.2007**

(51) Int Cl.:
***H02P 6/16*** *(2006.01)* ***B62D 5/04*** *(2006.01)*
***B62D 6/00*** *(2006.01)* ***B62D 101/00*** *(2006.01)*
***B62D 113/00*** *(2006.01)* ***B62D 119/00*** *(2006.01)*
***B62D 137/00*** *(2006.01)*

(86) International application number:
**PCT/JP2007/060725**

(87) International publication number:
**WO 2007/139030 (06.12.2007 Gazette 2007/49)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **31.05.2006 JP 2006152531**
**07.09.2006 JP 2006243470**

(71) Applicant: **NSK Ltd.**
**Tokyo 141-8560 (JP)**

(72) Inventors:
- **NOMURA, Yasuhide**
**c/o NSK Ltd,**
**Gunma 371-8527, (JP)**
- **HISANAGA, Tomonori**
**c/o NSK Ltd,**
**Gunma 371-8527, (JP)**
- **TANAKA, Shinichi**
**c/o NSK Ltd,**
**Gunma 371-8527, (JP)**

(74) Representative: **Grünecker, Kinkeldey,**
**Stockmair & Schwanhäusser**
**Anwaltssozietät**
**Leopoldstrasse 4**
**80802 München (DE)**

# (54) ELECTRIC POWER STEERING DEVICE

(57) An electric power steering apparatus includes motor relative angle detect means 48 including motor relative angle information calculating portions 48a ~ 48c for calculating the relative angle information of an electric motor corresponding to a driver's steering amount applied to a steering system and a relative angle information compensating portion 48e for preventing the motor relative angle information calculating portions from being incapable of obtaining the relative angle information to thereby enable to generate the relative angle information all the time. The motor control means controls the electric motor based on arbitrary actual angle without setting an initial angle at the time of driving based on the relative angle information detected by the motor relative angle information detection means. It is restricted to impart uncomfortable feeling on the driver by using simply configured motor rotation angle detection means which prevents from increasing of the number of parts and cost.

*FIG. 8*

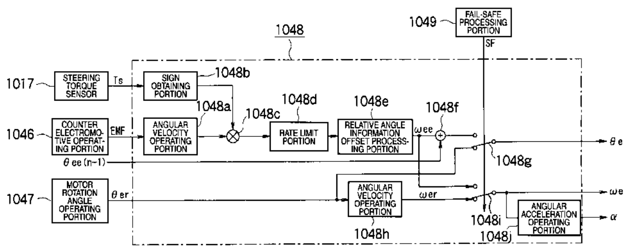


EP 2 026 458 A1

**Description**

Technical Field

The present invention relates to an electric power steering apparatus which generates a steering assisting force in accordance with a steering torque input into a steering system.

Background Art

As an electric power steering apparatus of this type, there is known an electric power steering apparatus having the following structure (see, for example, the patent reference 1).
For example, an angular position of an electric motor is detected in a position detect procedure;
an abnormality of the position detect procedure is detected by checking whether an amplitude value of a position signal output from the position detect procedure varies according to the rotation angle position of the electric motor to go below a preset value or not in an abnormality detect procedure;
after the abnormality of the position detect procedure is detected in the abnormality detect procedure, at the motor rotation angle position where the amplitude value of the position signal becomes equal to or larger than a given level according to the change of the motor rotation angle position, a torque control procedure is executed to output a torque for assisting a steering force; and
at the motor rotation angle position where the amplitude value of the position signal becomes equal to or smaller than the given level, a torque zero control procedure is executed to bring the output torque into zero,
whereby, even when the assist of the steering force is stopped suddenly in the abnormal state of the position detect procedure to bring the current power steering assisting state into a manual steering state, a steering wheel can be prevented from being returned suddenly due to a reacting force caused by the state of a vehicle.
There is also proposed a control apparatus for controlling a brushless motor for a vehicle (see, for example, the patent reference 2). Specifically, in this control apparatus, when a function to detect the position of a rotor becomes abnormal and a brushless motor is in rotation, there is carried out a control operation which switches sequentially directions of currents of electromagnetic coils according to a preset fixed pattern. When the brushless motor is stopped, a drive signal is switched gradually from a low frequency to a high frequency, whereby the brushless motor is started.
Further, there is also proposed a vehicle steering apparatus including a PLL circuit having a phase comparator for comparing an output of a reference wave generator for generating a sine wave of which crest value is in accordance with a steering torque, with an output of a difference amplifier for amplifying a difference between the output of the reference wave generator and the current of a brushless motor; and a voltage control oscillator to which an output of the phase comparison output is input and which outputs voltage control to the reference wave generator. Thus, the brushless motor can be driven without using a rotation angle sensor (see, for example, the patent reference 3).
On the other hand, as a conventional electric power steering apparatus, there is known an apparatus which, when stopping a motor during a steering assisting operation, causes a shortcircuit between the terminals of the motor for a given time to prevent occurring a so called kickback phenomenon where a return force caused by torsion of a steering system suddenly acts on a steering wheel, thereby relieving the steering load of a driver (see, for example, the patent reference 4).
Patent Reference 1: Japanese Patent Examined Publication JP-B-3600805 (Page 1, Fig. 7)
Patent Reference 2: Japanese Patent Unexamined Publication JP-A-2005-253226 (Page 1, Fig. 2)
Patent Reference 3: Japanese Patent Unexamined Publication JP-A-2003-40119 (Page 1, Fig. 2)
Patent Reference 4: Japanese Patent Examined Publication JP-B-3399226

Disclosure of the Invention

Problems that the Invention is to Solve

However, in the conventional electric power steering apparatus disclosed in the patent reference 1, there is found a problem to be solved. That is, for example, when the vehicle is turning, the steering wheel is steered in a steering further direction, the reacting force of the steering wheel becomes as large as a force incapable of obtaining the assistance of the electric power steering, thereby causing the driver to feel unpleasant.
Further, in the conventional brushless motor control apparatus disclosed in the patent reference 2, in such an electric power steering apparatus, there is found a problem to be solved. That is, when the position detect sensor becomes abnormal, if the brushless motor is driven according to a predetermined pattern, there is a possibility that the steering wheel can rotate against an intention of the driver, which makes it impossible to drive the motor according to the intention of the driver.

Further, in the conventional steering apparatus disclosed in the patent reference 3, specifically, as a motor used in the electric power steering, there is found a problem to be solved. That is, since it is easily assumed that the steering wheel is rotated when the power supply is off, and also since the position of the steering wheel when the vehicle is stopping cannot be specified, the initial angle of the motor cannot be estimated, which cannot prevent perfectly the driver from feeling strange. Therefore, it can be expected that the conventional steering apparatus disclosed in the patent reference 3 is used as an alternative control apparatus when the detection of the motor rotation angle is abnormal. However, in this case; it is necessary that a PLL circuit or the like is provided in addition to a normal control circuit configuration to form an analog circuit configuration under the precondition that the motor should be driven without using a sensor, or, there is necessary a high-performance arithmetic processing unit which is capable of executing an operation equivalent to the performance of such analog circuit configuration. Thus, there is a problem in which the number of parts is increased and production cost becomes high.

Still further, other than the above apparatuses, there are proposed various methods for driving a sensor-less brushless motor using a counter electromotive force proportional to an angular velocity. However, in these methods, it is difficult to control the motor in the vicinity of the speed zero and, to realize such motor control, it is necessary to use a CPU which is capable of a very high speed arithmetic operation. Further, there also exist various conventional examples which require complex and difficult algorithms. Since most of such conventional examples are under the precondition that the brushless motor continues to rotate in a given direction (under the precondition that, to reverse the rotation direction of the brushless motor, there must be used, for example, a method for switching the rotation direction of the brushless motor using a switch or the like), they are not suitable for a master/slave control which is executed in an electric power steering apparatus, or, when they are applied to such control, it is necessary to use a CPU which is capable of a very high speed operation, which results in the increased costs of the apparatus.

Therefore, in an electric power steering apparatus which carries out the control operation using an angle detector in its normal state, there is a problem that , when the angle detector becomes abnormal, for example, when there arises a state where the angle information cannot be obtained accurately, the motor cannot be driven in a sensor-less state but a fail-safe must be executed to stop the steering assisting control.

Further, in the electric power steering apparatus disclosed in the patent reference 4, when changing a steering assisting state to a manual steering state, only the sudden return of the steering wheel due to a returning force caused by the torsion of the steering system can be restricted; and, therefore, the steering wheel is returned gently to its neutral position. Therefore, there is a problem that it is not possible to prevent perfectly the generation of the above-mentioned kickback phenomenon.

The present invention aims at solving the problems to be solved which are found in the above-mentioned various conventional apparatus. Thus, it is an object of the invention to provide an electric power steering apparatus which uses motor relative angle detect means having a simple structure capable of restricting the increased number of parts and the increased cost, thereby being able to prevent a driver from feeling unpleasant. Further, it is a second object of the invention to provide an electric power steering apparatus which, when removing its steering assisting control, can prevent the occurrence of a kick-back phenomenon more properly.

Means for Solving the Problems

The above-mentioned first object can be attained by the following structures (1) ~ (15) of the invention.

(1) An electric power steering apparatus, including:

- an electric motor which applies a steering assisting force to a steering system;
- steering torques detect means for detecting a steering torque to be transmitted to the steering system;
- motor control means for calculating a steering assisting command value according to the steering torque detected by the steering torque detect means and for driving and controlling the electric motor according to the calculated steering assisting command value;
- a motor relative angle information calculating portion which calculates a relative angle information of the electric motor corresponding to a steering amount applied to the steering system by a driver; and
- motor relative angle detect means including a relative angle information compensating portion for preventing the motor relative angle information calculating portion from being incapable of obtaining the relative angle information to thereby enable to generate the relative angle information all the time,

wherein when starting to drive the motor, the motor control means drives and controls the electric motor from an arbitrary actual angle without setting an initial angle based on the relative angle information detected by the motor relative angle detect means.

(2) The electric power steering apparatus as set forth in (1), wherein

the motor relative angle information compensating portion adds an offset value, which changes a sign in every given cycle when needed, to the relative angle information calculated in the motor relative angle information calculating portion so as to prevent the motor relative angle information calculating portion from being incapable of obtaining the relative angle information.

(3) The electric power steering apparatus as set forth in (1), wherein

the motor relative angle calculating portion includes relative angle calculation abnormality detect means for detecting a relative angle calculation abnormal state for detecting an abnormality of at least one of the calculated relative angle information and an input value for calculating the calculated relative angle information; and

when the relative angle calculation abnormality detect means detects the relative angle calculation abnormal state, the relative angle information is calculated according to other input value where no abnormality is detected.

(4) The electric power steering apparatus as set forth in (1), wherein

the motor relative angle information calculating portion determines a rotation direction of the electric motor according to the steering torque detected by the steering torque detect means.

(5) The electric power steering apparatus as set forth in (1), wherein

the motor relative angle information calculating portion includes:

correction requiring state detect means for detecting a correction requiring state where a difference between the calculated motor relative angle and an actual angle increases; and

relative angle information correcting means for correcting the relative angle information when the correction requiring state detect means detects the correction requiring state.

(6) An electric power steering apparatus, including:

an electric motor which generates a steering assisting force for a steering system;

motor rotation angle detect means for detecting a motor rotation angle of the electric motor;

steering torque detect means for detecting a steering torque to be transmitted to the steering system;

motor control means for calculating a steering assisting command value according to the steering torque detected by the steering torque detect means and for driving and controlling the electric motor according to the calculated steering assisting command value and the motor rotation angle detected by the motor rotation angle detect means;

motor rotation angle abnormality detect means for detecting an abnormality of the motor rotation angle detect means;

a motor relative angle information calculating portion for calculating a relative angle information of the electric motor corresponding to the steering amount applied to the steering system by a driver; and

motor relative angle detect means including a relative angle information compensating portion for preventing the motor relative angle information calculating portion from being incapable of obtaining the relative angle information to thereby enable to generate the relative angle information all the time,

wherein when the motor rotation angle abnormality detect means does not detect the abnormality of the motor rotation angle abnormality detect means, the motor control means selects the motor rotation angle information detected by the motor rotation angle detect means and, when the motor rotation angle abnormality detect means detects the abnormality of the motor rotation angle detect means, the motor control means selects the relative angle information detected by the motor relative angle detect means, so as to drive and control the electric motor according to the selected motor rotation angle information or the relative angle information.

(7) The electric power steering apparatus as set forth in (6), wherein

when driving and controlling the electric motor according to the relative angle information, the motor control means drives the motor from an arbitrary actual angle without setting an initial angle.

(8) The electric power steering apparatus as set forth in (6), wherein

the motor relative angle information compensating portion adds an offset value, which changes a sign in every given cycle as needed, to the relative angle information calculated so as to prevent the motor relative angle information calculating portion from being incapable of obtaining the relative angle information.

(9) The electric power steering apparatus as set forth in (6), wherein

the motor relative angle information compensating portion detects a relative angular velocity and when the detected relative angular velocity comes near to zero, the motor relative angle information compensating portion determines an offset amount and a cycle such that the relative angular velocity positively exceeds an insensitive zone before the motor relative angle calculating portion is capable of obtaining the relative angle information.

(10) The electric power steering apparatus as set forth in (6), wherein
the motor relative angle information calculating portion includes a relative angle calculation abnormality detect means for detecting a relative angle calculation abnormal state for detecting an abnormality of at least one of the relative angle information calculated and an input value for calculating the relative angle information, and
when the relative angle calculation abnormality detect means detects a relative angle calculation abnormal state, the motor relative angle information calculating portion calculates the relative angle information according to other input value where no abnormality is detected.
(11) The electric power steering apparatus as set forth in (6), wherein
the motor relative angle information, calculating portion determines a rotation direction of the electric motor according to the steering torque detected by the steering torque detect means.
(12) The electric power steering apparatus as set forth in (6), wherein
the motor relative angle information calculating portion includes correction requiring state detect means for detecting a correction requiring state where a difference between the calculated motor relative angle and an actual angle increases, and
a relative angle information correcting means for correcting the relative angle information when the correction requiring state detect means detects the correction requiring state.
(13) The electric power steering apparatus as set forth in (6), wherein
the motor rotation angle detect means outputs a rotation angle detect signal including two systems having sine and cosine wave systems, or including other two or more systems,
the motor rotation angle abnormality detect means detects a motor rotation angle abnormality when an amplitude of the sine or cosine wave is out of a given range,
the motor relative angle information calculating portion includes:

correction requiring state detect means for detecting a correction requiring state where a difference between the calculated motor relative angle and an actual angle increases; and
relative angle information correct means for correcting the relative angle information when the correction requiring state detect means detects the correction requiring state,

the correction requiring state detect means detects a correction requiring state when the amplitude of the other of normal sine or cosine wave reaches a maximum value a the minimum value, and
the relative angle information correct means corrects the relative angle information using the then actual angle when the correction requiring state is detected.
(14) The electric power steering apparatus as set forth in (6), wherein
the motor rotation angle detect means outputs a rotation angle signal including two systems having sine and cosine wave systems,
the motor rotation angle abnormality detect means detects whether a sum of a square value of the sign wave and a square value of the cosine wave is "1" or not, thereby detecting a shortcircuit of these two wave systems,
the motor relative angle information calculating portion includes:

correction requiring state detect means for detecting a correction requiring state where a difference between the calculated motor relative angle and an actual angle increases; and
relative angle information correct means for correcting the relative angle information when the correction requiring state detect means detects the correction requiring state,

the correction requiring state detect means detects the correction requiring state when an amplitudes of the short circuited sine or cosine wave reach a minimum value and a maximum value, and
the relative angle information correct means corrects the relative angle information by using the then actual angle when the correction requiring state is detected.
(15) The electric power steering apparatus as set forth in (6), wherein
the motor rotation angle detect means is a pole position sensor for outputting a multi-phase pole position signal,
the motor rotation angle abnormality detect means detects the abnormality of one pole position sensor according to the pole position signal output from the pole position sensor,
the motor relative angle information calculating portion includes:

correction requiring state detect means for detecting a correction requiring state where a difference between the calculated motor relative angle and an actual angle increases; and
relative angle information correct means for correcting the relative angle information when the correction requiring state detect means detects the correction requiring state,

the correction requiring state detect means detects a correction requiring state when pole position signals are arranged in such a manner that an angle is determined uniquely according to the abnormal state of the pole position sensor in 360 degrees, and
the relative angle information correct means corrects the relative angle information using the actual angle of the corresponding pole position signal arrangement when the correction requiring state is detected.

Further, the above-mentioned second object can be attained by the following structures (16) ~ (24) of the invention.

(16) An electric power steering apparatus, including:

an electric motor which applying a steering assisting force to a steering system for relieving a steering load of a driver;
rotation angle detect means for detecting a motor rotation angle of the electric motor;
steering torque detect means for detecting a steering torque;
motor control means for driving and controlling the electric motor with reference to the motor rotation angle in order to generate a steering assisting force corresponding to at least the steering torque; and
abnormality detect means for detecting an abnormality of the motor rotation angle detected by the rotation angle detect means,

wherein the motor control means includes reference angle change means changing a reference angle of the motor rotation angle in such a manner that a rotation state of the electric motor just before occurrence of the abnormality is maintained, when the abnormality detect means detects the abnormality of the motor rotation angle.
(17) The electric power steering apparatus as set forth in (16), wherein
the reference angle change means sets a motor rotation angle just before the occurrence of the abnormality for the reference angle when the abnormality detect means detects the abnormality of the motor rotation angle.
(18) The electric power steering apparatus as set forth in (17), wherein
when the current steering torque has a same sign as the reference value and is equal to or smaller than the reference value, the reference angle change means uses a steering torque just before the occurrence of the abnormality for a reference value and maintains the then reference angle.
(19) The electric power steering apparatus as set forth in (18), wherein
when the current steering torque has the same sign as the reference value and is larger than the reference value, the reference angle change means changes the reference angle in an opposite direction to a steering neutral direction with respect to the then reference angle.
(20) The electric power steering apparatus as set forth in (18), wherein
when the current steering torque has a different sign from the reference value, the reference angle change means changes the reference angle in the steering neutral direction with respect to the then reference angle.
(21) The electric power steering apparatus as set forth-in (16), wherein
when the abnormality detect means detects the abnormality of the motor rotation angle, the reference angle change means sets a motor rotation angular velocity just before the occurrence of the abnormality for a reference angular velocity, and sets the reference angle according to the reference angular velocity.
(22) The electric power steering apparatus as set forth in (21), wherein
the reference angle change means includes reference angular velocity reducing means for reducing the reference angular velocity gradually.
(23) The electric power steering apparatus as set forth in (16), wherein
the motor control means includes gradual change processing means reducing the output of the electric motor gradually when the abnormality detect means detects the abnormality of the motor rotation angle.
(24) The electric power steering apparatus as set forth in (23), wherein
the gradual change processing means determines a reducing ratio of an output of the electric motor according to the steering torque.

Effects of the Invention

According to the invention as set forth in (1) - (15), the electric motor relative angle information calculating portion calculates the relative angle information of the motor such as the relative angular velocity and relative angle thereof, in accordance, with the steering amount of the driver, and the relative angle information compensating portion prevents the relative angle information calculating portion from being incapable of obtaining the relative angle information from the steering amount of the driver to thereby be able to output the relative angle information all the time.

Owing to this, even in a state where the initial actual motor angle is not determined, the relative angle of the motor can be detected positively with a simple structure, and the driving and control of the electric motor by the motor control means can be continued to thereby generate a steering assisting force corresponding to the intension of the driver. This can provide the following effects: that is, an increase in the number of parts and an increase in the cost of the system can be prevented and also the steering assisting control can be kept on without making the driver feel strange.

According to the invention, when there is provided a correction requiring state where there is a fear that a difference of the motor relative angle from an actual angle continues to increase, the motor relative angle information may be corrected according to the then state, thereby positively preventing the difference of the relative angle information from increasing.

Further, according to the invention as set forth in (16) ~ (24), when the abnormality of the motor rotation angle detected by the rotation angle detect means is detected, the motor is driven and controlled by changing the reference angle of the motor rotation angle in such a manner that the rotation state of the motor just before occurrence of the abnormality can be maintained. This can provide the effect that the motor is prevented from returning due to the reacting force and thus the occurrence of a kickback phenomenon can be prevented.

Brief Description of the Drawings

Fig. 1 is a schematic structure view of an embodiment according to the invention.
Fig. 2 is a characteristic diagram of a steering torque detect signal which is output from a steering torque sensor.
Fig. 3 is a block diagram of a specific structure of a control unit shown in Fig. 1.
Fig. 4 is a function block diagram of a microcomputer employed in the control unit.
Fig. 5 is a block diagram of a specific structure of a current command value calculating portion shown in Fig. 4.
Fig. 6 is an explanatory view of a steering assisting command value calculating map for showing the relationship between a steering torque used in a steering assistance control processing and a steering assisting command value.
Fig. 7 is a typical view used to explain a self-aligning torque.
Fig. 8 is a block diagram of a specific structure of an angular velocity angular acceleration operating portion shown in Fig. 4.
Fig. 9 is a flow chart of an example of the procedure for a motor rotation angle abnormality detect processing to be carried out by the microcomputer of the control unit.
Fig. 10 is an explanatory view of an abnormality check map to be used in the motor rotation angle abnormality processing procedure shown in Fig. 9.
Fig. 11 is a flow chart of an example of a steering assisting control processing procedure to be carried out by the microcomputer of the control unit.
Fig. 12 is a flow chart of an example of the procedure for a relative angle information operating processing to be carried out by the microcomputer of the control unit.
Fig. 13 is a characteristic diagram of a difference in the magnetic vector relative angle between the rotor and stator of an electric motor and its relationship to the absolute value of energy generated in the rotor.
Fig. 14 is a function block diagram of a second embodiment according to the invention.
Fig. 15 is a flow chart of an example of a relative angle operating processing procedure according to a second embodiment of the invention.
Fig. 16 is a function block diagram of a motor rotation angle estimating processing.
Fig. 17 is a block diagram of an angular velocity angular acceleration operating portion.
Fig. 18 is a flow chart of an example of the procedure for a relative angle detect processing according to a third embodiment of the invention.
Fig. 19 is a block diagram of a specific example of a control unit according to another embodiment of the invention.
Fig. 20 is a signal waveform diagram of a 3-phase detect signal.
Fig. 21 is a signal waveform diagram of an a-phase detect signal when it is fixed at a high level.
Fig. 22 is signal waveform diagram of the a-phase
Fig. 23 is a flow chart of an example of the procedure for a relative angle correction processing according to another embodiment of the invention.
Fig. 24 is a schematic structure view of a vehicle according to an embodiment of the invention.
Fig. 25 is a block diagram of an example of a steering assisting control apparatus.
Fig. 26 is a block diagram of a specific structure of a control operation unit shown in Fig. 25.
Fig. 27 is a characteristic diagram of a steering assisting current command value calculating map.
Fig. 28 is a flow chart of a control signal output processing to be carried out in a control signal output portion according to a fourth embodiment of the invention.

Fig. 29 is a view of a map used to calculate a speed for advancing a control angle.

Fig. 30 is a view of a map used to calculate the reducing ratio of a control amount.

Fig. 31 is a time chart used to explain the operation of the fourth embodiment of the invention.

Fig. 32 is a time chart used to explain the operation of a conventional apparatus.

Fig. 33 is a time chart used to explain the operation of a conventional apparatus.

Fig. 34 is a time chart used to explain the effect of the fourth embodiment.

Fig. 35 is a flow chart of a control signal output processing to be carried out in a control signal output portion according a fifth embodiment of the invention.

Fig. 36 is a view of a map used to calculate the reducing ratio of a motor angular velocity.

Fig. 37 is a view of a map used to calculate the reducing ratio of a motor angular velocity.

Fig. 38 is a time chart used to explain the operation of the fifth embodiment.

Fig. 39 is a time chart used to explain the operation of a sixth embodiment according to the invention.

Description of Reference Numerals and Signs

| | |
|---|---|
| 1001: | On-board battery |
| 1003: | Control unit |
| 1005: | Electric motor |
| 1006: | Motor drive circuit |
| 1011: | Steering wheel |
| 1012: | Steering shaft |
| 1013: | Speed reducer |
| 1017: | $T_0$rque sensor |
| 1018: | Resolver |
| 1021: | Inverter circuit |
| 1022: | FET gate drive circuit |
| 1030: | Microcomputer |
| 1032: | Motor rotation angle detect circuit |
| 1033: | Vehicle speed sensor |
| 1042: | Current-command value calculating portion |
| 1042A: | Steering assisting torque command value operating portion |
| 1042B: | Command value compensating portion |
| 1042C: | d-q axis current command value operating portion |
| 1044: | Subtracting portion |
| 1045: | Current control portion |
| 1046: | Counter electromotive force operating portion |
| 1047: | Motor rotation angle operating portion |
| 1048: | Angular velocity · angular acceleration operating portion |
| 1048a: | Relative angular velocity operating portion |
| 1048b: | Sign obtaining portion |
| 1048c: | Multiplying portion |
| 1048d: | Late limit portion |
| 1048e: | Dither processing portion |
| 1048f: | Adding portion |
| 1048g: | Rotation angle select portion |
| 1048h: | Angular velocity operating portion |
| 1048i: | Angular velocity select portion |
| 1048j: | Angular acceleration operating portion |
| 1048m: | Insensitive zone detect portion |
| 1048n: | Second rotation angle select portion |
| 1048o: | Angular velocity operating portion |
| 1048p: | Second angular velocity select portion |
| 1049: | Fail-safe processing portion |
| 1070: | Compensating relative angle information operating portion |
| 1101a ~ 1101c: | Pole position detect sensor |
| 2001: | Steering wheel |

| | |
|---|---|
| 2002: | Steering shaft |
| 2003: | Torque sensor |
| 2010: | Steering assisting mechanism |
| 2011: | Reduction gear |
| 2012: | 3-phase brushless motor |
| 2013: | Rotor position detect circuit |
| 2020: | Steering assisting control unit |
| 2021: | Vehicle speed sensor |
| 2031: | Steering assisting current command value operating portion |
| 2032: | Control signal output portion |
| 2034: | d axis command current calculating portion |
| 2035: | d-q axis voltage calculating portion |
| 2036: | q axis command current calculating portion |
| 2037: | 2-phase/3-phase converting portion |
| 2042: | PI control portion |
| 2043: | PWM control portion |

Best Mode for Carrying Out the Invention

Now, description will be given below of embodiments according to the invention with reference to the accompanying drawings.

Firstly, description will be given of embodiments, that is, first to third embodiments according to the invention in attaining the above-mentioned first object of the invention.

(First Embodiment)

Fig. 1 is a structure view of the whole of a first embodiment according to the invention. In Fig. 1, reference numeral 1001 designates a normal battery which is mounted on board of a vehicle. A battery voltage Vb, which is output from the battery 1001, is input through a fuse 1002 into a control unit 1003. The control unit 1003 includes a motor drive circuit 1006 serving as motor drive means for driving an electric motor 1005 which generates a steering assisting force for a steering system into which the battery voltage Vb to be input through the fuse 1002 is input through a relay 1004 shown in Fig. 3.

Here, the electric motor 1005 is made of, for example, a brushless motor which is star (Y) connected and is driven by a 3-phase alternating current; and, the electric motor 1005 operates as a steering assisting force generating motor which generates the steering assisting force of an electric power steering apparatus. The electric motor 1005 is connected through a speed reducer 1013 to a steering shaft 1012 to which a steering wheel 1011 is connected. The steering shaft 1012 is connected to a rack and pinion mechanism 1014. The rack and pinion mechanism 1014 is connected through a connecting mechanism 1015 such as a tie rod to right and left vehicle wheels 1016.

On the steering shaft 1012, there is mounted a steering torque sensor 1017 which detects a steering torque input to the steering wheel 1011. On the electric motor 1005, there is mounted a resolver 1018 for detecting the rotation angle of the motor. A steering torque detect signal detected by the steering torque sensor 1017 and a motor rotation angle detect signal detected by the resolver 1018 are respectively input to the control unit 1003.

Here, the steering torque sensor 1017 is used to detect the steering torque that is applied to the steering wheel 1011 and is transmitted to the steering shaft 1012. For example, the steering torque sensor 1017 is structured such that it converts the steering torque into the torsion angle displacement of a torsion bar interposed between input and output shafts (neither of which is shown), detects the torsion angle displacement using a magnetic signal and then converts it to an electric signal.

The steering torque sensor 1017 is structured in the following manner. That is, as shown in Fig. 2, when the steering torque to be input is zero, it outputs a given neutral steering torque detect value To; for example, when the steering wheel 1011 is turned right from this state, it outputs a value which increases from the neutral steering torque detect value To according to an increase in the steering torque; and, when the steering wheel 1011 is turned left from the state where the steering torque is zero, it outputs a steering torque detect value T which decreases from the neutral steering torque detect value To according to an increase in the steering torque.

The motor drive circuit 1006, as shown in Fig. 3, includes an inverter circuit 1021. The inverter circuit 1021 includes a series circuit in which two field effect transistors Qua and Qub are connected in series to each other, a series circuit which is connected parallel to the above-mentioned series circuit and in which two field effect transistors Qva and Qvb are similarly connected in series to each other, and a series circuit having two field effect transistors Qwa and Qwb. The connecting point of the field effect transistors Qua and Qub of the inverter circuit 1021, the connecting point of the field effect transistors Qva and Qvb and the connecting point of the field effect transistors Qwa and Qwb- are respectively connected to the star-connected excitation coils Lu, Lv and Lw of the electric motor 1005, and further motor drive currents Imu, Imv and Imw, which are output from the inverter circuit 1021 to the electric motor 1005, are detected by a motor current detect circuit 1007.

The motor drive circuit 1006 also includes a FET gate drive circuit 1022 which is used to control field effect transistors FET FET6 respectively included in the inverter circuit 1021. The FET gate drive circuit 1022 turns on/off the field effect transistors FET1 ~ FET6 of the inverter circuit 1021 using PWM (pulse width modulation) signals respectively having duty ratios Du, Dv and Dw which are determined according to current command values Iut, Ivt and Iwt respectively output from a microcomputer 1030 (which will be discussed later), thereby controlling the currents Imu, Imv and Imw which are allowed to flow actually into the electric motor 1005. Here, depending on the magnitude of the duty ratios Du, Dv and Dw, the FET 1, FET 3 and FET 5, which constitutes an upper arm, and the FET2, FET4 and FET 6 constituting a lower arm are respectively PWM driven while having a dead time for avoiding the occurrence of shortcircuit in the arms.

The control unit 1003 further includes a microcomputer 1030 used to supply, to the gate drive circuit 1022, a pulse width modulation signal of which duty ratio allows the electric motor 1005 to generate a steering assisting force. Into this microcomputer 1030, inputted signals are:

phase current detect values Ia ~ Ic respectively input from the current detect circuit 1007 detecting the respective phase currents of the electric motor 1005;
phase terminal voltages Va ~ Vc respectively input from a terminal voltage detect circuit 1008 which detects the respective phase terminal voltages of the electric motor 1005;
motor rotation angle signals sinθ and cosθ, which are respectively supplied from a motor rotation angle detect circuit 1032 receiving the output signal of the resolver 1018 and outputting the motor rotation angle signals through an A/D converter circuit 1031 a steering torque signal detected by the steering torque sensor 1017; and
a vehicle speed detect value Vs output from a vehicle speed sensor 1033 which detects the speed Vs of the vehicle.

Further, into this microcomputer 1030, as a control power supply, a stabilizing power supply output from a stabilized power supply circuit 1034 which is connected to the fuse 1002 and forms a microcomputer power supply of 5V, for example, is input.

Here, the motor rotation angle detect circuit 1032 supplies a carrier signal sinωt having a given frequency to the resolver 1018 to generate a sine wave signal (sinωt · sinθ) having a waveform provided by amplitude modulating the carrier signal sinωt by using a sine wave sinθ and a carrier signal (sinωt · cosθ) having a wave form provided by amplitude modulating the carrier signal sinωt by using a cosine wave cosθ, and inputs these sine wave signal (sinωt · sinθ) and cosine wave signal (sinωt · cosθ) into the microcomputer 1030 through A/D converters 1035 and 1036 respectively; and also, it detects, for example, the peak time of a carrier wave sinωt and inputs a peak detect pulse Pp into the microcomputer 1030.

Fig. 4 is a function block diagram of the structure of the microcomputer 1030. As shown in Fig. 4, the microcomputer 1030 includes: a gradual change control portion 1041, a current command value calculating portion 1042, a current output limit portion 1043, a subtracting portion 1044, a current control portion 1045, a counter electromotive force operating portion 1046, a motor rotation angle operating portion 1047, and a rotation angular velocity · angular acceleration operating portion 1048.

The gradual change control portion 1041 controls the sudden change of steering torque T input from the steering torque sensor 1017 through a fail-safe signal SF supplied from a fail-safe processing portion 1049 (which will be discussed later) to gradually change the steering torque T.

The current command value calculating portion 1042 receives steering torque Ts, the sudden change of which is controlled by the gradual change control portion 1041, and a vehicle speed Vs detected by the vehicle speed sensor 1033. The current command value calculating portion 1042 also carries out a vector control operation according to an angular speed ωe and an angular acceleration α respectively input from the angular velocity angular acceleration detect portion 1048 to thereby calculate 3-phase current command values Ia* ~ Ic*.

The current output limit portion 1043 limits the current command values Ia* ~ Ic* output from the current command value calculating portion 1042 by using a fail-safe signal SF supplied from a fail-safe processing portion 1049 (which will be discussed later).

The subtracting portion 1044 carries out a subtraction operation between the current command values Ia* ~ Ic* output from the current output limit portion 1043 and phase current detect values Ia ~ Ic input therein from the current detect circuit 1007 to thereby calculate their differences ΔIa ~ ΔIc.

The current control portion 1045 carries out a proportion/integration (PI) control on the differences ΔIa ~ ΔIc output from the subtracting portion 1044 to output instruction voltages Va - Vc to the FET gate drive circuit 1022 of the motor drive circuit 1006;

The counter electromotive force operating portion 1046 receives current detect values Ia ~ Ic output from the current detect circuit 1007 and terminal voltages Va - Vc output from the terminal voltage detect circuit 1008. The counter electromotive force operating portion 1046 also operates line counter electromotive forces EMFab, EMFbc and EMFca respectively generated between the respective motor coils based on these values and voltages.

The motor rotation angle operating portion 1047 operates a motor rotation angle θe expressed as an electric angle based on a sine wave signal (sinωt · sinθ) and a cosine wave signal (sinωt · cosθ) respectively input therein from the motor rotation angle detect circuit 1032 and a peak detect pulse Pp.

The rotation angular velocity · angular acceleration operating portion 1048 serves as relative angle and actual angle information detect means which calculates an angular velocity and an angular acceleration based on the line counter electromotive forces EMFab, EMFbc and EMFca respectively operated by the counter electromotive force operating portion 1046 and the motor rotation angle θe operated by the motor rotation angle operating portion 1047.

The fail-safe processing portion 1049 serves as motor rotation angle abnormality detect means which receives the steering torque Ts detected by the steering torque sensor 1017, vehicle speed detect value Vs detected by the vehicle speed sensor 1006 and motor rotation angle θe operated by the motor rotation angle operating portion 1047. Further, the fail-safe processing portion 1049 also checks abnormalities of the steering torque sensor 1017, vehicle speed sensor 1033, resolver 1018, motor rotation angle detect circuit 1032 and motor rotation angle operating portion 1047 according to the thus received data to thereby carry out a fail-safe processing.

Here, the current command value calculating portion 1042, as shown in Fig. 5, includes: a steering assisting torque command value operating portion 1042A, an command value compensating portion 1042B and a d-q axis current command value operating portion 1042C.

The steering assisting torque command value operating portion 1042A calculates a steering assisting current command value $I_M$* with reference to a steering assisting current command value calculating map shown in Fig. 6 which calculates the steering assisting current command value $I_M$* according to the steering torque Ts input therein from the steering torque sensor 1017 and the vehicle speed detect value Vs.

The command value compensating portion 1042B compensates the steering assisting current command value $I_M$* calculated by the steering assisting torque command value operating portion 1042A according to an angular velocity me and an angular acceleration α (which will be discussed later respectively) input therein from the rotation angular velocity angular acceleration operating portion 1048.

The d-q axis current command value operating portion 1042C calculates a d-q axis current command value according to the after-compensation torque command value I*' compensated by the command value compensating portion 1042B, and also converts the thus calculated d-q axis current command value to a 3-phase current command value.

The steering assisting torque command value operating portion 1042A calculates the steering assisting current command value In* expressed as the current command value according to the steering torque Ts and vehicle speed Vs with reference to a steering assisting torque command value calculating map shown in Fig. 6.

The steering assisting torque command value calculating map, as shown in Fig. 6, is composed of a characteristic diagram, in which the steering torque Ts is expressed in a horizontal axis, the steering assisting current command value $I_M$* is expressed in the vertical axis, and parabolic curves are drawn with the vehicle speed Vs as the parameter thereof. Specifically, in the range where the steering torque Ts extends from "0" to a set value Ts1 existing in the vicinity of "0", the steering assisting torque command value $I_M$* maintains "0". When the steering torque Ts exceeds the set value Ts1, firstly, the steering assisting current command value $I_M^*$ increases relatively gently with respect to an increase in the steering torque Ts; and, when the steering torque Ts increase further, the steering assisting current command value $I_M$* increases sharply with respect to an increase in the steering torque Ts.

That is, the characteristic curve is set such that the inclination thereof decreases as the vehicle speed increases.

The command value compensating portion 1042B includes at least: a convergence compensating portion 1051 for compensating the convergence of a yaw rate according to a motor angular velocity me (which will be discussed later) calculated by the rotation angular velocity angular acceleration operating portion 1048; an inertia compensating portion 1052 for compensating the amount of a torque generated due to the inertia of the electric motor 1005 according to the motor angular velocity α calculated by the rotation angular velocity angular acceleration operating portion 1048 to thereby prevent the sense of inertia or a control responsibility from being degraded; and a SAT estimating feedback portion 1053 for estimating a self-aligning (SAT).

Here, the convergence compensating portion 1051 receives the vehicle speed detect value Vs and the motor angular velocity ωe (which will be discussed later) calculated by the rotation angular velocity angular acceleration operating portion 1048, and then multiplies the motor angular velocity ωe by a convergence control gain Kv, which is changed according to the vehicle speed vs, to thereby calculate a convergence compensating value Ic so that the swinging operation of the steering wheel-1001 is braked to improve the convergence of the yawing of the vehicle.

Also, the SAT assuming feedback portion 1053 receives the steering torque Ts, the angular velocity ω, the angular acceleration α, and the steering assisting current command value $I_M$* calculated by the steering assisting torque command value operating portion 1042A, and estimates and operates the self-aligning torque SAT according to the thus received data. The principle of the calculation of the self-aligning torque SAT will be described with reference to Fig. 7 which shows the state of a torque occurring between the road and the steering wheel.

That is, when the vehicle driver steers the steering wheel 1001, there is generated steering torque T and, according to the steering torque T, the electric motor 1005 generates an assisting torque Tm. As a result of this, vehicle wheels W are turned following the driver's steering operation and as the reacting force of the turning of the vehicle wheels W, there is generated a self-aligning torque SAT.

Also, in this case, due to the inertia J and friction (static friction) Fr of the electric motor 1005, there is generated a torque that provides resistance against the steering motion of the steering wheel 1001. When the balance of these forces is taken into consideration, there is obtained the following motion equation (1).

$$J \cdot \alpha + Fr \cdot sign(\omega) + SAT = Tm + T \text{ --- } (1)$$

Here, the above equation (1) is Laplace transformed with its initial value as zero and, when it is solved with respect to the self-aligning torque SAT, a following equation (2) is obtained.

$$SAT(s) = Tm(s) + T(s) - J \cdot \alpha(s) + Fr \cdot sign(\omega(s)) \text{ --- } (2)$$

As can be seen from the above equation (2), when the inertia J and the static friction Fr of the electric motor 1005 are previously obtained, the self-aligning torque SAT can be estimated from the motor angular velocity $\omega$, the rotation angular acceleration $\alpha$, the assisting torque Tm and the steering torque T. Here, since the assisting torque Tm is proportional to the steering assisting current command value $I_M$*, instead of the assisting torque Tm, there is applied the steering assisting current command value $I_M$*.

An inertia compensating value Ii calculated by the inertia compensating portion 1052 and the self-aligning torque SAT calculated by the SAT assuming feedback portion 1053 are added together by an adder 1054. Thus added output of the adder 1054 and the convergence compensating value Ic calculated by the convergence compensating portion 1051 are added together by an adder 1055 to calculate an instruction compensating value Icom. The instruction compensating value Icom is added to the steering assisting current command value $I_M$* output from the the command value calculating portion 1042 by an adder 1056 to calculate an after-compensation torque command value $I_M$*'. This after-compensation torque command value $I_M$*' is output to the d-q axis current command value operating portion 1042C.

The d-q axis current command value operating portion 1042C includes: a d axis target current calculating portion 1061, an induced voltage model calculating portion 1062, a q axis target current calculating portion 1063, and a 2-phase/3-phase converting portion 1064.

The d axis target current calculating portion 1061 calculates a d axis target current Id* according to the after-compensation torque command value $I_M$*' and motor angular velocity $\omega$.

The induced voltage model calculating portion 1062 calculates the d axis EMF component ed($\theta$) and-q axis EMF component eq($\theta$) of a d-q axis induced voltage model EMF (Electro Magnetic Force) according to the motor rotation angle $\theta$ and motor angular velocity $\omega$.

The q axis target current calculating portion 1063 calculates a q axis target current Iq* according to the d axis EMF component ed($\theta$), q axis EMF component eq($\theta$) which are output from the induced voltage model calculating portion 1062, the d axis target current Id* and the after-compensation steering assisting torque command value $I_M$*' which are output from the d axis target current calculating portion 1061 and the motor angular velocity $\omega$.

The 2-phase/3-phase converting portion 1064 converts the d axis target current Id* output from the d axis target current calculating portion 1061 and the q axis target current Iq* output from the q axis target current calculating portion 1063 into 3-phase current command values Iu*, Iv* and Iw*.

The counter electromotive force operating portion 1046, firstly, according to the phase terminal voltages Va ~ Vc respectively input from the terminal voltage detect circuit 1008, operates the following (3) ~ (5) equations to thereby calculate line voltages Vab, Vbc and Vca.

$$Vab = Va - Vb \text{ --- } (3)$$

$$Vbc = Vb - Vc \quad (4)$$

$$Vca = Vc - Va \quad (5)$$

Next, according to the thus calculated line voltages Vab, Vbc and Vca as well as the respective phase current detect values Ia ~ Ic input from the current detect circuit 1007, the counter electromotive operating portion 1046 operates the following equations (6) ~ (8) to thereby calculate the respective line counter electromotive forces EMFab, EMFbc and EMFca.

$$EMFab = Vab - \{(Ra+s\cdot La)\cdot Ia - (Rb+s\cdot Lb)\cdot Ib\} \quad (6)$$

$$EMFbc = Vbc - \{(Rb+s\cdot Lb)\cdot Ib - (Rc+s\cdot Lc)\cdot Ic\} \quad (7)$$

$$EMFca = Vca - \{(Rc+s\cdot Lc)\cdot Ic - (Ra+s\cdot La)\cdot Ia\} \quad (8)$$

Here, Ra, Rb and Rc respectively represents the coil resistances of the motor; La, Lb and Lc represents the inductances of the motor; and, s is a Laplace operator and, here, it represents a differential operator (d/dt).

The absolute values of the respective calculated line counter electromotive forces EMFab, EMFbc and EMFca are added together to calculate a counter electromotive force EMF (= |EMFab| + |EMFbc| + |EMFca|). Here, the purpose of the calculation of the counter electromotive force EMF by adding together the absolute values of the respective line counter electromotive forces EMFab, EMFbc and EMFca is to simplify the operation. When enhancing the accuracy of the relative angle operation, to obtain the counter electromotive force EMF, there may be operated a square root of the sum of the squares of the respective line counter electromotive forces EMFab, EMFbc and EMFca, that is, $EMF = \sqrt{(EMFab^2 + EMFbc^2 + EMFca^2)}$. Here, the line counter electromotive forces EMFab, EMFbc and EMFca may have such accuracy that can obtain the relative angle of the motor.

Also, although, in the above-mentioned equations (6) ~ (8), the coil resistances of the motor Ra, Rb and Rc are used as fixed values, since the coil resistances of the motor Ra, Rb and Rc depend on temperature, preferably, the temperature of the motor may be detected to correct the coil resistances of the motor Ra, Rb and Rc. However, even when the coil resistances of the motor Ra, Rb and Rc are used as fixed values and the motor resistance increases or decreases due to varying temperature or the like, there may also be used such fixed values, provided there can be obtained such level of counter electromotive· angle information that is necessary to be able to continue the steering assisting control.

Here, it is noted that in order to be able to obtain the angle information, the coil resistances of the motor Ra, Rb and Rc as well as insensitive zone width set values to be set in this case must be set such that they have sufficient margins with respect to temperature variations.

Further, the motor rotation angle operating portion 1047 carries out a motor rotating angle calculating processing (not shown) each time when a peak pulse Pp is input therein from the motor angle detect circuit 1032, thereby calculating sinθ and cosθ; and then, according to the thus calculated sinθ and cosθ, the motor rotation angle operating portion 1047 calculates a motor rotation angle θe which is an electric angle.

Further, the angular velocity angular acceleration operating portion 1048, as shown in Fig. 8, includes: a relative angular velocity operating portion 1048a, a sign obtaining portion 1048b, a multiplying portion 1048c, a rate limiting portion 1048d, a relative angle information offset processing portion 1048e, an adding portion 1048f, a rotation angle select portion 1048g, an angular velocity operating portion 1048h, an angular velocity select portion 1048i and an angular velocity operating portion 1048j.

The relative angular velocity operating portion 1048a operates a relative angular velocity ωee according to the counter electromotive force EMF input therein from the counter electromotive force operating portion 1046.

The sign obtaining portion 1048b obtains a sign expressing a rotation direction according to the steering torque Ts input therein from the steering torque sensor 1017.
The multiplying portion 1048c multiplies together the relative angular velocity ωee operated by the relative angular velocity operating portion 1048a and the sign obtained by the sign obtaining portion 1048b.
The rate limiting portion 1048d prevents the sudden change of the relative angular velocity ωee output from the multiplying portion 1048c.
The relative angle information offset processing portion 1048e serves as a relative angle information compensating portion, which checks whether the relative angular velocity ωee prevented from being sudden change by the rate limiting portion 1048d is within an angular velocity area near to zero (that is, in an insensitive zone having a value ±Δω containing ωe=0 and its neighboring values). When ωee < -Δω or ωee > + Δω and also ωee is out of the insensitive zone, the relative angle information offset processing portion 1048e outputs the relative angular velocity ωee as it is, and, when ω - Δω ≤ ωee ≤ +Δω and ωee is within the insensitive zone, it sets the relative angular velocities ωee in a previously set positive and negative relative angle information offset value ±Δωd alternately at a given interval in order that the relative angular velocity ωee can provide other value than "0".
The adding portion 1048f adds the relative angular velocity ωee output from the relative angle information offset processing portion 1048e to the previous motor rotation angle θe(n-1) to calculate a relative rotation angle θee.
The rotation angle select portion 1048g serves as select means for selecting the relative rotation angle θee output from the adding portion 1048f and an actual rotation angle θer input therein from the motor rotation angle operating portion 1047 according to a fail-safe signal SF.
The angular velocity operating portion 1048h differentiates the actual rotation angle θer input therein from the motor rotation angle operating portion 1047 to calculate an actual angular velocity mer.
The angular velocity select portion 1048i selects the actual angular velocity ωer input therein from the angular velocity operating portion 1048h and the relative angular velocities ωee output from the relative angle information offset processing portion 1048e according to a fail-safe signal SF.
The angular velocity operating portion 1048j differentiates an angular velocity ωe selected by the angular velocity select portion 1048i to calculate the angular acceleration α.
Here, the counter electromotive force operating portion 1046, angular velocity operating portion 1048a, sign obtaining portion 1048b and multiplying portion 1048c cooperate together to form a relative angle information operating portion.

Here, the angular velocity operating portion 1048a, according to the counter electromotive force EMF input therein from the counter electromotive force operating portion 1046, operates the following equation (9) to calculate the relative angular velocity ωee.

$$\omega ee = EMF/Ke \text{ --- } (9)$$

Here, Ke expresses the counter electromotive force constant [V/rpm] of the motor.

In an insensitive zone setting portion (not shown) of the counter electromotive force operating portion 1046, as the motor coil resistances Ra ~ Rc of the equations (6) ~ (8) used to calculate the above-mentioned respective line counter electromotive forces EMFab, EMFbc and EMFca, there are employed resistance model values instead of actual resistance values. Owing to this, there is generated an error in the relative angular velocity ωee, while this error provides an offset error proportional to a motor current. According to this fact, the insensitive zone setting portion sets an insensitive zone which is proportional to a current, thereby removing an estimated error. That is, the reason why the insensitive zone setting portion is able to remove the assumed error is that the relative angular velocity mee is proportional to a current (a magnitude of a counter electromotive force) and the error is also proportional to a current (a magnitude of a counter electromotive force). Therefore, the set value of the insensitive zone is set for a value which corresponds to a current command value $I_M$*.

Further, since the line counter electromotive forces EMFab, EMFbc and EMFca are also influenced by an inductance which is caused to vary due to variations in the motor rotation speed, preferably, the variations in the inductance may be fed back to the counter electromotive force operating portion 1046 according to the rotation speed of the motor to thereby remove the influence of the inductance variations.
Still further, the insensitive zone width ±Δω of the relative angle information offset processing portion 1048e is a set value which regulates an area where the relative angle is 0 or in the vicinity of 0. Since the motor is driven at a relative angle, when a magnetic field restricting force between the stator and rotor of the motor is large in an area
where the motor relative angular velocity is ±Δω, the driver is not able to obtain a next relative angle information (in this case, the counter electromotive force) by steering the steering wheel, that is, there is generated a so called steering (steering wheel) locked phenomenon.

Thus, when the relative angular velocity exists in an area that is expressed by ±Δω, the relative angle offset value ±Δω must be set for such value which positively removes an insensitive zone generated due to the restricting force of the magnetic field and the torsion component of the torsion bar before the driver steers the steering wheel and rotates the motor to obtain a proper steering amount. The relative angle offset value $\pm\Delta\omega$ for removing the insensitive zone is added to the relative angular velocity at a given cycle while reversing the sign. Further, the set value of $\pm\Delta\omega$ must be within the amount and cycle which does not perform unintended steering assistance of the driver. Here, the angle amount for offsetting the relative angle to the positive and negative directions must be the same in order to prevent the angle from continuing to offset in an unintentional direction.

When a fail-safe signal SF input therein from the fail-safe processing portion 1049 is a logical value "0", the rotation angle select portion 1048g selects an actual rotation angle θer input therein from the motor rotation angle operating portion 1047 and, when the fail-safe signal SF is a logical value "1", it selects a relative rotation angle θee input therein from the adding portion 1048f.

Similarly, when the fail-safe signal SF input therein from the fail-safe processing portion 1049 is a logical value "0", the angular velocity select portion 1048i selects an actual angular velocity ωer input therein from the angular velocity operating portion 1048h and, when the fail-safe signal SF is a logical value "1", it selects a relative angular velocity ωee input therein from the relative angle information offset processing portion 48e.

The fail-safe processing portion 1049 carries out a motor rotation angle abnormality detect processing shown in Fig. 9.

This motor rotation angle abnormality detect processing is carried out as a timer interrupt processing in every given time (for example, 10 msec.). Specifically, firstly, in Step S1021, a sine wave sinθ and a cosine wave cosθ respectively calculated in a motor rotation angle calculating processing (not shown) are read in and next, in Step S1022, according to the sine wave sinθ and cosine wave cosθ, it is checked whether the combination of the sine wave sinθ and cosine wave cosθ is normal or abnormal with reference to an abnormality checking map.

Here, the abnormality checking map has a structure that, as shown in Fig. 10, the sine wave sinθ is expressed in the horizontal axis and the cosine wave cosθ is expressed in the vertical axis respectively, while there are displayed three concentric circles and two quadrangles with the origin G (0, 0) as the center thereof.

Firstly, referring to the three concentric circles, there are a circle of $(\sin\theta)^2 + (\cos\theta)^2 = Pmin$ on the inner-most side, a circle of $(\sin\theta)^2 + (\cos\theta)^2 = 1$ in the center, and a circle of $(\sin\theta)^2 + (\cos\theta)^2 = Pmax$ on the outer-most side. A lager quadrangle α is a square one side of which is $2 \cdot Pmax$, whereas a smaller quadrangle β is a square one side of which is $2 (Pmin / \sqrt{2})$. Here, a normal area is expressed by hatched area which is surrounded by the larger quadrangle α and smaller quadrangle β, whereas the remaining area shows an abnormal area. Referring further to the above-mentioned check reference Pmin and Pmax, while the influences of the detect accuracy, the number of the poles of the motor and the like are taken into consideration, Pmax and Pmin can be used to adjust the abnormality detect accuracy.

By properly setting Pmax and Pmin, it is possible to detect the failure of a motor during the driving of the motor and the abnormality of the resolver 1018. A condition of $(\sin\theta)^2 + (\cos\theta)^2 = 1$ is a checking reference for normality, and $(\sin\theta)^2 + (\cos\theta)^2 = Pmin$ and $(\sin\theta)^2 + (\cos\theta)^2 = Pmax$ are used to show the normal range of $Pmin < (\sin\theta)^2 + (\cos\theta)^2 < Pmax$, and thus they are wider than the ordinary checking reference for the normality.

Next, when it is found in Step S1022 that sinθ and cosθ are normal, the processing goes to Step S1023, where a fail-safe signal SF of a logical value "0" showing the normality of sinθ and cosθ is output to the angular velocity · angular acceleration operating portion 1048, thereby ending the timer interrupt processing. When sinθ and cosθ are found abnormal, the processing goes to Step S1024, where a fail-safe signal SF of a logical value "1" showing the abnormality of sinθ and cosθ is output to the angular velocity angular acceleration operating portion 1048, thereby ending the timer interrupt processing. In this manner, when it is checked whether sinθ and cosθ are normal or abnormal by using the abnormality checking map, it is not necessary to operate $(\sin\theta)^2 + (\cos\theta)^2$ for checking $(\sin\theta)^2 + (\cos\theta)^2 = 1$. This can reduce the processing load of the microcomputer 1030 greatly and also can reduce the checking time greatly.

The processing shown in Fig. 9 corresponds to the motor rotation angle abnormality detect means.

The microcomputer 1030 carries out a steering assisting control processing shown in Fig. 11 corresponding to the command value calculating portion 1042 according to the respective input signals.

The steering assisting control processing, as shown in Fig. 11, firstly, in Step S1001, reads the detect values of various sensors such as the steering torque sensor 1017 and vehicle speed sensor 1033 as well as the rotation angle θe, angular velocity ωe and angular acceleration α calculated by the angular velocity · angular acceleration operating portion 1048 and, next; it goes to Step S1002, where it calculates the steering assisting torque command value $I_M$* according to the steering torque T with reference to the steering assisting torque command value calculating map shown in Fig. 6; and, after then, the processing goes to Step S1003.

In Step S1003, similarly to the convergence compensating portion 1051, the motor angular velocity ωe is multiplied by a compensating coefficient Kv set according to the vehicle speed V to calculate a convergence compensating value Ic and, after then, the processing goes to Step S1004.

In Step S1004, similarly to the inertia compensating portion 1052, an inertia compensating value Ii is calculated according to the motor angular acceleration α, and next, the processing goes to Step S1005, where, similarly to the SAT estimating feedback portion 1053, the above-mentioned equation (2) is operated according to the motor angular velocity ωe and

motor angular acceleration $\alpha$ to calculate self-aligning torque SAT.

Next, the processing goes to Step S1006, where the convergence compensating value Ic, inertia compensating value Ii and self-aligning torque SAT respectively calculated in Steps S1003 ~ S1005 are added to the steering assisting torque command value $I_M$* to calculate the after-compensation steering assisting torque command value $I_M$*'. Then, the processing goes to Step S1007, where a d-q axis command value operating processing similar to the d-q axis current command value operating portion 1042B is executed on the after-compensation steering assisting torque command value $I_M$*' calculated in Step S1006 to calculate the d axis target current Id* and the q axis target current Iq*. Next, the processing goes to Step S1008, where there is executed a 2-phase/3-phase conversion processing to calculate motor current command values Ia* ~ Ic*.

Next, the processing goes to Step S1009, where the motor currents Ia ~ Ic are subtracted from the motor current command values Is* ~ Ic* respectively to calculate current differences ΔIa ~ ΔIc. Then, the processing goes to Step S1010, where a PI control processing is executed on the current differences ΔIa ~ ΔIc to calculate voltage command values Va ~ Vc, and, next, the processing goes to Step S1011, where, after the thus calculated voltage command values Vu ~ Vw are output to the FET gate drive circuit 1022 of the motor drive circuit 1006, the steering assisting control processing is ended and the processing returns to a given main program.

The microcomputer 1030 carries out a relative angular velocity operating processing which is shown in Fig. 12 and corresponds to the relative angular velocity operating portion 1048a, sign obtaining portion 1048b, multiplying portion 1048c, rate limiting portion 1048d and relative angle information offset processing portion 1048e of the angular velocity angular acceleration operating portion 1048.

This relative angular velocity operating processing is executed as a timer interrupt processing in each given time (for example, 1 msec.). Firstly, in Step S1031, the counter electromotive force EMF operated by the counter electromotive force operating portion 1046 is read; next, the processing goes to Step S1032, where the above-mentioned equation (9) is operated according to the counter electromotive force EMF to calculate the relative angular velocity ωee; and then, the processing goes to Step S1033, where the sign of the steering torque Ts is obtained and added to the relative angular velocity ωee and, after then, the processing goes to Step S1034.

In Step S1034, the currently calculated relative angular velocity ωee(n) is subtracted by the previously calculated relative angular velocity ωee(n-1) to calculate a variation amount Δωee. Then, the processing goes to Step S1035, where it is checked whether the absolute value of the calculated variation amount Δωee exceeds a variation amount upper limit value Δωes or not. When $|\Delta\omega ee| \leq \Delta\omega es$, it is determined that the variation amount Δωee is small, and the processing goes to Step S1039; and, when $|\Delta\omega ee| > \Delta\omega es$, it is determined that the variation amount Δωee is too large, and the processing goes to Step S1036.

In Step S1036, it is checked whether the variation amount Δωee is a positive value or a negative value. When $\Delta\omega ee \geq 0$, the processing goes to Step S1037, where the variation amount upper limit value Δωes is added to the previously calculated relative angular velocity ωee(n-1) to calculate a current relative angular velocity ωee(n), and then the processing goes to Step S1039. When $\Delta\omega ee < 0$, the processing goes to Step 51038, where the variation amount upper limit value Δωs is subtracted from the previously calculated relative angular velocity ωee(n-1) to calculate a current relative angular velocity ωee(n), and then the processing goes to Step S1039.

In Step S1039, it is checked whether the relative angular velocity ωee calculated in step 51033 and the current relative angular velocity ωee (n) calculated in Step S1037 or Step 51038 are within the insensitive zone to be regulated by ±Δω or not. When the current relative angular velocity ωee (n) is $-\Delta\omega \leq \omega ee \leq +\Delta\omega$ and is within the insensitive zone, the processing goes to Step S1040.

In Step S1040, a relative angle information offset value Δωd, where an angle variation with respect to the motor relative rotation angle θee is set for a value per adding cycle such as ±2 deg., is set as the current relative angular velocity ωee. After then, the processing goes to Step S1041, were "1" is added to the current time coefficient value t to calculate a new time coefficient value t, and then the processing goes to Step S1042, where it is checked whether the time coefficient value t exceeds a given value ts (for example, a value corresponding to 20 msec.) or not. When $t > ts$, the processing goes to Step S1043, where the current relative angle information offset value Δωd is multiplied by "-" to reverse the sign and, after then, the processing goes to Step S1044.

In Step S1044, the time coefficient value t is cleared to "0" and then the timer interrupt processing is ended and the processing returns to a given main program.

Further, when the check result of the above step 51039 is $\omega ee < -\Delta\omega$ or $\omega ee > +\Delta\omega$, it is determined that the relative angular velocity is out of the insensitive zone, and the timer interrupt, as it is, is ended. Further, the processing returns to a given main program.

In the processing shown in Fig. 12, the processings of Steps S1031 ~ S1038 correspond to the motor relative angle information calculating portion, while the processings of Steps S1039 ~ S1044 correspond to the relative angle information compensating portion.

Next, description will be given below of the operation of the above-mentioned first embodiment.

Now, when an ignition switch 37 shown in Fig. 3 is turned on, power from a battery 1001 is fed into the control unit 1003, whereby the microcomputer 1030 included in the control unit 1003 starts to execute the motor rotation angle abnormality detect processing shown in Fig. 9, steering assisting control processing shown in Fig. 11, relative angular velocity calculating processing shown in Fig. 12, and the like.

In this state, in the steering assisting control processing shown in Fig. 11 to be executed by the microcomputer 1030, the steering torque detect value T detected by the steering torque sensor 1017 (Step S1001) is read; a neutral torque T0 is subtracted from the read steering torque detect value T to calculate a steering torque Ts (Step S1002); next, the vehicle speed detect value Vs is read from the vehicle speed sensor 1033 (Step S1003) and, according to the steering torque Ts and vehicle speed detect value Vs, the steering assisting command value $I_M$* is calculated with reference to the steering assisting command value calculating map shown in Fig. 6 (Step S1004).

At the then time, suppose that the resolver 1018, motor rotation angle detect circuit 1032 and A/D converters 1035, 1036 are normal, when the motor rotation angle abnormality detect processing shown in Fig. 9 is executed, sinθ and cosθ are read, which are calculated by the motor rotation angle operating portion 1047 shown in Fig. 4 according to the sine wave signal (sinωt + sinθ), cosine wave signal (sinωt + cosθ) and peak detect pulse Pp respectively input therein from the motor rotation angle detect circuit 1032 (Step S1021); and, according to the thus read-in sinθ and cosθ, when referring to the abnormality checking map shown in Fig. 10, points expressed by such sinθ and cosθ are found present within the normal area shown by hatched area in Fig. 10 and thus the motor rotation angle is found normal, so that a fail-safe signal SF having a logical value "0" is output to the angular velocity angular acceleration operating portion 1048 (Step S1023).

Accordingly, in the angular velocity · angular acceleration operating portion 1048 shown in Fig. 8, an actual rotation angle θer calculated by the motor rotation angle operating portion 1047 is selected by the rotation angle select portion 1048g and is used as the rotation angle θe; also, an actual angular velocity ωer obtained by the angular velocity operating portion 1048h differentiating the actual rotation angle θer is selected by the angular velocity select portion 1048i and is used as the angular velocity me; further, the angular velocity ωe is differentiated by the angular acceleration operating portion 1048j to calculate the angular acceleration α: and, the rotation angle θe, angular velocity ωe and angular acceleration α are respectively output to the current command value calculating portion 1042.

Accordingly, in the steering assisting control processing shown in Fig. 11 to be executed by the current command value calculating portion 1042, the processing goes from Step S1002 to Step S1003, where the convergence compensating value Ic is calculated based on the angular velocity ωe. Next, the inertia compensating value $I_i$ for controlling the inertia compensation is calculated according to the angular acceleration α (Step S1004). Further, the self-aligning torque SAT is calculated according to the angular velocity me, angular acceleration α, steering torque Ts and steering assisting torque command value $I_M$* (Step S1005).

The convergence compensating value Ic, inertia compensating value Ii and self-aligning torque SAT are added to the steering assisting torque command value $I_M$* to calculate the after-compensation steering assisting torque command value $I_M$*' (Step S1006). According to the thus calculated after-compensation steering assisting torque command value $I_M$*', rotation angle θe and angular velocity ωe, there is carried out the d-q axis command value operating processing to calculate the target d axis current Id* and target q axis current Iq* (Step S1007). These target d axis current Id* and target q axis current Iq* are 2-phase/3-phase conversion processed to calculate 3-phase motor current command values Ia*, Ib* and Ic* (Step S1008).

According to the calculated target-phase motor current command values Ia*, Ib* and Ic* as well as the detected motor phase currents Ia, Ib and Ic, a current feedback processing is carried out to calculate the respective phase voltage command values Va*, Vb* and Vc* of the electric motor 1005 (Step S1010); and, these respective phase voltage command values Va*, Vb* and Vc* are output to the FET gate drive circuit 1022 of the motor drive circuit 1006 (Step S1011). Thus, the FET gate drive circuit 1022 controls and modulates the pulse width of the field effect transistors Qua ~ Qwb of the motor drive circuit 1006, whereby the motor drive circuit 1006 supplies a 3-phase drive current to the electric motor 1005, thereby allowing the electric motor 1005 to generate a steering assisting force in a direction corresponding to the steering torque applied to the steering wheel 1011; and, the thus generated steering assisting force is transmitted through the reduction mechanism 1013 to the output shaft 1012.

At the then time, in a so called rest steering state where the steering wheel 1011 is steered while the vehicle is stopping, since the vehicle speed Vs is zero and the gradient of the characteristic line of the steering assisting command value calculating map shown in Fig. 6 is large, a large steering assisting command value $I_M$* is calculated with a small steering torque Ts, whereby the electric motor 1005 generates a large steering assisting force to allow the driver to steer the steering wheel 1011 lightly.

When the vehicle is started from the stopping mode of the vehicle into a running mode thereof, in a normal steering state for steering the steering wheel 1011 during such running mode of the vehicle, the required steering assisting torque decreases as the vehicle speed increase and thus the steering torque to be transmitted to the steering wheel 1011 also decreases accordingly. Such decreased steering torque is detected by the steering torque sensor 1017 and is input to the microcomputer 1030. Therefore, the steering assisting command value $I_M$* also decreases and the steering assisting torque to be generated by the electric motor 1005 becomes smaller than the steering assisting torque that is generated in the rest steering state.

However, for example, while the vehicle is running, when, in the resolver 1018 and motor rotation angle detect circuit 1032 as well as in the motor rotation angle detect system of the A/D converters 1035, 1036, there occurs an abnormal phenomenon such as breakage, shortcircuit, ground-short or power-short (unintentional shorting to the lower or higher potential point), the sine wave signal (sinωt + sinθ) and cosine wave signal (sinωt + cosθ) to be input to the microcomputer 1030 from the motor rotation angle detect circuit 1032 become abnormal. The combination of sinθ and cosθ, which are to be calculated in a motor rotation angle calculating processing (not shown) according to the sine wave signal (sinωt + sinθ) and cosine wave signal (sinωt + cosθ) as well as the peak detect pulse $p_p$, becomes abnormal. Thus, when, in the motor abnormality detect processing shown in Fig. 9, the abnormality checking map shown in Fig. 10 is referred to according to sinθ and cosθ, points expressed by sinθ and cosθ are out of the normal area shown by hatched area, so that a fail-safe signal SF of a logical value "1" is immediately output to the angular velocity · angular acceleration operating portion 48.

Accordingly, in the angular velocity · angular acceleration operating portion 1048, the rotation angle select portion 1048g selects the relative rotation angle θee calculated by the adding portion 1048f, and also the angular velocity select portion 1048i selects the relative angular velocity ωee calculated by the relative angle information offset processing portion 1048e. At then ti7me, the previous rotation angle θer (n-1) at which the resolver 1018 and the like are normal is supplied to the adding portion 1048f as the initial value of the relative rotation angle θee.

In this manner, when the rotation angle select portion 1048g and angular velocity select portion 1048i are switched, in the relative rotation angle calculating processing shown in Fig. 12 which has been executed before such switching, the rotation angle θe, angular velocity ωe and angular acceleration α are determined by a processing which calculates a relative (rotation) angle according to the counter electromotive force EMF.

At the then time, the counter electromotive force operating portion 1046 operates the above-mentioned equations (3) ~ (5) to calculate the respective line voltages Vab, Vbc and Vca, next, operates the above equations (6) - (8) to calculate the respective line counter electromotive forces EMFab, EMFbc and EMFca, and adds them up to calculate the counter electromotive force EMF.

In the relative rotation angle calculating processing, the calculated counter electromotive force EMF (Step S1031) is read and, next, the above equation (9) is operated according to the counter electromotive force EMF to calculate the relative angular velocity ωee (Step S1032).

Then, the sign of the steering torque Ts detected by the steering torque sensor 1017 is applied to the thus calculated relative angular velocity ωee to thereby calculate the current relative angular velocity ωee(n) having a sign corresponding to the rotation direction of the electric motor 1005.

The calculated current relative angular velocity ωee (n) is subtracted by the previous relative angular velocity ωee(n-1) to calculate a variation amount Δωee (Step S1034). When the absolute value of the variation amount Δωee is equal to or less than the variation amount upper limit value Δωs, the current relative angular velocity ωee (n), as it is, is used as the current value. When the absolute value of the variation amount Δωee is more than the variation amount upper limit value Δωs, it is determined that the variation amount is too large, and thus the variation amount upper limit value Δωs is added to or subtracted from the previous relative angular velocity ωee(n-1) to thereby limit the variation amount of the relative angular velocity ωee.

When the calculated relative angular velocity ωee(n) is out of the insensitive zone, the relative angular velocity ωee(n) is determined and is supplied to the adding portion 1048f and angular velocity select portion 1048i.

Thus, the adding portion 1048f adds the relative angular velocity ωee to the previous rotation angle θer(n-1) to calculate the relative rotation angle θee.

The thus calculated relative rotation angle θee is selected by the rotation angle select portion 1048g and is output to the current command value calculating portion 1042 as the rotation angle θe. The relative angular velocity ωee (n) is selected by the angular velocity select portion 1048i and is output to the current command value calculating portion 1042 as the angular velocity ωe. Further, the angular velocity me is differentiated by the angular velocity operating portion 1048j to calculate an angular velocity α, and this angular velocity α is also output to the current command value calculating portion 1042.

Accordingly, according to the steering assisting control processing which is shown in Fig. 11 and is to be executed by the current command value calculating portion 1042, instead of the actual rotation angle θer which has become abnormal and an actual angular velocity mer and angular acceleration α which are based on the abnormal actual rotation angle θer, the relative rotation angle θee, relative angular velocity ωee and relative angular acceleration α are applied.

A command value compensating processing and a d-q axis command value operating processing, which are respectively based on these pieces of relative angular velocity information, are executed thereby continuing the execution of the steering assisting control processing.

In this manner, in a state where the angular velocity angular acceleration operating portion 1048 is selecting the relative rotation angle θee and relative angular velocity ωee, the relative angular velocity mee to be calculated by the angular velocity operating portion 1048a satisfies $-\Delta\omega \leq \omega ee \leq +\Delta\omega$ and thus goes into the insensitive zone, the processing moves from Step S1039 shown in Fig. 12 to Step S1040 also shown in Fig. 12, where a relative angle offset processing is executed on the relative angular velocity ωee.

That is, when the relative angular velocity ωee goes into the insensitive zone, in every given time (for example, 20 msec.), there is repeatedly set, as the relative angular velocity ωee, a relative angle information offset value ±Δωd in which an angle variation with respect to the motor relative rotation angle θee is set for ±2deg. per adding cycle, thereby repeating the operation to set the relative angular velocity ωee for other value than "0". In this manner, when the relative angular velocity ωee exists in the insensitive zone, as the relative angular velocity ωee, ±Δωd is set, thereby enabling to positively prevent the relative angular velocity ωee from providing "0". Further, the relative angular velocity ωee set for the relative angle information offset value ±Δωd is added to the previous rotation angle θee(n-1) by the adding portion 48f, whereby the motor relative rotation angle θee is caused to vary with respect to the previous relative angular velocity θee(n-1) by an angle variation amount of ±2deg corresponding to the relative angle information offset value ±Δωd of the motor relative rotation angle ωee.

That is, in a state where the angle information cannot be used, and also in a state where, for example, the electric motor 1005 generates a high steering assisting force, suppose the relative angular velocity ωee goes into an angular velocity area near to "0", when the driver steers the steering wheel 1011, there is a fear that the rotation of the electric motor 1005 is caused to go beyond its limit, resulting in a so called steering (steering wheel) lock. Therefore, in order for the relative angular velocity ωee to exceed the insensitive zone generated before the driver can steer the steering wheel next to obtain a counter electromotive force, the relative angle information offset values ±Δωd, which vary the angle information in the positive and negative direction, are set alternately to thereby be able to positively prevent the relative angular velocity ωee from providing "0". This makes it possible to continue the steering assisting control processing which is based on the relative angular velocity ωee, while positively preventing the occurrence of the steering lock.

Further, when the relative angular velocity ωee is calculated according to the counter electromotive force EMF of the electric motor 1005, it is difficult to obtain the rotation direction of the electric motor 1005. For example, although the rotation direction of the electric motor 1005 may be decided according to the state of sight of the phase current of a current and a counter electromotive force respectively to be supplied to the electric motor 1005, there remains a possibility that a steering assisting force against the intention of the driver can be generated. Therefore, as in the above-mentioned first embodiment, when the motor rotation direction is decided by the direction of the steering torque Ts expressing the direct intention of the driver, it is possible to set a motor rotation direction which corresponds to the intention of the driver.

Here, description will be given of the principle that the electric motor 1005 can be driven and rotated according to the relative rotation angle θee.

That is, Fig. 13 shows the relationship of the magnetic vector relative angle difference between the rotor and stator of a brushless motor to the absolute value of energy generated in the rotor.

Here, when a fixed current is fed to the stator with the position of the rotor without taking into account of the position of the rotor, as in a "state 1" shown in Fig. 13, the motor rotates while generating a torque until the magnetic vectors of the rotor and stator coincide with each other. As shown in a "state 2", when the magnetic vectors of the rotor and stator coincide with each other, the rotor is restricted by the magnetic field of the stator and is thereby unable to move (motor torque = 0Nm). That is, there is provided a state where the d axis is perfectly energized. In the "state 2", when the phase current is varied according to the desired rotation direction and rotation speed of the motor, the rotor is rotated while the rotor being restricted by the magnetic field of the stator. The restricting force at the then time is proportional to the phase current.

In this manner, according to the first embodiment, when there is generated an abnormality in the rotation angle detect system which detects the rotation angle of the electric motor 1005, the relative angular velocity ωee is calculated according to the counter electromotive force EMF to calculate the relative rotation angle θee and the relative angular velocity α corresponding to the steering amount of the driver with respect to the steering system, thereby being able to continue the steering assisting control.

However, in order to enhance the safety of the steering assisting control further, when there is generated an abnormality in the rotation angle detect system, preferably, by lowering the sensitivity of the steering assisting control, the steering assisting control may be continued. In this case, preferably, the gradual change control portion 1041 and current output limit portion 1043 may be disposed respectively before and behind the current command value calculating portion 1042 in the above-mentioned function block diagram shown in Fig. 4. Specifically, when a fail-safe signal SF input from the fail-safe processing portion 1049 has a logical value "0", the gradual change function of the gradual change control portion 1041 and the limit function of the current output limit portion 1043 may be stopped. Contrary, when the logical value is "1", the gradual change function and limit function may be fulfilled to limit the current command values Ia* ~ Ic*, thereby lowering the steering assisting force that is generated by the electric motor 1005.

Also, in the command value compensating portion 1042B, too, although the compensating portion is necessary when the rotation angle detect system is normal, one compensating portion which unnecessarily reacts when using the relative rotation angle θee based on the relative angle velocity ωee caused by the counter electromotive force, it is preferable for the one compensating portion to set the output as "0" or be multiplied with a gain less than "1" to provide a value smaller than a value in the normal state, thereby reducing the influence of the compensating portion. On the other hand, one compensating portion which is required to further compensation preferably employs a larger compensation value rather than the normal state. Specifically, the compensation control based on the angle information (the compensation control based on the position of the motor) should be stopped. However, the compensation control, which has the effect to reduce a difference between the relative angle and actual angle, or increases or decreases the gain when compared with the normal state to thereby provide the effect to reduce the difference between the relative angle and actual angle, should be carried out. In other words, the compensation control, which can provide an element to increase the difference between the relative angle and actual angle, should be stopped.

Further, in the first embodiment, since the line counter electromotive forces EMFab ~ EMFca are calculated according to the line voltages Vab ~ Vca and they are added to calculate the motor counter electromotive force EMF, the relative angular velocity ωee can be calculated from the counter electromotive force without depending on the connection of the electric motor 1005 (that is, the Y connection or Δ connection) and, at the same time, the counter electromotive force can be advantageously detected without providing a detect circuit separately.

Here, in the first embodiment, description has been given of a case where the line counter electromotive forces EMFab ~ EMFca are calculated using the line voltages Vac ~ Vca according to the equations (6) ~ (8) and they are added to calculate the motor counter electromotive force EMF. However, the invention is not limited to this embodiment. For example, when a Y connection motor is used as the electric motor 1005, the mid-point voltage of the electric motor may be detected, the mid-point voltage may be subtracted from the respective motor terminal voltages Va ~ Vc to calculate a phase voltage Vih (i=a~c), the following equation (10) is operated according to the phase voltage Vih to calculate the respective counter electromotive forces ei, and the following equation (11) may be operated according to the calculated counter electromotive forces ea ~ ec to thereby calculate the relative angular velocity ωee. In this case, a difference amount between the relative angular velocity ωee and actual angle can be reduced without increasing an operation load and thus, while omitting the rotation angle detect system, the steering assisting control processing can be carried out accurately according to the relative angular velocity ωee.

$$ei = Vih - (Ri + s \cdot Li) \cdot Ii \text{ ------ } (10)$$

$$\omega ee = 2 \times \{\max(|ea|, |eb|, |ec|)\}/Ke \text{ --- } (11)$$

In this case, since the mid-point voltage is 1/2 of a motor drive circuit application voltage, instead of detecting the mid-point voltage, a 1/2 value of the motor drive circuit application voltage may be used as a mid-point voltage Vn to thereby calculate phase voltages Vah ~ Vch.

Further, as shown in the following equation (12), the sum of the respective motor terminal voltages of the electric motor 5 may be found and, while a value obtained by dividing the sum value by the number of the phases of the motor is used as the mid-point voltage Vn, the respective phase voltages may be calculated.

$$Vn = (Va + Vb + Vc + \cdots + Vx) \div \text{number of motor phase -- } (12)$$

Further, in the first embodiment, description has been given of a case in which the relative angle information offset processing is carried out when the relative angular velocity ωee operated by the relative angular velocity operating portion 1048a exists within the insensitive zone. However, the invention is not limited to this embodiment. However, whether the relative angular velocity ωee exists within the insensitive zone or not, the relative angle information offset processing may be always carried out. Also, in this case, when the relative angular velocity ωee is out of the insensitive zone, the relative angle information offset value may be decreased; and, the relative angular velocity ωee exists within the insensitive zone, the relative angle information offset value may be increased. Further, the relative angle information offset value is not limited to the value corresponding to ±2deg but may be set such that it can exceed the insensitive zone which extends from the time of the speed 0 to the time of the next steering operation. However, when the relative angle information offset value is increased or the adding cycle is increased or both of the two operations are carried out, there is a possibility that the electric motor 1005 can be vibrated. Therefore, when the rotation angle detect system is found abnormal, in order to inform the driver of the abnormal state for recovery thereof, the relative angle information offset value may be increased or the adding cycle may be increased or both of the two operations may be carried out, thereby causing the steering wheel 1011 to vibrate. In this case, the vibration of the steering wheel 1011 may also be increased step by step within the range of the maximum value with the passage of the time from the occurrence of the abnormal state. Further, when the relative angle information offset processing is carried out all the time, the electric motor is also allowed to generate a control sound; and thus, when the relative angle information offset value and the adding cycle are caused to vary to a level where they can be used as an abnormality occurrence notice, they can also be employed as means for notifying the driver of the repair requiring state of the rotation angle detect system.

Further, in the first embodiment, description has been given of a case where the relative angle information offset value $\pm\Delta\omega d$ is set in the relative angular velocity $\omega ee$. However, the invention is not limited to this embodiment. However, alternatively, a relative angle information offset value corresponding to the relative angle information offset value $\pm\Delta\omega d$ may be added to or subtracted from a motor rotation angle $\theta ee$ which is calculated according to the relative angular velocity $\omega ee$.

Further, in the first embodiment, description has been given of a case where, in a state where the relative angular velocity $\omega ee$ is in the insensitive zone from the 0 speed area, the relative angular velocity $\omega ee$ is set in the relative angle information offset value $\pm\Delta\omega d$. However, the invention is not limited to this embodiment. Alternatively, for example, as the coil resistances Ra ~ Rc to be set by an insensitive zone setting portion (not shown) within the counter electromotive force operating portion 1046, there may be employed resistance model values instead of actual resistance values to thereby intentionally reduce the width of an insensitive zone for removing the error of the relative angular velocity $\omega ee$; and, information normally to be ignored as angle information may be used intentionally for control. In this case, it is possible to set a value which corresponds to the relative angle information offset value $\pm\Delta\omega d$.

Still further, in the first embodiment, description has been given of a case where the rotation direction is determined according to the steering torque. However, the invention is not limited to this embodiment. When the reliability of information can be secured, for example, the rotation direction may be preferably determined according to different kinds of information supplied from two or more kinds of information sources, for example, the steering rotation direction information supplied from the steering angle sensor, the state of the phase current and the sight of the counter electromotive force.

Still further, in the first embodiment, description has been given of a case where a relative angular velocity $\omega ee$ is calculated according to the counter electromotive force EMF and this relative angular velocity $\omega ee$ is added to the previous motor rotation angle $\theta ee(n-1)$ to thereby calculate the motor rotation angle $\theta ee$. However, since the line counter electromotive forces EMFab, EMFbc and EMFca provide sine waves, when the 0 crossing point of these line counter electromotive forces EMFab, EMFbc and EMFca is detected and, a motor rotation angle $\theta ee$, which is uniquely determined at the time when the 0 crossing point is detected, is used to correct the motor rotation angle $\theta ee$ in such a manner as shown in the below-mentioned table 1, a more accurate motor rotation angle $\theta ee$ can be calculated.

[Table 1]

| Target | 0 crossing condition and angle (electric angle) | |
|---|---|---|
| | - → + direction | + → - direction |
| 0 crossing point of A-B line counter electromotive force EMFab | 180deg | 360deg (0deg) |
| 0 crossing point of B-C line counter electromotive force EMFbc | 120deg | 300deg |
| 0 crossing point of C-A line counter electromotive force EMFca | 60deg | 240deg |

Also, in the first embodiment, description has been given of a case where, as the initial value of the relative rotation angle $\theta ee$, the previous relative rotation angle $\theta er$ (n-1) where the resolver 1018 and the like were normal is supplied to the adding portion 48f. However, the invention is not limited to this embodiment. As described above, since the motor can be positively driven according to the relative angle, as the initial value, an arbitrary rotation angle $\theta er$ can be set. Therefore, until the motor rotation angle is found abnormal, the relative angle may not be calculated; and, when the motor rotation angle is found abnormal or when the sign of the abnormality of the motor rotation angle is obtained, the calculation of the relative angle may be started at the then time and, according to the thus calculated relative angle, the motor may be driven. In this case, the processing load of the operation processing apparatus can be reduced.

Further, in the first embodiment, description has been given of a case where the relative speed $\omega ee$ as the relative angle information is calculated according to the counter electromotive force EMF. However, the invention is not limited to this embodiment. The relative speed $\omega ee$ may also be calculated according to the angle variation amount of the steering angle that is obtained from the steering angle sensor. Further, in a dual fault state where the counter electromotive force cannot be obtained, the relative angle θee may be calculated directly instead of the steering amount obtained from the steering angle sensor.

(Second Embodiment)

Next, description will be given below of a second embodiment according to the invention with reference to Figs. 14 ~ 16.
In the second embodiment, there is provided a compensating relative angle information operating portion which, when the relative speed ωee is in a "0" angular velocity area, instead of executing a relative angle information offset processing to compensate the relative angle, calculates a compensating relative angular velocity ωee' according to the steering torque Ts.
That is, in the second embodiment, as shown in Fig. 14, there is provided a compensating relative angle information operating portion 1070 which calculates a compensating relative angular velocity θee' according to the steering torque Ts detected by the steering torque sensor 1017. The second embodiment has a similar structure to the previously described first embodiment, except that the compensating relative angular velocity θee' operated by the compensating relative angle information operating portion 1070 is supplied to the angular velocity · angular acceleration operating portion 1048.
Here, the compensating relative angle information operating portion 1070 executes a compensating relative angle calculating processing shown in Fig. 15. This compensating relative angle calculating processing is executed as a timer interrupt processing in every given time (for example, 1 msec.) . Firstly, in Step S1051, there is read in the steering torque Ts calculated according to the steering assisting control processing and, after then, the processing goes to Step S1052.
In this step S1052, there is executed an averaging processing which calculates the average value $Ts_M$ of the steering torques Ts corresponding to a given number of previous steering torques including the thus read steering torque Ts and, after then, the processing goes to Step S1053.
In this step S1053, it is checked whether the steering torque average value $Ts_M$ calculated in the above step S1052 is within a previously set insensitive zone in the steering assisting control, that is, the insensitive zone of the electrically-operated power steering mechanism including a mechanical insensitive zone set due to the reduction gear efficiency, a rack and pinion efficiency and the like of the electric power steering mechanism, or not. When it is found that the average value $Ts_M$ is within the insensitive zone, the processing goes to Step S1054, where the steering torque average value $Ts_M$ is changed to "0" and, after then, the processing goes to Step S1055. Also, when the average value $Ts_M$ is out of the insensitive zone, the processing as it is goes to Step S1055.
In Step S1055, it is checked whether a variation amount ΔT between the current steering torque average value $Ts_M(n)$, which is composed of the steering torque average value $Ts_M$ calculated in Step S1052 or the steering torque average value $Ts_M$ changed in Step S1054, and the steering torque average value $Ts_M(n-1)$ at the previous sampling exceeds a previously set upper limit value $\Delta T_U$ or not. When $\Delta T > \Delta T_U$, it is determined that the variation amount ΔT is too large, and the processing then goes to Step S1056, where a value obtained by adding the upper limit value $\Delta T_U$ to the previous steering torque average value $Ts_M(n-1)$ is set as the current steering torque average value $Ts_M(n)$ and, after then, the processing goes to Step S1057. When $\Delta T \leq \Delta T_U$, it is determined that the variation amount ΔT is with in an allowable range, and the processing as it is goes to Step S1057.
The processing to be executed in Steps S1055 and S1056 are respectively a limit processing for limiting the variation amount ΔT and, in this case, the upper limit value $\Delta T_U$ may be a given value or may be an optimum value according to the vehicle speed Vs.
In Step S1057, there is operated the following equation (13) to calculate a motor relative angle variation $\Delta\theta_M$ and, after then, the processing goes to Step S1058.
$$\Delta\theta_M = Ts_M(n) \cdot Km/2^{12} \text{ ------ } (13)$$

Here, Km expresses a relative angle information gain.
In Step S1058, the motor relative angle variation $\Delta\theta_M$ calculated in Step S1057 is added to a motor relative angle $\Delta_{MP}$ (n-1) calculated in the previous sampling to calculate a current motor relative angle $\theta_{MP}(n)$ and, after then, the processing goes to Step 51059.
In Step S1059, the motor relative angle $\theta_{MP}(n)$ is converted to, for example, electric angles 0 ~ 4096 of 12 bits and these electric angles 0 ~ 4096 are stored into a given storage area of a RAM incorporated in the microcomputer 1030. After then, the timer interrupt processing is ended.
Here, the processing shown in Fig. 15 and the select portion 1048n of the angular velocity · angular acceleration operating portion 1048 correspond to the relative angle information compensating portion.

Fig. 16 is a function block diagram of the compensating relative angle calculating processing shown in Fig. 15. Here, although the motor relative angle information calculating gain Km may be a constant value, it may also be changed according to the vehicle speed Vs. For this purpose, there may also be provided parameter setting means for varying parameters such as the gain of the motor relative angle information operating gain that can be used to adjust the advancing angle of the motor according to the vehicle speed Vs.

It is desirable to change the relative angle information calculating gain Km for adjusting the motor advancing angle according to a limit amount of output of the steering assist force when the output of the steering assist force in the steering assist control process is limited, such as when the electric motor 1005 or control unit 1003 is overheated and the feed amount of power to the electric motor 1005 is reduced for preventing further increase of temperature, or when the vehicle speed sensor 1033 becomes abnormal and a fixed vehicle speed is set to continue the steering assisting control (for example, the gradient in the steering assist command value calculating map shown in Fig. 5 decreases as the vehicle speed increases and the steering assisting force is limited to a small value in a vehicle speed area where the vehicle speed is slower than the fixed vehicle speed. For this reason, there may also be provided second parameter setting means which is used to vary a parameter capable of adjusting the motor advancing angle such as the gain of the compensating relative angle information operation according to the output limit amount in the output limit state of the steering assisting force.

The angular velocity · angular acceleration operating portion 1048 is changed as shown in Fig. 17. That is, except for following configurations, the configuration of the second embodiment is the same as that of shown in Fig.8. The different configurations are:

the relative angle information offset processing portion 1048e of the angular velocity · angular acceleration operating portion 1048 is omitted, and instead of this, the relative angular velocity ωee limited by the rate limit portion 1048d is supplied directly to the adding portion 1048f and is also supplied to the insensitive zone detect portion 1048m;
the output of the adding portion 1048f is supplied to one input side of the second rotation angle select portion 1048n which can be switched by the detect signal of the insensitive zone detect portion 1048m;
the relative rotation angle θee' calculated by the compensating relative angle information operating portion 1070 is supplied to the other input side of the second rotation angle select portion 1048n;
the relative rotation angle θee selected by the second rotation angle select portion 1048n is supplied to one input side of the rotation angle select portion 1048g;
the angular velocity limited by the rate limit portion 1048d is supplied to one input side of the second rotation angle select portion 1048p; and
the output of an angular velocity operating portion 1048o for differentiating the relative rotation angle ωee' calculated by the compensating relative angle information operating portion 1070 to calculate the compensating angular velocity ωee' is supplied to the other input side of the second rotation angle select portion 1048p.

Here, the insensitive zone detect portion 1048m outputs a detect signal SD of a logical value "0" to the second rotation angle select portion 1048n when the relative angular velocity wee is out of the insensitive zone, and, outputs a detect signal SD of a logical value "1" when the relative angular velocity ωee is in the insensitive zone to the second angular velocity select portion 1048o.
The-second rotation angle select portion 1048n selects a relative rotation angle θee which is output from the adding portion 1048f when the detect signal SD is a logical value of "0", and, selects the compensating relative rotation angle θee' calculated by the compensating relative angle information operating portion 1070 when the detect signal SD is a logical value of "1".
The second angular velocity select portion 1048o selects the relative angular velocity ωee when the detect signal SD is a logical value of "0", and, selects the compensating relative angular velocity ωee' operated by the second angular velocity select portion 1048o when the detect signal SD is a logical value of "1".

Next, description will be given below of the operation of the second embodiment.
Firstly, in the compensating relative angle information operating portion 1070, the compensating relative angle calculating processing shown in Fig. 15 is executed, the steering torque Ts is read every given time according to a timer interrupt processing and, next, an averaging processing is executed on a given number of past steering torques Ts (n) ~ Ts (n-31) including a currently read steering torque Ts to calculate a steering torque average value $Ts_M$ (n) (Step S1052) . Execution of the averaging processing can positively prevent variations in a numeral LSB, which are caused when a steering torque T output from the steering torque sensor 1017 is converted to a digital signal by the A/D converter 1031, from being used as a noise component.

Further, it is checked whether the calculated steering torque average value $Ts_M$(n) is within the insensitive zone or not (Step S1053). When it is within the insensitive zone, the calculated steering torque average value $Ts_M(n)$ is set for "0" (Step S1054), thereby positively preventing the electric motor 1005 from being driven and rotated carelessly when the driver does not intend.

On the other hand, when the calculated steering torque average value $Ts_M(n)$ is out of the insensitive zone, the processing as it is goes to Step S1055.

Further, a variation amount $\Delta T$ of the calculated steering torque average value $Ts_M(n)$ with respect to the steering torque average value $Ts_M(n-1)$ is calculated in the previous sampling operation, and it is checked whether the calculated variation amount $\Delta T$ exceeds a previously set upper limit value $\Delta T_U$ or not. When $\Delta T > \Delta T_U$, it is judged that the variation amount is too large, and a value obtained by adding the upper limit value $\Delta T_U$ to the steering torque average value $Ts_M(n-1)$ in the previous sampling operation is set as the current steering torque average value $Ts_M(n)$ (Step S56): When $\Delta T \leq \Delta T_U$, there is used the current steering torque average value $Ts_M(n)$ as it is. Owing to the processing executed in Steps S1055 and S1056, when the variation amount of the steering torque average value $Ts_M(n)$ is large, the variation amount is limited to the upper limit value $\Delta T_U$ to thereby enable to limit the sudden change of the compensating relative rotation angle $\theta_{MP}$ when the steering torque T rises suddenly.

Further, the set relative rotation angle variation amount $\Delta\theta_M$ is added to the compensating relative rotation angle $\theta_{MP}(n-1)$ in the previous sampling operation to thereby calculate the current compensating relative rotation angle $\theta_{MP}$, the compensating relative rotation angle $\theta_{MP}$ is converted to the electric angles (0 - 4096) of 12 bits, and these electric angles 0 ~ 4096 are updated and stored into a given storage area of a RAM incorporated in the microcomputer 1030.

Accordingly, in the angular velocity · angular acceleration operating portion 1048 shown in Fig. 17, when the motor rotation angle detect system is normal, similarly to the above described first embodiment, the rotation angle select portion 1048g selects an actual rotation angle θer operated by the motor rotation angle operating portion 1047; the angular velocity select portion 1048i selects an actual angular velocity ωer calculated by the angular velocity operating portion 1048h, and the angular velocity operating portion 1048j differentiates the selected actual angular velocity ωer to calculate an angular acceleration α. The actual rotation angle θer, actual angular velocity ωer and angular acceleration α are supplied to the current command value calculating portion 1042 so as to calculate accurate phase target currents Ia* ~ Ic* based on them; calculates differences ΔIa ~ ΔIc between the phase target currents Ia* ~ Ic* and current detect values Ia ~ Ic; a PI control processing is executed on the differences ΔIa ~ ΔIc to calculate voltage command values Va* ~ Vc*; and, these voltage command values Va* ~ Vc* are output to the FET gate drive circuit 1022 of the motor drive circuit 1006, whereby a 3-phase drive current is supplied to the electric motor 1005 to generate a steering assisting force.

Further, when the occurrence of the abnormality of the rotation angle detect system including the resolver 1018 is detected by the fail-safe processing portion 1049, the fail-safe processing portion 1049 outputs a fail-safe signal SF of a logical value "1" to the rotation angle select portion 1048g and angular velocity select portion 1048i, whereby, similarly to the first embodiment, a relative angular velocity ωee according to the counter electromotive force EMF is selected.

Further, when the calculated relative angular velocity ωee is out of the insensitive zone, the insensitive zone detect portion 1048m outputs an insensitive zone detect signal SD of a logical value "0" to a second rotation angle select portion 1048m and a second angular velocity select portion 1048p. The second rotation angle select portion 1048n selects the relative rotation angle θee calculated by the adding portion 1048f, and the second angular velocity select portion 1048p selects the relative angular velocity ωee output from the rate limit portion 1048d. According to the relative rotation angle θee, relative angular velocity ωee and relative angular acceleration α respectively calculated according to the counter electromotive force EMF, the current instruction calculating portion 1042 calculates the 3-phase current command values Ia* ~ Ic*. The electric motor 1005 is driven and controlled and a steering assisting force is thus generated from the electric motor 1005, thereby enabling to continue the execution of the steering assisting control processing.

In the continuing state of the steering assisting control processing, when the relative angular velocity ωee to be calculated by the relative angular velocity operating portion 1048a comes into the insensitive zone. The insensitive zone detect portion 1048m outputs a detect signal SD of a logical value "1" to the second rotation angle select portion 1048m and second angular velocity select portion 1048p. Thus, the second rotation angle select portion 1048m selects a compensating relative rotation angle $\theta_{MP}$ calculated by the compensating relative angle information operating portion 1070 and stored in the RAM of the microcomputer 1030 and, at the same time, the second angular velocity select portion 1048p selects a relative angular velocity ωee' which is obtained by differentiating a compensating relative rotation angle θee' (= $\theta_{MP}$) in the angular velocity operating portion 1048o.

Accordingly, when the relative angular velocity ωee calculated according to the counter electromotive force EMF is in the insensitive zone near to the "0" angular velocity, there are selected the compensating relative rotation angle $\theta_{MP}$ calculated according to the steering torque Ts calculated by the compensating relative angle information operating portion 1070 and the relative angular velocity ωee'; and, a relative angular acceleration α, which is the differentiated value of the relative angular velocity ωee', is output to the command value calculating portion 1042, whereby, similarly to the first embodiment,- while preventing the occurrence of the steering (steering wheel) lock, the steering assisting control processing can be continued according to the compensating relative rotation angle $\theta_{MP}$, compensating relative angular velocity ωee' and relative angular acceleration α.

Here, in the second embodiment, description has been given of a case where, when the relative angular velocity ωee is in the insensitive zone, the compensating relative angular velocity ωee' which is calculated according to the steering torque Ts is selected. However, the invention is not limited to this embodiment. That is, there is a possibility that the relative angle θee can vary suddenly when the steering torque Ts is large while the relative angular velocity ωee is in the insensitive zone. Thus, when the steering torque Ts is large while the relative angular velocity ωee is in the insensitive zone, preferably, the compensating relative rotation angle θee' may be calculated according to the variation amount of the steering torque Ts.

Also, in the second embodiment, description has been given of a case in which, when the relative angular velocity ωee calculated according to the counter electromotive is in the insensitive zone, there are applied the compensating relative rotation angle θee' and compensating relative angular velocity ωee' which are calculated based on the steering torque $T_s$. However, the invention is not limited to this embodiment. For example, when the relative angular velocity ωee calculated according to the counter electromotive comes into the insensitive zone, whether the steering assisting force generated in the electric motor 1005 is small or not may be determined by checking, for example, whether the steering assisting torque command value $I_M$* calculated in the command value calculating portion 1042 is large or small. When the steering assisting force is small, the steering assisting control processing may be continued according to the relative angular velocity ωee, relative rotation angle θee and relative angular acceleration α respectively calculated according to the counter electromotive force EMF. When the steering assisting force is large, the steering assisting control processing may be continued according to the compensating relative rotation angle θee', compensating relative angular velocity ωee' and relative angular acceleration α which are respectively calculated according to the steering torque.

Further, in the second embodiment, description has been given of a case in which whether the relative angular velocity ωee is the 0 speed area or not is checked according to whether the relative angular velocity ωee is in the insensitive zone or not. However, the invention is not limited to this embodiment but, for example, even when the angle information θee obtained according to the counter electromotive force is in inaccurate area (for example, even when the 0 crossing point of the counter electromotive force EMF cannot be determined even if the relative angular velocity ωee comes into the insensitive zone), there may also be selected the compensating relative angular velocity ωee'.

Still further, in the second embodiment, description has been given of a case in which, as a correcting value, $\Delta\theta_M$ is set for "0". However, the invention is not limited to this embodiment but $\Delta\theta_M$ may also be set for a value which can restrict an increase amount of the relative rotation angle $\theta_{MP}(n)$ to a very small value.
Furthermore, in the second embodiment, description has been given of a case in which the relative rotation angle variation amount $\Delta\theta_M$ is calculated using the steering torque average value $Ts_M$ which is obtained by averaging the steering torques Ts. However, the invention is not limited to this embodiment but the relative rotation angle variation amount $\Delta\theta_M$ may also be calculated while using the steering torques Ts themselves as input values. In short, there can be applied any arbitrary value, provided that it is calculated according to the steering torque Ts.

(Third Embodiment)

Next, description will be given below of a third embodiment according to the invention with reference to Fig. 18. In the previously described first and second embodiments, since, to calculate the relative angle information of the brushless motor corresponding to the steering amount of the driver, the relative angular velocity constituting the relative angle information is calculated according to the counter electromotive force of the brushless motor, when the counter electromotive force of the brushless motor cannot be detected normally, the relative angle information cannot be obtained; and, therefore, the steering assisting control must be stopped. In view of this, in the third embodiment, there is provided a structure which is able to continue the steering assisting control, even when the counter electromotive force of the brushless motor cannot be detected normally.

In the third embodiment, the microcomputer 1030 carries out a relative angle operating processing shown in Fig. 18.
This relative angle operating processing is executed as a timer interrupt processing in every given time (for example, 10 msec.). Firstly, in Step S1081, it is checked whether a motor rotation angle θer to be detected by the resolver 1018 and motor rotation angle operating portion 1047 is normal or not. In this check, a fail-safe signal SF to be output in the above-mentioned motor rotation angle abnormality detect processing shown in Fig. 9 is read, and the fail-safe signal SF is checked as to whether it is has a logical value "0" or not.

When the check result of this step S1081 shows that the motor rotation angle θer is normal, the processing goes to Step S1082, where, using the motor rotation angle θer, the motor angular velocity ωe and angular acceleration α are calculated, after then, the timer interrupt processing is ended, and the processing goes back to a given main program. When the motor rotation angle θer is not normal, the processing goes to Step S83.

In Step S1083, it is checked whether the relative angle information corresponding to the steering amount of the driver can be calculated normally or not. Whether the calculation of the relative angle information is normal or not is determined by checking whether, for example, the motor terminal voltage detected by the motor terminal voltage detect portion 1008 is normal or not. When the calculation of the relative angle information is normal, the processing goes to Step S1084, where a relative angle information detect processing similar to the first embodiment is executed, after then, the timer interrupt processing is ended, and the processing goes back to a given main program. When the calculation of the relative angle information is abnormal, the processing goes to Step S1085, where a relative angle information detect processing similar to the compensating relative angle information detect processing shown in Fig. 15 to be executed in the compensating relative angle information operating portion 1070 in the second embodiment is executed, after then, the timer interrupt processing is ended, and the processing goes back to a given main program.

According to the third embodiment, when the motor rotation angle detect portion having the resolver 1018 and motor rotation angle operating portion 1047 is normal, the processing goes to Step S1082, where there are calculated the motor angular velocity $\omega e$ and angular acceleration $\alpha$ using the motor rotation angle $\theta er$ detected in the motor rotation angle detect portion. When the motor rotation angle detect portion is abnormal, it is checked whether the detection of the motor terminal voltage is normal or not. When the detection of the motor terminal voltage is normal, the processing goes to Step S1084, where there is executed the relative angle information detect processing according to the first embodiment to thereby calculate the relative angular velocity $\omega ee$, relative rotation angle $\theta ee$ and relative angular acceleration $\alpha$.

However, when the detection of the motor terminal voltage is abnormal, since it is impossible to operate accurately the relative angle information according to the first embodiment, the processing goes to Step S1085, where, as the relative angle information detect processing, there is executed the compensating angle information operating processing of Fig. 15 to be executed by the compensating angle information operating portion 1070 according to the second embodiment, thereby calculating the relative rotation angle $\theta_{MP}$ according to the steering torque Ts without using the counter electromotive force EMF; and, using the calculated relative rotation angle $\theta_{MP}$, there are calculated the relative angular velocity $\omega ee$ and relative angular acceleration $\alpha$.

In this manner, according to the third embodiment, since the calculation of the relative angle information can be carried out in two stages, even when the relative angle information including the relative angular velocity $\omega ee$, relative rotation angle $\theta ee$ and relative angular acceleration $\alpha$ cannot be calculated based on the counter electromotive force EMF according to the first embodiment, according to the steering torque Ts, there can be calculated relative angle information which includes the relative rotation angle $\theta ee$, relative angular velocity $\omega ee$ and relative angular acceleration $\alpha$. Owing to this, a range, where the continuation of the steering assisting control in the occurrence of an abnormal state is possible, can be widened, whereby the steering assisting control can be carried out more positively.

In the third embodiment, description has been given of a case where, when the detection of the terminal voltage of the motor is normal, there is carried out the relative angle information detect processing similar to the previously described first embodiment. However, the invention is not limited to this embodiment but there may also be carried out the relative angle information detect processing similar to the second embodiment.
Also, in the third embodiment, description has been given of a case where, when the relative angle operating processing according to the counter electromotive force cannot be executed, there is executed the relative angle operating processing according to the steering torque. However, the invention is not limited to this embodiment. For example, when the relative angle operating processing according to the counter electromotive force cannot be executed, using a steering angle sensor used in other processing, there may be calculated a relative angle according to the angle variation amount of a steering angle obtained from the steering angle sensor. Also, when the relative angle operating processing according to the steering angle cannot be carried out, there may be carried out the relative angle operating processing according to the steering torque. Further, the combination of these three steering angle operating processing may be decided according to the rate of failures.

Also, in the first through third embodiments, description has been given of a case where the abnormality of the motor rotation angle detect system including the resolver 1018 and motor rotation angle detect circuit 1032 is detected according to $\sin\theta$ and $\cos\theta$ with reference to the abnormality checking map. However, the invention is not limited to this embodiment. For example, when the $\sin\theta$ and the $\cos\theta$ system are short circuited, the shortcircuit may be detected using the relationship that $\sin^2\theta$ and $\cos^2\theta = 1$. In this case, the amplitudes of $\sin\theta$ and $\cos\theta$ vary in a given range while taking the same value; and, when the electric angle is 45°, they are the maximum and, when the electric angle is 225°, they are the minimum. Therefore, while monitoring the peaks of the maximum and minimum, the relative rotation angle $\theta ee$ may be corrected to the electric angles 45° and 225°.

Also, in the first through third embodiments, description has been given of a case where $\sin\theta$ and $\cos\theta$ are calculated according to the motor rotation angle calculating processing to be executed by the microcomputer 1030. However, the invention is not limited to this embodiment but $\sin\theta$ and $\cos\theta$ may also be calculated within the motor rotation angle detect circuit 1032.
Further, as the motor rotation angle detect means, instead of the resolver 1018, there may also be employed another structure. For example, as disclosed in Japanese Patent Unexamined Publication JP-A-2004-20548, a permanent magnet constituting an encoder within the bearing of the electric motor 1005 is magnetized by a virtual plane passing through the center of the permanent magnet in such a manner that the south pole and north pole are equally divided in two, two magnetic sensors are disposed at positions which are opposed to the south and north poles of the encoder and are 90° out of phase with respect to them, and there may be applied a rotation state detect device which outputs sinθ and cosθ from these magnetic sensors. In this manner, when sinθ and cosθ are output, for example, as voltages, from the motor rotation angle detect means, the microcomputer 1030 is used to check whether the amplitudes of sinθ and cosθ are in the previously set range or not. When any one of the amplitudes of sinθ and cosθ is out of the previously set range, it may be determined that an abnormality of ground-short or power-short has occurred in the sinθ or cosθ system. In this case, suppose the cosθ system is normal, in the sinθ and cosθ coordinate system, an angle where cosθ provides the maximum value is 0°, an angle where cosθ provides the minimum value is 180°, and an angle where cosθ provides a central value is 90° or 270°. Using this, when cosθ provides the maximum value, the relative rotation angle θee or relative angular velocity ωee may be corrected to "0". In this case, the maximum value may be detected using a peak detect processing or a peak detect circuit. When a peak value is previously known, the maximum value can be detected by checking whether the maximum value has reached the peak value or not. Further, when the peak value is influenced by temperatures and the like, for example, for the peak values of 0° and 180°, values just before the abnormality occurs may be set for the peak values.

In this manner, when any one of sinθ and cosθ is abnormal, the peak value of a normal signal is monitored and an angle where the peak value is provided can be employed as the correction value of the relative rotation angle θee. Also, when, as the rotation position detect means of the motor, as shown in Fig. 19, there are applied three pole position sensors 1101a, 1101b and 1101c such as Hall sensors which are used in an ordinary 3-phase brushless motor to detect the pole positions of the a phase, b phase and c phase thereof, since phase detect signals Sa, Sb and Sc output from these pole position sensors 1101a, 1101b and 1101c have a phase difference of 120° as shown in Fig. 20, it is possible to detect one pole position sensor 1101i (i = a, b, c), which has become abnormal, according to these phase detect signals Sa, Sb and Sc.

That is, when an electrically energizing state is expressed by the turn on and off of the respective phase detect signals Sa, Sb and Sc, the electrically energizing states are repeated in such a manner as shown in the lower-most stage in Fig. 20, specifically, 1 to 6.

In this state, for example, when the a-phase pole position sensor 1101a is fixed at a high level, as shown in Fig. 21, in the electrically energizing state to be expressed by the on and off, the energizing states "4", "5" and "6" and the energizing state "7", where a new a-phase detect signal Sa, a new b-phase detect signal Sb and a new c-phase detect signal Sc respectively provide a high level, are repeated in a given sequence; and, at the time when the energizing state "7" appears, an abnormality can be detected. However, in the range of 0° ~ 180° where the a-phase detect signal Sa originally provides a high level, the repeating pattern is similar to that in a normal state. Here, the energizing state "4" is a unique energizing state which appears only once in the range of 0° ~ 360°; and, in this energizing state "4", specifically, in the edge portion thereof that provides the energizing state "5" or "6", the angle can be read accurately. Similarly, when the b-phase detect signal Sb and c-phase detect signal Sc are respectively fixed at a high level, there are present energizing states "2" and "1" where the angle can be detected uniquely and also, similarly, there are present points where the angle can be recognized accurately.

Also, when the a-phase detect signal Sa is fixed at a low level, similarly, as shown in Fig. 22, in the range (180° ~ 360°) where the a-phase detect signal Sa originally provides a low level, the angle can be detected normally; and, the portion of an energizing state "3" is unique in the range 0° ~ 360°, and in the edge portions thereof where the energizing state "3" provide the energizing portions "2" and "1", the angle can be read accurately. Further, when the b-phase detect signal Sb and c-phase detect signal Sc are respectively fixed at a high level, there are present the energizing states "5" and "6" as areas where the angle can be detected uniquely and, similarly, there are present points where the angle can be recognized accurately.

As described above, the abnormality of the pole position sensors 1101a ~ 1101c for detecting the rotation of a body of rotation including the motor pole position can be recognized by detecting the energizing state "7" or "0". Specifically, when the abnormality is detected by the energizing state "7", the energizing states "1", "2" and "4" may be recognized, whereby the angle can be corrected accurately in the switching edge portions of these energizing states. When the abnormality is detected by the energizing state "0", the energizing states "3", "5" and "6" may be recognized, whereby the angle can be corrected accurately in the switching edge portions of these energizing states.

Therefore, when there is applied the rotation state detect device for outputting sinθ and cosθ, and when there are used the pole position sensors 1101a ~ 1101c, there are present the points that are capable of accurately recognizing the actual angle, whereby there can be carried out, for example, a relative angle correct processing shown in Fig. 23. According to the relative angle correct processing, in Step S1091, there is read in a counter electromotive force EMF and then the processing goes to Step S1092, where it is checked whether the relative angle is in a correction requiring state or not. In this operation to check whether the correction is necessary or not, when the value of the counter electromotive force EMF or the variation amount ΔEMF thereof is small, it is determined that the correction is not necessary and thus the timer interrupt processing is ended as it is. When the value of the counter electromotive force EMF or the variation amount ΔEMF thereof is large, it is determined that the correction is necessary, and thus the processing goes to step S1093, where it is checked whether the actual angle can be recognized from the detect signals from the rotation state detect device or pole position sensors 1101a ~ 1101c. When the actual angle cannot be recognized, the processing waits until the actual angle can be recognized; and, when the actual angle can be recognized, the processing goes to Step S1094, where the actual angle information is set as the relative angle θee and, after then, the timer interrupt processing is ended. In the relative angle correcting processing, the processing to be executed in Step S1092 corresponds to the correction requiring state detect means, while the processing to be executed in Steps S1093 and S1094 correspond to the relative angle information correcting means.

Also, in the first through third embodiments, description has been given of a case where the steering assisting control is carried out using the microcomputer 1030 but the invention is not limited to this embodiment, for example, there can also be applied other operation processing devices as well as other hardware which uses an operation circuit, an adding circuit, a comparison circuit and the like.

Further, in the first through third embodiments, description has been given of a case where the steering assisting control processing is executed using the microcomputer 1030 and the pulse width control processing is executed using the FET gate drive circuit 1022. However, the invention is not limited to this embodiment, but both of the steering assisting control processing and pulse width control processing may be executed by the microcomputer 1030 and thus the inverter circuit 21 may be driven and controlled directly by the microcomputer 1030.

Next, description will be given below of embodiments for attaining the second object of the invention, that is, fourth ~ sixth embodiments.

(Fourth Embodiment)

Fig. 24 is a structure view of the whole of a fourth embodiment of an electric power steering apparatus according to the invention.

In Fig. 24, reference numeral 2001 designates a steering wheel. A steering force, which is applied to the steering wheel 2001 from the driver, is transmitted to a steering shaft 2002 which includes an input shaft 2002a and an output shaft 200b. One end of the input shaft 2002a is connected to the steering wheel 2001, while the other end thereof is connected through a torque sensor 2003 serving as steering torque detect means to one end of the output shaft 2002b.

A steering force transmitted to the output shaft 2002b is then transmitted through a universal joint 2004 to a lower shaft 2005 and is further transmitted through a universal joint 2006 to a pinion shaft 2007. The steering force transmitted to the pinion shaft 2007 is transmitted through a steering gear 2008 to tie rods 2009 to thereby steer vehicle wheels (not shown). Here, the steering gear 2008 has a rack and pinion type structure including a pinion 2008a connected to the pinion shaft 2007 and a rack 2008b meshingly engaged with the pinion 2008a, in which a rotation movement transmitted to the pinion 2008a is converted to a linear movement by the rack 2008b.

To the output shaft 2002b of the steering shaft 2002, a steering assisting mechanism 2010 which transmits the steering assisting force to the output shaft 2002b is connected. This steering assisting mechanism 2010 includes a reduction gear 2011 connected to the output shaft 2002b, and a 3-phase brushless motor 2012 serving as an electric motor which is connected to the reduction gear 2011 and generates a steering assisting force for a steering system.

The torque sensor 2003 is used to detect the steering torque that is applied to the steering wheel 1 and is transmitted to the input shaft 2002a. The torque sensor 2003 is structured such that it converts the steering torque to the torsion angle variation of a torsion bar interposed between the input shaft 2002a and output shaft 2002b, and then detects the torsion angle variation using a potentiometer.

Also, referring to the structure of the 3-phase brushless motor 2012, one end of a U-phase coil Lu, one end of a V-phase coil Lv and one end of a W-phase coil Lw are connected to each other to form a star connection; the other ends of the respective coils Lu, Lv and Lw are respectively connected to a steering assisting control unit 2020; and, motor drive currents Iu, Iv and Iw are supplied from the steering assisting control unit 2020 to the other ends of the coils Lu, Lv and Lw individually. Further, the 3-phase brushless motor 2012 includes a resolver detecting the rotation position of the rotor and a rotor position detect circuit 2013 serving as rotation angle detect means having an encoder and the like.

The rotor position detect circuit 2013 supplies a carrier wave signal sinωt having a given frequency to the resolver to thereby generate a sine wave signal (sinωt · sinθ) having a wave form, which is obtained by amplitude modulating the carrier wave signal sinωt using a sine wave sinθ, and a cosine wave signal (sinωt · cosθ) having a wave form obtained by amplitude modulating the carrier wave signal sinωt using a cosine wave cosθ. Further, the rotor position detect circuit 2013 A/D converts these sine wave signal (sinωt · sinθ) and cosine wave signal (sinωt · cosθ), detects, for example, the positive peak time (peak detect pulse Pp) of the carrier wave sinωt, executes a motor rotation angle calculating processing each time the peak detect pulse Pp is detected to calculate sinθ and cosθ, and calculates a motor rotation angle (rotor rotation angle) θ according to the calculated sinθ and cosθ.

To the steering assisting control unit 2020, as shown in Fig. 25, input are: a steering torque T detected by the torque sensor 2003 and a vehicle speed detect value Vs detected by the vehicle speed sensor 2021; a rotor rotation angle θ detected by the rotor position detect circuit 2013; and, motor drive current detect values Iud, Ivd and Iwd respectively output from a motor current detect circuit 2022 which detects the motor drive currents Iu, Iv and Iw supplied to the respective phase coils Lu, Lv and Lw of the 3-phase brushless motor 2012.

The steering assisting control unit 2020 includes: a control operating unit 2023 having, for example, a microcomputer which operates a steering assisting target current value according to the steering torque T, vehicle speed detect value Vs and rotor rotation angle θ to output a motor voltage command values Vu, Vv and Vw; a motor drive circuit 2024 composed of a field effect transistor (FET) for driving the 3-phase brushless motor 2012; and, a FET gate drive circuit 2025 for controlling the gate current of the field effect transistor of the motor drive circuit 2024 according to the phase voltage command values Vu, Vv and Vw output from the control operating unit 2023. The steering assisting control unit 2020 corresponds to motor control means.

The control operating unit 2023, as shown in Fig. 26, includes: a vector control command value calculating circuit 2030 which, after it decides a current command value having vector control components d and q using the excellent characteristic of the vector control, converts the current command value to the respective phase current command values Iu*, Iv* and Iw* corresponding to the respective exciting coils Lu ~ Lw, and outputs these phase current command values Iu*, Iv* and Iw*; and, a current control circuit 2040 for carrying out a current feedback processing according to the respective phase current command values Iu*, Iv* and Iw* output from the vector control command value calculating circuit 2030 and the respective motor current detect values Iud, Ivd and Iwd detected by the motor current detect circuit 2022.

The vector control command value calculating circuit 2030, as shown in Fig. 26, includes a steering assisting current command value operating portion 2031, a control signal output portion 2032, a d axis command current calculating portion 2034 a d-q axis voltage calculating portion 2035, a q axis command current calculating portion 2036, and a 2-phase/3-phase converting portion 2037.

The steering assisting current command value operating portion 2031 receives the steering torque T detected by the torque sensor 2003 and the vehicle speed Vs detected by the vehicle speed sensor 2021 and, calculates a steering assisting current command value $I_M$* according to the thus-input steering torque T and vehicle speed Vs.

The control signal output portion 2032 outputs a control angle (an electric angle θe and an electric angular velocity ωe) and a control amount (the current limit value of the steering assisting current command value $I_M$*) according to the rotor rotation angle θ detected by the rotor rotation angle detect circuit 2013.

The d axis command current calculating portion 2034 calculates a d axis command current Id* according to the steering assisting current command value $I_M$* limited by the control amount and the electric angular velocity ωe.

The d-q axis voltage calculating portion 2035 calculates a d axis voltage ed(θ) and a q axis voltage eq(θ) according to the electric angle θe.

The q axis command current calculating portion 2036 calculates a q axis command current Iq* according to the d axis voltage ed(θ), q axis voltage eq(θ), d axis command current Id* and the steering assisting current command value $I_M$*,

The 2-phase/3-phase converting portion 2037 converts the d axis command current Id* output from the d axis command current calculating portion 2034 and the q axis command current Iq* output from the q axis command current calculating portion 2036 to 3-phase current command values Iu*, Iv* and Iw*.

The steering assisting current command value operating portion 2031 calculates a steering assisting current command value $I_M$* according to the steering torque T and vehicle speed Vs with reference to a steering assisting current command value calculating map shown in Fig. 27.

Here, the steering assisting current command value calculating map is composed of a characteristic diagram in which, as shown in Fig. 27, the steering torque T is expressed in the horizontal axis, the steering assisting current command value $I_M$* is expressed in the vertical axis, and parabolic curved lines are drawn with the vehicle speed detect value V as the parameter thereof. Further, in this map, when the steering torque T exists in the range of "0" to a set value Ts1 near to "0", the steering assisting current command value $I_M$* maintains "0". When the steering torque T exceeds the set value Ts1, initially, the steering assisting current command value $I_M$* increases relatively gradually with respect to an increase in the steering torque T; and, when the steering torque T increases further, the steering assisting current command value $I_M$* increases sharply with respect to this increase. Also, the inclination of the characteristic curve decreases as the vehicle speed increases.

Also, in the steering assisting current command value $I_M$*, there is set a current limit value; and, this current limit value is normally set for a normal limit value $I_{MAXO}$. Further, the current limit value can be changed by the control signal output portion 2032 and is to be output from the control signal output portion 2032 as a control amount.

In the present embodiment, the control amount to be output from the control signal output portion 2032 is set such that, by reducing the control amount, a steering torque to be generated from the motor can be reduced. Here, although there is used the current control value of the motor, it is also possible to use a gain (assisting control gain) which is multiplied by the steering torque.

Also, the current control circuit 2040 includes: subtractors 41u, 41v and 41w respectively for subtracting the detect values Iud, Ivd and Iwd of motor phase currents respectively flowing in the respective phase coils Lu, Lv and Lw and detected by the current detect circuit 2022 from the current command values Iu*, Iv* and Iw* supplied from the vector control phase command value calculating portion 2030 to obtain the respective phase current differences ΔIu, ΔIv and ΔIw; a PI control portion 2042 for executing a proportion integration control on the thus found respective phase current differences ΔIu, ΔIv and ΔIw to calculate instruction voltages Vu, Vv and Vw; and, a PWM control portion 2043, according to the calculated instruction voltages Vu, Vv and Vw, for forming pulse width modulation (PWM) signals PWMua ~ PWMwb corresponding to the field effect transistors Qua ~ Qwb of the motor drive circuit 2024.

Further, the pulse width modulation signals PWMua ~ PWMwb output from the PWM control portion 2043 are then supplied to the FET gate drive circuit 2025.

In this manner, in order to generate a steering assisting force corresponding to the steering torque T and vehicle speed detect value Vs, with reference to the rotor rotation angle θ, there is carried out a steering assisting force control for driving and controlling the motor. The reference angle of the rotor rotation angle θ is an angle which is output from the control signal output portion 2032 as a control angle; and, in the present embodiment, the control signal output portion 2032 executes a control signal output processing (which will be discussed later) and, when the removing condition of the steering assisting force control is not satisfied, the control angle is set for a normal angle and the motor is driven and controlled according to this normal angle. On the other hand, when the removing condition of the steering assisting force control is satisfied, the control angle is changed with respect to the normal angle and, according to the changed control angle, there is carried out an abnormality occurrence time control for driving and controlling the motor.

Fig. 28 is a flow chart of the control signal output processing to be executed by the control signal output portion 2032. This control signal output processing is executed as a timer interrupt processing in every given time. Firstly, in Step S2001, the control signal output portion 2032 checks whether the removing condition of the steering assisting force control is satisfied or not. Here, it is checked whether an abnormality occurrence time control flag FL is set for "1" meaning the execution of the abnormality occurrence time control or not. Further, when FL = 0 and the removing condition is not satisfied, the processing goes to Step S2002 and, when FL = 1 and the removing condition is satisfied, the processing goes to Step S2013.

In step S2002, the control signal output portion 2032 carries out an abnormality detect processing for detecting the abnormality of the rotor position detect circuit 2013. Specifically, the control signal output portion 2032 inputs therein sine wave sinθ and cosine wave cosθ respectively calculated in a motor rotation angle calculating processing (not shown) and checks whether sinθ and cosθ are normal or not. Here, the control signal output portion 2032 operates $(\sin\theta)^2 + (\cos\theta)^2$ and, when $(\sin\theta)^2 + (\cos\theta)^2 \neq 1$, it determines that sinθ and cosθ are abnormal; and, with reference to a previously stored abnormality checking map, when the combination of sinθ and cosθ does not exist in a given normal area, it determines that sinθ and cosθ are abnormal.

Next, the processing goes to Step S2003, where the control signal output portion 2032, according to the check result of the step S2002, checks whether the rotor position detect circuit 2013 is normal or not. Further, when it is found that the rotor position detect circuit 2013 is normal, the processing goes to Step S2010 (which will be discussed later) .

In Step S2004, the control signal output portion 2032 stores the rotor rotation angle θ detected by the rotor position detect circuit 2013 and a rotor rotation angular velocity θ' obtained by differentiating the rotor rotation angle θ into a memory.

Next, in Step S2005, the control signal output portion 2032 carries out the abnormality detect processing on the other parts than the rotor position detect circuit 2013 (such as torque sensor 2003 and vehicle speed sensor 2015) and, after then, the processing goes to Step S2006.

In Step S2006, the control signal output portion 2032, according to the check result of the step S2005, checks whether the other parts than the rotor position detect circuit 2013 are also normal or not. Further, when they are found normal, it is determined that the removing condition of the steering assisting force control is not satisfied and, after then, the processing goes to Step S2007, where there are set a control angle and a limit amount which are used to carry out a normal steering assisting force control. Specifically, the current rotor rotation angle θ stored into the memory in Step 52004 is converted to an electric angle θe, and this electric angle θe is differentiated to calculate an electric angular velocity ωe. Further, they are set as control angles (normal angles). Also, a previously set normal limit value $I_{MAXO}$ is set as a control amount.

Next, the processing goes to Step S2008, the control signal output portion 2032 outputs the thus set control angle and control amount and then ends the control signal output processing.

On the other hand, in the above-mentioned step S2006, when the control signal output portion 2032 determines that the other parts than the rotor position detect circuit 2013 are abnormal, the processing goes to Step S2009, where there is carried out a steering assisting force control (other abnormality time processing) to be executed when an abnormality occurs in the other parts than the rotor position detect circuit 2013 and, after then, the control signal output processing is ended.

In Step S2010, the control signal output portion 2032 sets an abnormality occurrence time control flag FL for "1" meaning that a steering assisting force control in the abnormality occurrence time is to be executed and, after then, the processing goes to Step S2011.

In Step S2011, the control signal output portion 2032 converts the rotor rotation angle θ stored in the memory in Step S2004 to an electric angle θe, differentiates this electric angle θe to calculate an electric angular velocity ωe, and sets them in the initial control angle of the abnormality occurrence control; and, after then, the processing goes to Step S2012.

In Step S2012, the control signal output portion 2032 sets the normal limit value $I_{MAXO}$ in the initial control amount of the abnormality occurrence time control and, after then, the processing goes to the above-mentioned step S2008.

Also, in Step 2013, the control signal output portion 2032 carries out the abnormality detect processing of the torque sensor 2003 and, after then, it goes to Step S2014.

In Step S2014, the control signal output portion 2032, according to the check result of the above step S2013, checks whether the torque sensor 2003 is normal or not and, when the torque sensor 2003 is found normal, it goes to Step S 2015, where it carries out the steering assisting force control for the torque abnormal time and, after then, it ends the control signal output processing.

On the other hand, in the above step S2014, when the control signal output portion 2032 determines that the torque sensor 2003 is normal, it goes to Step S2016, where it detects the steering torque T.

Next, in Step S2017, the control signal output portion 2032 executes a control angle update processing according to the steering torque. In the present embodiment, a steering torque at the time when the removing condition of the steering assisting force control is satisfied is used as a reference, and the control angle is to be updated according to a difference between the reference value and a current torque as well as the signs thereof.

When the signs of the reference value and current torque are the same and the current torque is larger than the reference value, the control angle is advanced in the opposite direction to the neutral direction of the steering wheel. Also, when the signs of the reference value and current torque are the same and the current torque is smaller than the reference value, the control angle is maintained.

Also, when the steering torque has become 0 once or more since the removing condition of the steering assisting force control held, the reference value is changed to "0" and, after then, the control angle is updated according to the reference value "0". At the then time, when the sign of the steering torque is reversed to the sign of the reference value at the abnormality occurrence time, the control angle is advanced in the neutral direction of the steering wheel.

Here, the speed for advancing the control angle is decided as shown in Fig. 29 according to the difference between the current torque and reference value. That is, the larger the difference between the current torque and reference value is, the higher the speed for advancing the control angle is. Here, in the speed for advancing the control angle, there is set a given limit.

Next, in Step S2018, the control signal output portion 2032 executes an updating (reducing) processing on the control amount. The reducing ratio of the control amount is decided as shown in Fig. 30 according to the absolute value of the difference between the current torque and reference value. Here, as the absolute value of the difference between the current torque and reference value increases, the reducing ratio of the control amount decreases, whereby the control time of the abnormality occurrence time control can be extended.

By the way, a method for reducing the above reducing ratio can be decided using various functions such as a linear line and a quadratic curve. Also, the reducing ratio of the control amount can also be set constant.

When the steering wheel is being steered increasingly such that the steering torque can be larger than the reference value, and also when the steering operation is in process, this control amount reducing processing is not executed but the control amount is to be maintained.

Next, in step S2019, the control signal output portion 2032 checks whether the control amount is larger than a given control end check threshold value (for example, 0) or not. Further, when the control amount is larger than "0", it determines that the abnormality occurrence time control is to be continued, and it moves to the above-mentioned step S2008. When the control amount is equal to or less than "0", it ends the control signal output processing as it is.

In Fig. 28, the processings of Steps S2002 and 52003 correspond to the abnormality detect means, the processings of Steps S2011 and S2017 correspond to the reference angle change means, and the processings of Step S2012 and S2018 correspond to the gradual change processing means.

Next, description will be given below of the operation of the fourth embodiment with reference to a time chart shown in Fig. 31. In Fig. 31, a reference sign A designates a steering torque and B stands for a control angle.

Now, suppose the vehicle is turning along a right curved road while keeping steering, no abnormality is occurring in the torque sensor 2003 and the like, and the removing condition of the steering assisting force control is not satisfied. In this case, the control signal output portion 2032, in Step S2003 shown in Fig. 28, determines that the rotor position detect circuit 2013 is normal, and it goes to Step S2004, where it stores the rotor rotation angle θ and rotor angular velocity θ' into a memory. Also, since the torque sensor 2003 and vehicle speed sensor 2015 are also normal, the control signal output portion moves from Step S2006 to Step S2007, whereby there is executed a normal steering assisting force control.

Therefore, the control operating unit 2023 operates the respective phase current command values Iu*, Iv* and Iw* according to the steering torque T detected by the torque sensor 2003, the vehicle speed Vs detected by the vehicle speed sensor 2015 and the rotor rotation angle θ detected by the rotor position detect circuit 2013, and carries out a current feedback processing using the respective phase current command values Iu*, Iv* and Iw* as well as the motor current detect values Iud, Ivd and Iwd detected by the motor current detect circuit 2022 to calculate phase voltage instructions Vu, Vv and Vw. Further, the control operating unit 2023 calculates PWM signals PWMua ~ PWMwb according to the thus calculated phase voltage instructions Vu, Vv and Vw and outputs them to the FET gate drive circuit 2025. The FET gate drive circuit 2025, according to the PWM signals, controls the gate current of the field effect transistor of the motor drive circuit 2024. As a result of this, a torque, which is generated by the 3-phase brushless motor 2012, is converted through the reducing gear 2011 to the rotation torque of the steering shaft 2002, thereby assisting the steering force of the driver.

Suppose, from this state, there occurs an abnormality in the rotor position detect circuit 2013 and the removing condition of the steering assisting control is satisfied. In this case, the control operating unit 2013, in Step S2003 shown in Fig. 28, determines that an abnormality has occurred in the rotor position detect circuit 2013, and it goes to Step S2010, where it sets the abnormality occurrence time control flag for FL = 1. Further, the control operating unit 2023 sets the electric angle θe and electric angular velocity ωe, which are obtained according to the rotor rotation angle θ stored in the memory in the previous sampling processing, for the initial control angles, sets the current limit value $I_{MAXO}$ for the initial control amount, and then outputs them. Accordingly, there is carried out the steering assisting force control according to the electric angle θe and electric angular velocity ωe which are obtained according to the rotor rotation angle θ just before the occurrence of the abnormality.

Therefore, the rotor rotation angle is fixed to the rotor rotation angle just before the occurrence of the abnormality and the rotation state of the rotor is maintained in the rotor rotation state just before the occurrence of the abnormality. After then, suppose the driver steers the steering wheel increasingly in the right direction and, during the period of a time t1 to a time t2, the steering torque becomes equal in sign to a torque at the time t1, which provides a reference value, and becomes larger than the reference value. In Step S2017, the control signal output portion 2032 advances the control angle at a speed shown in Fig. 29 according to the difference between the current steering torque and reference value. That is, as shown in Fig. 31, during the period of the time t1 to time t2, the control angle increases gradually. Also, since the driver is steering increasingly, in Step S2018, the control amount reducing processing is not carried out. Further, according to the thus updated control angle and control amount, there is continued the abnormality occurrence time control assisting control.

Also, suppose, during the period of the time t2 to time t3, the steering torque becomes the same in sign as the reference value and becomes equal to or less than the reference value. In Step S2017, the control signal output portion 2032 maintains the control angle at the time t2. Also, in Step S2018, the control signal output portion 2032, according to the absolute value of the difference between the current steering torque and reference value, reduces the current limit value serving as the control amount at a reducing ratio shown in Fig. 30. Further, according to the thus set control angle and control amount, there is continued the control assisting control at the abnormality occurrence time.

In this manner, there are repeated the steering angle change processing and control amount reducing processing according to the steering torque and, when the steering torque becomes 0 at a time t4, the reference value is changed to "0". After then, when the sign of the steering torque is reversed and is different from the sign of the reference value at the time t1, the control angle is advanced in the neutral direction of the steering wheel at a speed shown in Fig. 29 according to the difference between the current torque and reference value "0".
Further, when the control amount becomes equal to or less than a control end check threshold value, "No" is given in Step S2019 and thus the steering assisting force control at the abnormality occurrence time is ended, whereby the power steering is moved to manual steering.

Here, as shown in Fig. 32, in a state where the driver is steering the steering wheel, when the steering assisting force control is removed at a time t0 due to the occurrence of an abnormality in the steering assisting mechanism 2010 or the like, unless there is executed such an abnormal occurrence time control as in the present embodiment, as shown in Fig. 32 (b), the steering assisting torque given by the motor disappears suddenly, whereby, due to a return force caused by the elastic deformation of the steering system such as the torsion of the vehicle tire, there is applied to the steering shaft a force to return it to its neutral position, that is, there is generated a so called kickback phenomenon. At the then time, as shown by a solid line in Fig. 32 (a), when a manual input torque by the driver is small, as shown by a solid line in Fig. 32 (c), there is generated the sudden return of the steering wheel. Also, in order to avoid such sudden return of the steering wheel and to secure such a keeping steering state as shown by a broken line in Fig. 32 (c), as shown by a broken line in Fig. 32 (a), there is suddenly necessary a large manual input torque by the driver, which increases the steering load of the driver.
In view of this, in order to relieve the steering load of the driver, there is known a technique in which, when the motor is stopped during the steering assisting operation, the terminals of the motor are short circuited across them for a given period of time to thereby restrict the occurrence of the kickback phenomenon.

However, in this case, when the steering assisting mechanism 2010 becomes abnormal at the time t0 in Fig.

33 and thus the motor must be stopped, since only the sudden return of the steering wheel due to the return force caused by the torsion of the steering system is restricted, unless there is executed a correcting steering by the driver, as shown by a solid line in Fig. 33 (c), the steering wheel is gradually returned to the neutral position. Therefore, in order to avoid such steering wheel return and secure such a keeping steering state as shown by a broken line in Fig. 33 (c), there is inevitably necessary a manual input torque which is applied by the driver. At the then time, as shown in Fig. 33 (b), since the steering assisting torque is gradually reducing, as shown by a broken line in Fig. 33 (a), there is not necessary a sudden manual input torque but there is necessary a large manual input torque similarly to the above-mentioned case shown in Fig. 32.

On the other hand, according to the present embodiment, when removing a normal steering assisting force control in the occurrence of an abnormality, according to the steering torque, the reference angle of the motor rotation angle is changed in such a manner to maintain the motor rotation angle just before the occurrence of the abnormality, thereby being able to restrict the occurrence of the kickback phenomenon effectively.

Fig. 34 is a time chart used to explain the effects to be provided by the present embodiment. In Fig. 34, reference sign (a) designates a manual input torque to be given by the driver, (b) a steering assisting torque, (c) a motor control angle, (d) an assisting control amount, and (e) a steering angle, respectively.

As shown in Fig. 34, when there occurs any abnormality at a time t11 and thus the removing condition of the normal steering assisting force control is satisfied, there is carried out a steering assisting force control at an abnormality occurrence time until a time t12. At the then time, a control angle just before the occurrence of the abnormality is set as an initial control angle and, when the steering torque is the same in sign as the reference value and is smaller than the reference value, the then control angle is held and the rotor rotation angle is fixed to a rotor rotation angle just before the occurrence of the abnormality, thereby being able to provide an operation which can prevent the sudden change of the angle of the steering wheel.

Also, when the steering torque is the same in sign as the reference value and is larger than the reference value, the then control angle is advanced in the opposite direction to the neutral direction of the steering, which relieves the steering load that is required as the power steering operation is shifted to the manual steering operation, thereby eliminating the need of a large manual input torque for maintaining such a keeping steering state as shown in Figs. 32 and 33. Further, after the steering torque becomes 0 after the occurrence of the abnormality, the control angle is advanced in the steering neutral direction to stop the electric energization of the motor, which makes it possible to change the power steering operation to the manual steering operation quickly.

In this manner, even after the occurrence of the abnormality, the steering assisting torque can be applied according to the steering torque (the manual input torque given by the driver). As a result of this, it is possible to prevent the steering assisting torque in the abnormality occurrence from disappearing suddenly and thus to prevent the sudden return of the steering wheel positively.

Therefore, in the fourth embodiment, when the abnormality of the motor rotation angle detected by the rotation angle detect means is detected, the reference angle of the motor rotation angle is changed in such a manner that the rotation state of the electric motor just before the occurrence of the abnormality can be maintained, whereby the return of the motor due to the reacting force can be prevented and thus the occurrence of the kickback phenomenon can also be prevented. Especially, in a vehicle in which a steering torque in the manual steering is large due to the heavy weight thereof, the effect of the present embodiment is large.

Also, since the motor rotation angle just before the occurrence of the abnormality is set for the reference angle, there can be provided an operation which fixes the rotor rotation angle to the rotor rotation angle just before the occurrence of the abnormality to thereby be able to prevent the sudden change of the angle of the steering wheel, which makes it possible to properly restrict the occurrence of the kickback phenomenon.

Further, since the steering torque just before the occurrence of the abnormality is set for the reference value and also since, when the current steering torque has the same sign as the reference value and is equal to or smaller than the reference value, the then reference angle is held, the motor rotation angle just before the occurrence of the abnormality can be maintained and thus the return of the steering wheel can be restricted properly.

Also, since, when the current steering torque has the same sign as the reference value and is larger than the reference value, the reference angle is changed in the opposite direction to the steering neutral direction with respect to the then reference angle, the steering load of the driver while increasing the steering of the steering wheel can be relieved and there can be eliminated the need of a large manual input torque when shifting the power steering operation to the manual steering operation.

Further, since, when the current steering torque has a different sign from the reference value, the reference angle is changed in the steering neutral direction with respect to the then reference angle, in the keeping steering state and in the increasing steering state, the electric energization of the electric motor can be continued; and, after the manual input torque by the driver disappears, the electric energization of the electric motor can be removed, thereby being able to carry out a proper abnormality occurrence time control.

Also, since, when the abnormality of the motor rotation angle is detected by the abnormal detect means, the output of the electric motor is reduced gradually, it is possible to prevent the steering assisting force from reducing down to 0 suddenly.
Further, since the reducing ratio of the output of the electric motor is decided according to the steering torque, as the steering torque increases, the reducing ratio is decreased, so that the continuing time of the abnormality occurrence time control can be set long.
Here, in the fourth embodiment, description has been given of a case where the desired control angle is set according to the rotor rotation angle just before the occurrence of the abnormality. However, the desired control angle can also be set according to the average value of the rotor rotation angles in a given time before the occurrence of the abnormality.

(Fifth Embodiment)

Next, description will be given below of a fifth embodiment according to the invention.
According to the fifth embodiment, the control angle is changed in such a manner that the motor rotation angular velocity just before the occurrence of an abnormality can be maintained.
Fig. 35 is a flow chart of a control signal output processing procedure to be executed by a control signal output portion 2032 according to the fifth embodiment.
Since except for following added steps, the fifth embodiment performs similar processing of the above described Fig. 28, the portions thereof for carrying out the same processing are given the same designations, description will be given mainly of the processing that are different from those shown in Fig. 28. The added steps are:

a step S2031, after execution of Step S2010, for checking whether a rotor rotation angular velocity θ' is larger than a given threshold value or not; a step S2032, when YES is found in Step S2031, for setting an initial control angle according to the rotor rotation angular velocity θ' just before the occurrence of an abnormality; a step S2033, after execution of Step S2016, for checking whether the rotor rotation angular velocity θ' is larger than a given threshold value or not; a step S2034, when YES in Step S2033, for carrying out a motor angular velocity subtracting processing; and, a step S2035 for updating the control angle according to the result of the motor angular velocity subtracting processing.

In Step S2031, the control signal output portion 2032 checks whether the rotor rotation angular velocity θ' held in the above-mentioned step S2004 is larger than a given angular velocity threshold value $\theta'_{TH}$ or not. When $\theta' \leq \theta'_{TH}$, the control signal output portion 2032 moves to the above-mentioned step S2011; and, when $\theta' > \theta'_{TH}$, it moves to Step S2032. Here, the angular velocity threshold value $\theta'_{TH}$ is set for a value which can determine that the driver is in a keeping steering state.
In Step S2032, the control signal output portion 2032 sets the rotor rotation angular velocity θ' stored in the above-mentioned step 52004 for the reference angular velocity, sets an electric angle θe and an electric angular acceleration ωe according to the reference angular velocity, and then moves to the above-mentioned step S2012. Specifically, the electric angle θe is set such that the rotor rotation angular velocity can coincide with the rotor rotation angular velocity θ' just before the occurrence of the abnormality stored in the above-mentioned step S2004.
Also, in Step S2033, the control signal output portion 2032 checks whether the rotor rotation angular velocity θ' (the reference angular velocity) is larger than a given angular velocity threshold value $\theta'_{TH}$ or not. When $\theta' \leq \theta'_{TH}$, the control signal output portion 2032 moves to the above-mentioned step S2017; and, when $\theta' > \theta'_{TH}$, it moves to Step S2034.
In Step S2034, the control signal output portion 2032 carries out a motor angular velocity subtracting processing for reducing the reference angular velocity. In the motor angular velocity subtracting processing, the reducing ratio of the reference angular velocity is calculated with reference to a reducing ratio calculating map shown in Fig. 36, and the reference angular velocity is reduced at the calculated reducing ratio.
In the reducing ratio calculating map shown in Fig. 36, a steering torque is expressed in the horizontal axis, the reducing ratio of the reference angular velocity is expressed in the vertical axis, the direction of the steering torque at the start of the steering assisting force control in the abnormality occurrence time is regarded as positive, and, as the steering torque increases, the reducing ratio decreases. Here, a method for reducing the reducing ratio can be determined using various functions such a linear line and a two-dimension curve. Also, the reducing ratio can also be set constant.
Also, in the present embodiment, description has been given of a case where the reducing ratio of the reference angular velocity is calculated with reference to the reducing ratio calculating map shown in Fig. 36. However, it is also possible to refer to such a reducing ratio calculating map as shown in Fig. 37. In the reducing ratio calculating map shown in Fig. 37, the vehicle speed Vs is expressed in the horizontal axis, the reducing ratio of the reference angular velocity is expressed in the vertical axis and, as the vehicle speed Vs increases, the reducing ratio of the reference angular velocity increases.
Here, the motor angular acceleration subtracting processing shown in this step S2034, when the manual input torque is equal to or larger than a given value, is not carried out but the reference angular velocity is to be held.

In Step S2035, the control signal output portion 2032 updates the electric angle θe and electric angular velocity ωe according to the reference angular velocity updated in the motor angular velocity subtracting processing in the above-mentioned step 52034 and, after then, it moves to the above-mentioned step S2008.
In Fig. 35, the processing to be executed in Step S2034 corresponds to the reference angular velocity reducing means.
Next, description will be given below of the operation of the fifth embodiment with reference to a time chart shown in Fig. 38. In Fig. 38, a reference sign (a) designates a manual input torque to be given by a driver, (b) a steering assisting torque, (c) a motor control angular velocity, (d) an assisting control amount, and (e) a steering angle, respectively. While the driver is steering the steering wheel relatively quickly, when there occurs any abnormality at a time t21 and the removing condition of a normal steering assisting force control is satisfied, the control signal output portion 2032 moves from Step S2031 in Fig. 35 to Step S2032, where it sets the rotor rotation angular velocity θ' just before the occurrence of the abnormality for the reference angular velocity, and sets the electric angle θe and electric angular velocity ωe in such a manner that the reference angular velocity can be maintained. Further, the steering assisting force control at the abnormality occurrence time is started according to these electric angle θe and electric angular velocity ωe.
In this manner, since the control angle is set according to the rotor rotation angular velocity just before the occurrence of the abnormality, the occurrence of a sudden motor control angular velocity variation at the abnormality occurrence time can be prevented and also the occurrence of the sudden angular velocity variation of the steering wheel can be prevented.
After then, according to the motor angular velocity subtracting processing to be executed in Step S2034, the reference angular velocity is reduced at a reducing ratio shown in Fig. 36, and the steering assisting force control in the abnormality occurrence time is continued at the electric angle θe and electric angular velocity ωe which are updated according to the gradually reduced reference angular velocity.
Further, when the manual input torque becomes equal to or larger than a given value α at a time t22, the reference angular velocity is held. Therefore, the motor control angular velocity is held as shown in Fig. 38(c), and the steering angle increases at a constant speed as shown in Fig. 38(e).
Since the steering angle comes near to the angle that is intended by the driver, the driver reduces the manual input torque at a time t23, and, when the manual input torque becomes smaller that the given value α at a time t24, the reducing control of the reference angular velocity is resumed according to the motor angular velocity subtracting processing of Step S2034.
After then, when the rotor rotation angle θ' (reference angular velocity) becomes equal to or smaller than a given angular velocity threshold value $\theta'_{TH}$, the control signal output portion 2032 determines NO in Step S2033, and it carries out the control angle updating processing of Step S2017 and the control amount reducing processing of Step S2018. Therefore, as shown in Fig. 38 (d), the assisting control amount reduces gradually. With the gradual reduction of the assisting control amount, as shown in Fig. 38(b), the steering assisting torque also reduces gradually and, when the steering assisting torque (control amount) becomes 0 at a time t25, the power steering operation is shifted to the manual steering operation completely.
In this manner, in the fifth embodiment, since the motor rotation angular velocity just before the occurrence of the abnormality is set for the reference angular velocity and the reference angle of the motor rotation angle is set according to the reference angular velocity, a sudden angular velocity change in the steering wheel when the normal steering assisting force control is removed can be prevented.
Also, since the reference angular velocity is reduced gradually, the variation ratio of the steering angle can be decreased gradually, the strange feeling of the driver in the steering operation can be prevented and the running stability of the vehicle can be enhanced.
Here, in the fifth embodiment, description has been given of a case where the desired control angle is set according to the rotor rotation angular velocity just before the occurrence of the abnormality. However, the desired control angle can also be set according to the average value of the rotor rotation angular velocities in a given time before the occurrence of the abnormality.

(Sixth Embodiment)

Next, description will be given below of a sixth embodiment according to the invention.
According to the sixth embodiment, the control angle is fixed in such a manner that a motor rotation angle just before the occurrence of an abnormality can be held for a given period of time.
That is, the control signal output portion 2032 according to the sixth embodiment, in the control signal output processing of Fig. 28 according to the fourth embodiment, deletes the control angle updating processing in Step S2017 and carries out other processings similarly to those shown in Fig. 28.
In the present embodiment, as the control amount, instead of the above-mentioned current limit value, there is applied an assisting control gain.
As this assisting control gain, there is used, for example, a gain which is multiplied by the proportion integration control in the PI control portion 2040. Normally, the gain is set for 1 and, in the control amount subtracting processing in Step S2018, the gain is controlled to reduce down to a value smaller than 1. Here, the reducing ratio of the assisting control gain, as shown in the above-mentioned figure 30, can be decided by various functions such as a linear line and a two-dimensional curved line.

Next, description will be given below of the operation of the sixth embodiment with reference to a time chart shown in Fig. 39. In Fig. 39, a reference sign (a) designates an assisting torque, (b) a motor control angle, (c) an assisting control gain, and (d) a steering angle, respectively.

When, at a time t31, there occurs any abnormality and the removing condition of a normal steering assisting force control is satisfied, the control signal output portion 2032, in Step S2011, sets an electric angle θe and an electric angular velocity ωe according to the motor rotation angle θ just before the occurrence of the abnormality, and starts the steering assisting control in the abnormality occurrence time. Owing to this, the motor rotation angle θ just before the occurrence of the abnormality is held.

After then, until the steering assisting control in the abnormality occurrence time is ended, the processing for updating the control angle is not executed. Thus, as shown in Fig. 39 (b), the motor control angle is fixed to a control angle which is set according to the motor rotation angle θ just before the occurrence of the abnormality.

On the other hand, from the time t31 on, the control signal output portion 2032 carries out the control amount reducing processing in Step S2018 to reduce the control amount at the reducing ratio shown in Fig. 30. Accordingly, as shown in Fig. 33(c), the assisting control gain reduces gradually at and after the time t31 and, with the gradual reduction of the assisting control gain, the steering assisting force also reduces gradually. Owing to this, with the reduction of the assisting control gain, the steering angle, as shown in Fig. 33(d), is gradually returned to the neutral position.

At the then time, the reducing ratio of the assisting control gain is set such that, as the absolute value of the difference between the steering torque and reference value (steering torque in the abnormality occurrence time) increases, it decreases, thereby being able to prevent the reduction of the steering assisting force. Therefore, even in a vehicle in which a steering torque is large due to the heady weight thereof or the like, the return of the steering wheel can be prevented effectively.

Further, when the control amount (assisting control gain) becomes 0 at a time t32, the control signal output portion 2032 ends the steering assisting control in the abnormality occurrence time and then the power steering is switched to the manual steering.

In this manner, according to the sixth embodiment, at the time of the occurrence of the abnormality, the reference angle of the motor rotation angle is fixed to the reference angle just before the occurrence of the abnormality and also the output of the electric motor is reduced gradually according to the steering torque, whereby the sudden return of the steering wheel can be prevented using a relatively simple structure.

Here, in the fourth to sixth embodiments, description has been given of a case where the control angle in the abnormality occurrence time is set for the initial control angle. However, it can also be set for a previously set arbitrary angle.

Also, in the fourth to sixth embodiments, when the assisting torque in the abnormality occurrence time exists near to 0, it can be determined that the influence of the kickback is small and thus it is possible that the abnormality occurrence time control is not executed.

Further, in the fourth to sixth embodiments, description has been described of a case where the 3-phase brushless motor is applied as the electric motor. However, there can also be applied a brushless motor system. In this case, the motor rotation angle and motor rotation angular velocity may be calculated from the detect value of the steering sensor, or they may be estimated from the counter electromotive force of the motor.

The present application is based on Japanese Patent Application (Patent Application No. 2006-152531) filed on May 31, 2006 and Japanese Patent Application (Patent Application No. 2006-243470) filed on September 7, 2006 and thus the contents thereof are incorporated herein as reference.

## Claims

**1.** An electric power steering apparatus, comprising:

an electric motor which applies a steering assisting force to a steering system;
steering torque detect means for detecting a steering torque to be transmitted to the steering system;
motor control means for calculating a steering assisting command value according to the steering torque detected by the steering torque detect means and for driving and controlling the electric motor according to the calculated steering assisting command value;
a motor relative angle information calculating portion which calculates a relative angle information of the electric motor corresponding to a steering amount applied to the steering system by a driver; and
motor relative angle detect means including a relative angle information compensating portion for preventing the motor relative angle information calculating portion from being incapable of obtaining the relative angle information to thereby enable to generate the relative angle information all the time,

wherein when starting to drive the motor, the motor control means drives and controls the electric motor from an arbitrary actual angle without setting an initial angle based on the relative angle information detected by the motor relative angle detect means.

**2.** The electric power steering apparatus as set forth in Claim 1, wherein
the motor relative angle information compensating portion adds an offset value, which changes a sign in every given cycle when needed, to the relative angle information calculated in the motor relative angle information calculating portion so as to prevent the motor relative angle information calculating portion from being incapable of obtaining the relative angle information.

**3.** The electric power steering apparatus as set forth in Claim 1, wherein
the motor relative angle calculating portion includes relative angle calculation abnormality detect means for detecting a relative angle calculation abnormal state for detecting an abnormality of at least one of the calculated relative angle information and an input value for calculating the calculated relative angle information; and
when the relative angle calculation abnormality detect means detects the relative angle calculation abnormal state, the relative angle information is calculated according to other input value where no abnormality is detected.

**4.** The electric power steering apparatus as set forth in Claim 1, wherein
the motor relative angle information calculating portion determines a rotation direction of the electric motor according to the steering torque detected by the steering torque detect means.

**5.** The electric power steering apparatus as set forth in Claim 1, wherein
the motor relative angle information calculating portion includes:

correction requiring state detect means for detecting a correction requiring state where a difference between the calculated motor relative angle and an actual angle increases; and
relative angle information correcting means for correcting the relative angle information when the correction requiring state detect means detects the correction requiring state.

**6.** An electric power steering apparatus, comprising:

an electric motor which generates a steering assisting force for a steering system;
motor rotation angle detect means for detecting a motor rotation angle of the electric motor;
steering torque detect means for detecting a steering torque to be transmitted to the steering system;
motor control means for calculating a steering assisting command value according to the steering torque detected by the steering torque detect means and for driving and controlling the electric motor according to the calculated steering assisting command value and the motor rotation angle detected by the motor rotation angle detect means;
motor rotation angle abnormality detect means for detecting an abnormality of the motor rotation angle detect means;
a motor relative angle information calculating portion for calculating a relative angle information of the electric motor corresponding to the steering amount applied to the steering system by a driver; and
motor relative angle detect means including a relative angle information compensating portion for preventing the motor relative angle information calculating portion from being incapable of obtaining the relative angle information to thereby enable to generate the relative angle information all the time,

wherein when the motor rotation angle abnormality detect means does not detect the abnormality of the motor rotation angle abnormality detect means, the motor control means selects the motor rotation angle information detected by the motor rotation angle detect means and, when the motor rotation angle abnormality detect means detects the abnormality of the motor rotation angle detect means, the motor control means selects the relative angle information detected by the motor relative angle detect means, so as to drive and control the electric motor according to the selected motor rotation angle information or the relative angle information.

**7.** The electric power steering apparatus as set forth in Claim 6, wherein
when driving and controlling the electric motor according to the relative angle information, the motor control means drives the motor from an arbitrary actual angle without setting an initial angle.

**8.** The electric power steering apparatus as set forth in Claim 6, wherein
the motor relative angle information compensating portion adds an offset value, which changes a sign in every given cycle as needed, to the relative angle information calculated so as to prevent the motor relative angle information calculating portion from being incapable of obtaining the relative angle information.

**9.** The electric power steering apparatus as set forth in Claim 6, wherein
the motor relative angle information compensating portion detects a relative angular velocity and when the detected relative angular velocity comes near to zero, the motor relative angle information compensating portion determines an offset amount and a cycle such that the relative angular velocity positively exceeds an insensitive zone before the motor relative angle calculating portion is capable of obtaining the relative angle information.

**10.** The electric power steering apparatus as set forth in Claim 6, wherein
the motor relative angle information calculating portion includes a relative angle calculation abnormality detect means for detecting a relative angle calculation abnormal state for detecting an abnormality of at least one of the relative angle information calculated and an input value for calculating the relative angle information, and
when the relative angle calculation abnormality detect means detects a relative angle calculation abnormal state, the motor relative angle information calculating portion calculates the relative angle information according to other input value where no abnormality is detected.

**11.** The electric power steering apparatus as set forth in Claim 6, wherein
the motor relative angle information calculating portion determines a rotation direction of the electric motor according to the steering torque detected by the steering torque detect means.

**12.** The electric power steering apparatus as set forth in Claim 6, wherein
the motor relative angle information calculating portion includes correction requiring state detect means for detecting a correction requiring state where a difference between the calculated motor relative angle and an actual angle increases, and
a relative angle information correcting means for correcting the relative angle information when the correction requiring state detect means detects the correction requiring state.

**13.** The electric power steering apparatus as set forth in Claim 6, wherein
the motor rotation angle detect means outputs a rotation angle detect signal including two systems having sine and cosine wave systems, or including other two or more systems,
the motor rotation angle abnormality detect means detects a motor rotation angle abnormality when an amplitude of the sine or cosine wave is out of a given range,
the motor relative angle information calculating portion includes:

correction requiring state detect means for detecting a correction requiring state where a difference between the calculated motor relative angle and an actual angle increases; and
relative angle information correct means for correcting the relative angle information when the correction requiring state detect means detects the correction requiring state,
the correction requiring state detect means detects a correction requiring state when the amplitude of the other of normal sine or cosine wave reaches a maximum value a the minimum value, and
the relative angle information correct means corrects the relative angle information using the then actual angle when the correction requiring state is detected.

**14.** The electric power steering apparatus as set forth in Claim 6, wherein
the motor rotation angle detect means outputs a rotation angle signal including two systems having sine and cosine wave systems,
the motor rotation angle abnormality detect means detects whether a sum of a square value of the sign wave and a square value of the cosine wave is "1" or not, thereby detecting a shortcircuit of these two wave systems,
the motor relative angle information calculating portion includes:

correction requiring state detect means for detecting a correction requiring state where a difference between the calculated motor relative angle and an actual angle increases; and
relative angle information correct means for correcting the relative angle information when the correction requiring state detect means detects the correction requiring state,
the correction requiring state detect means detects the correction requiring state when an amplitudes of the short circuited sine or cosine wave reach a minimum value and a maximum value, and
the relative angle information correct means corrects the relative angle information by using the then actual angle when the correction requiring state is detected.

**15.** The electric power steering apparatus as set forth in Claim 6, wherein
the motor rotation angle detect means is a pole position sensor for outputting a multi-phase pole position signal,
the motor rotation angle abnormality detect means detects the abnormality of one pole position sensor according to the pole position signal output from the pole position sensor,
the motor relative angle information calculating portion includes:

correction requiring state detect means for detecting a correction requiring state where a difference between the calculated motor relative angle and an actual angle increases; and
relative angle information correct means for correcting the relative angle information when the correction requiring state detect means detects the correction requiring state,
the correction requiring state detect means detects a correction requiring state when pole position signals are arranged in such a manner that an angle is determined uniquely according to the abnormal state of the pole position sensor in 360 degrees, and
the relative angle information correct means corrects the relative angle information using the actual angle of the corresponding pole position signal arrangement when the correction requiring state is detected.

**16.** An electric power steering apparatus, comprising:

an electric motor which applying a steering assisting force to a steering system for relieving a steering load of a driver;
rotation angle detect means for detecting a motor rotation angle of the electric motor;
steering torque detect means for detecting a steering torque;
motor control means for driving and controlling the electric motor with reference to the motor rotation angle in order to generate a steering assisting force corresponding to at least the steering torque; and
abnormality detect means for detecting an abnormality of the motor rotation angle detected by the rotation angle detect means,

wherein the motor control means includes reference angle change means changing a reference angle of the motor rotation angle in such a manner that a rotation state of the electric motor just before occurrence of the abnormality is maintained, when the abnormality detect means detects the abnormality of the motor rotation angle.

**17.** The electric power steering apparatus as set forth in Claim 16, wherein
the reference angle change means sets a motor rotation angle just before the occurrence of the abnormality for the reference angle when the abnormality detect means detects the abnormality of the motor rotation angle.

**18.** The electric power steering apparatus as set forth in Claim 17, wherein
when the current steering torque has a same sign as the reference value and is equal to or smaller than the reference value, the reference angle change means uses a steering torque just before the occurrence of the abnormality for a reference value and maintains the then reference angle.

**19.** The electric power steering apparatus as set forth in Claim 18, wherein
when the current steering torque has the same sign as the reference value and is larger than the reference value, the reference angle change means changes the reference angle in an opposite direction to a steering neutral direction with respect to the then reference angle.

**20.** The electric power steering apparatus as set forth in Claim 18, wherein
when the current steering torque has a different sign from the reference value, the reference angle change means changes the reference angle in the steering neutral direction with respect to the then reference angle.

**21.** The electric power steering apparatus as set forth in Claim 16, wherein
when the abnormality detect means detects the abnormality of the motor rotation angle, the reference angle change means sets a motor rotation angular velocity just before the occurrence of the abnormality for a reference angular velocity, and sets the reference angle according to the reference angular velocity.

**22.** The electric power steering apparatus as set forth in Claim 21, wherein
the reference angle change means includes reference angular velocity reducing means for reducing the reference angular velocity gradually.

**23.** The electric power steering apparatus as set forth in Claim 16, wherein
the motor control means includes gradual change processing means reducing the output of the electric motor gradually when the abnormality detect means detects the abnormality of the motor rotation angle.

**24.** The electric power steering apparatus as set forth in Claim 23, wherein
the gradual change processing means determines a reducing ratio of an output of the electric motor according to the steering torque.

FIG. 1

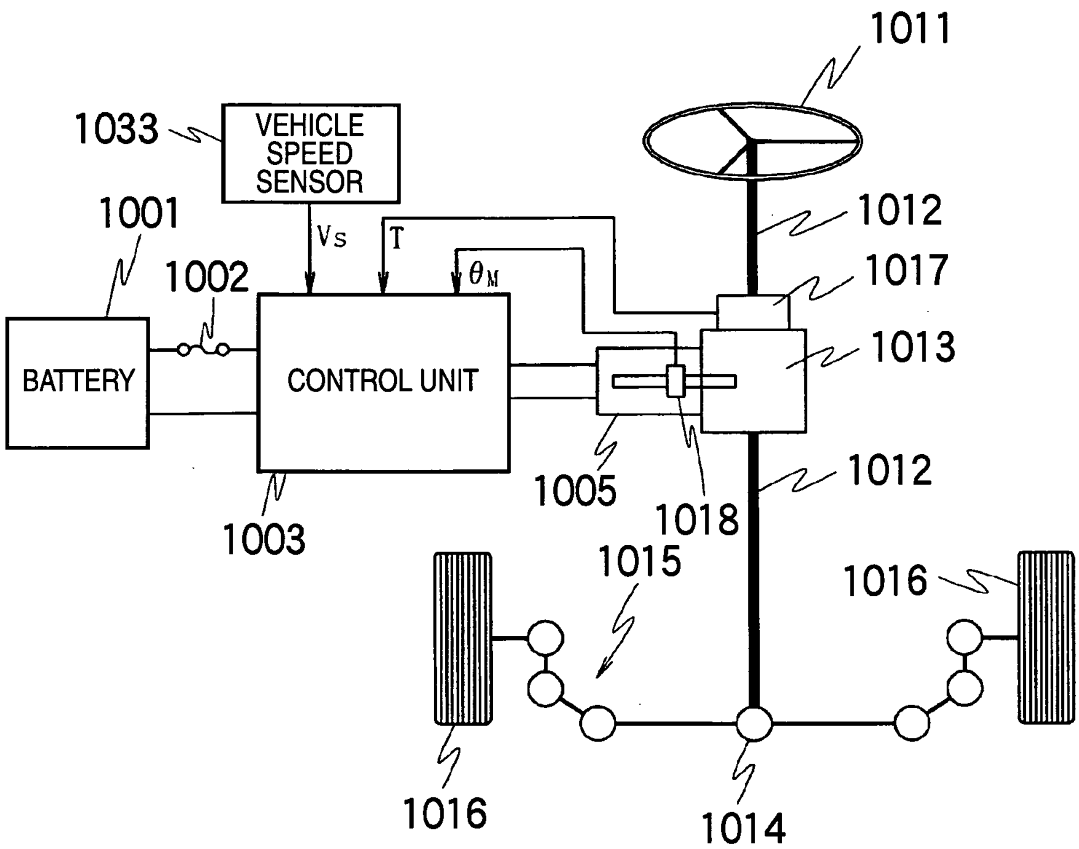
1011
1033
VEHICLE SPEED SENSOR
1001
Vs
T
$\theta_M$
1012
1017
1002
BATTERY
CONTROL UNIT
1013
1005
1018
1012
1003
1015
1016
1016
1014

FIG. 2

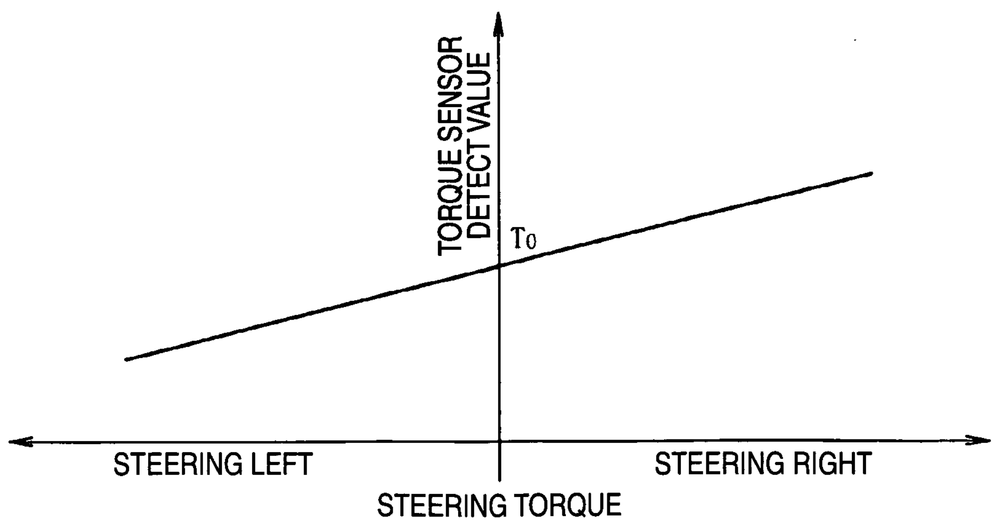
TORQUE SENSOR DETECT VALUE
$T_0$
STEERING LEFT
STEERING RIGHT
STEERING TORQUE

FIG. 3

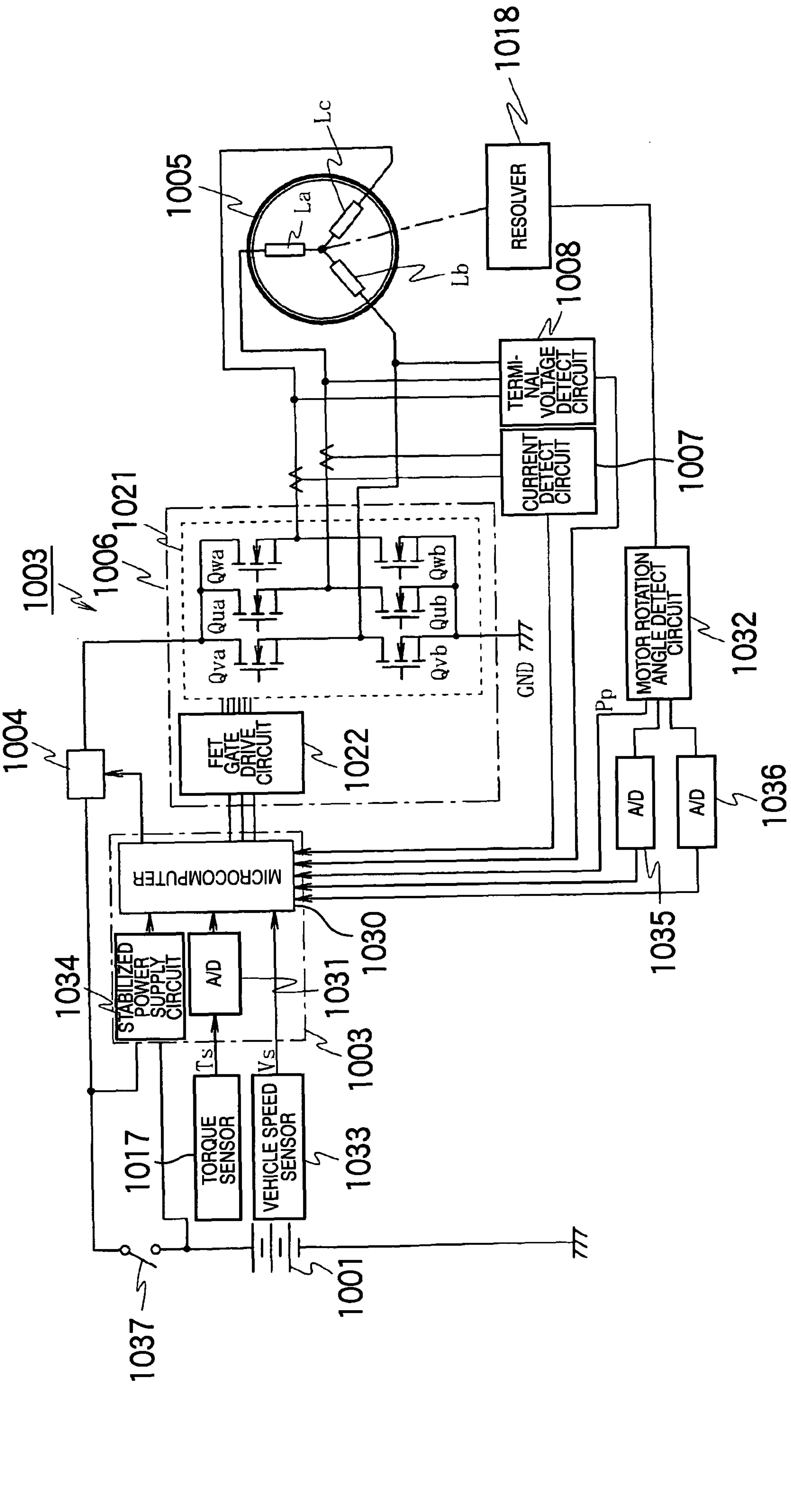
1003
1006
1021
1005
La
Lb
Lc
1018
RESOLVER
1008
TERMINAL VOLTAGE DETECT CIRCUIT
CURRENT DETECT CIRCUIT
1007
Qwa
Qua
Qva
Qwb
Qub
Qvb
GND
1004
FET GATE DRIVE CIRCUIT
1022
MOTOR ROTATION ANGLE DETECT CIRCUIT
1032
Pp
A/D
A/D
1036
1035
MICROCOMPUTER
1030
1031
1034
STABILIZED POWER SUPPLY CIRCUIT
A/D
1003
Ts
Vs
TORQUE SENSOR
VEHICLE SPEED SENSOR
1017
1033
1037
1001

FIG. 4

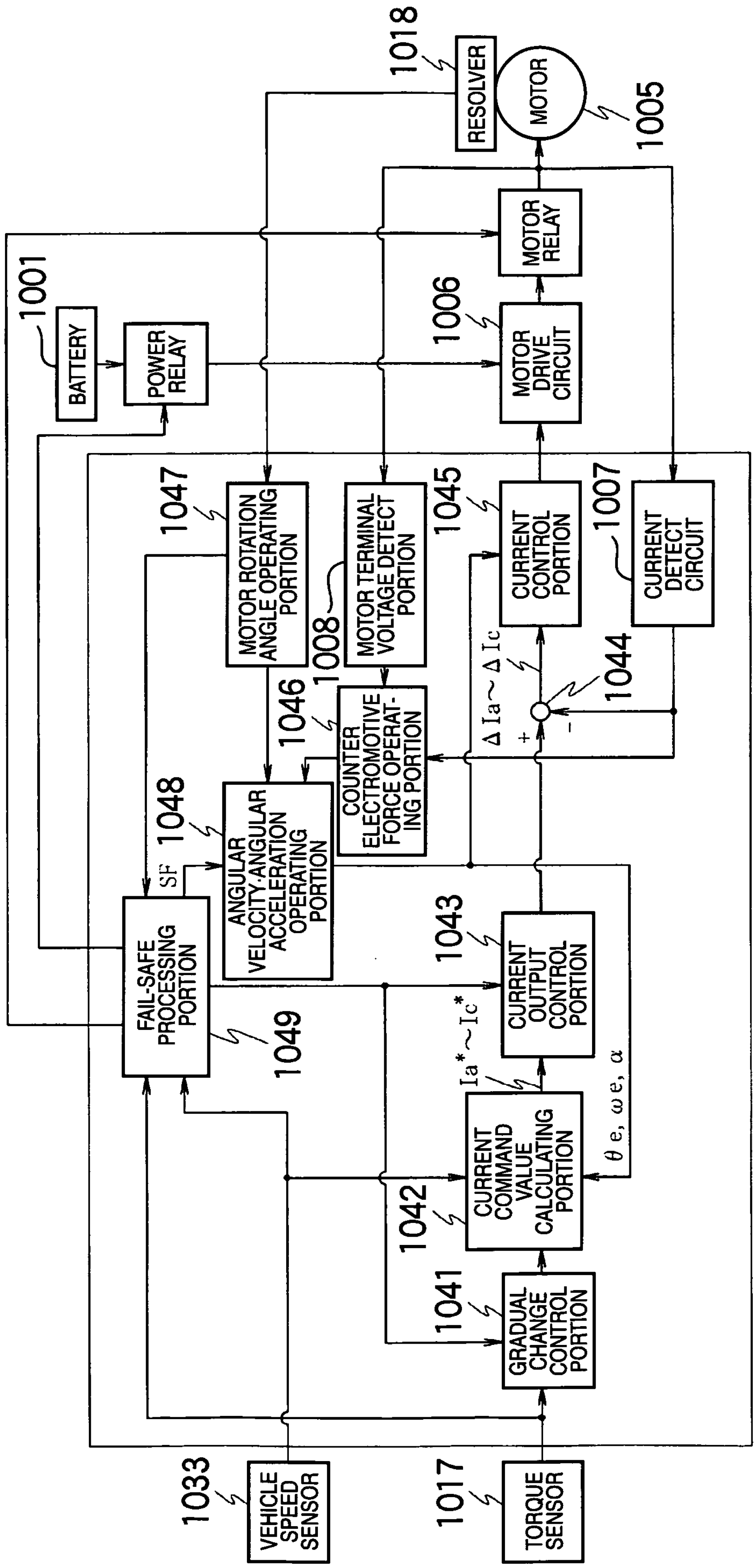
BATTERY
1001
POWER RELAY
RESOLVER
1018
MOTOR
1005
MOTOR RELAY
MOTOR DRIVE CIRCUIT
1006
MOTOR ROTATION ANGLE OPERATING PORTION
1047
MOTOR TERMINAL VOLTAGE DETECT PORTION
1008
CURRENT CONTROL PORTION
1045
CURRENT DETECT CIRCUIT
1007
COUNTER ELECTROMOTIVE FORCE OPERATING PORTION
1046
ΔIa～ΔIc
1044
+
-
ANGULAR VELOCITY·ANGULAR ACCELERATION OPERATING PORTION
1048
SF
FAIL-SAFE PROCESSING PORTION
1049
CURRENT OUTPUT CONTROL PORTION
1043
Ia*～Ic*
θe, ωe, α
CURRENT COMMAND VALUE CALCULATING PORTION
1042
GRADUAL CHANGE CONTROL PORTION
1041
VEHICLE SPEED SENSOR
1033
TORQUE SENSOR
1017

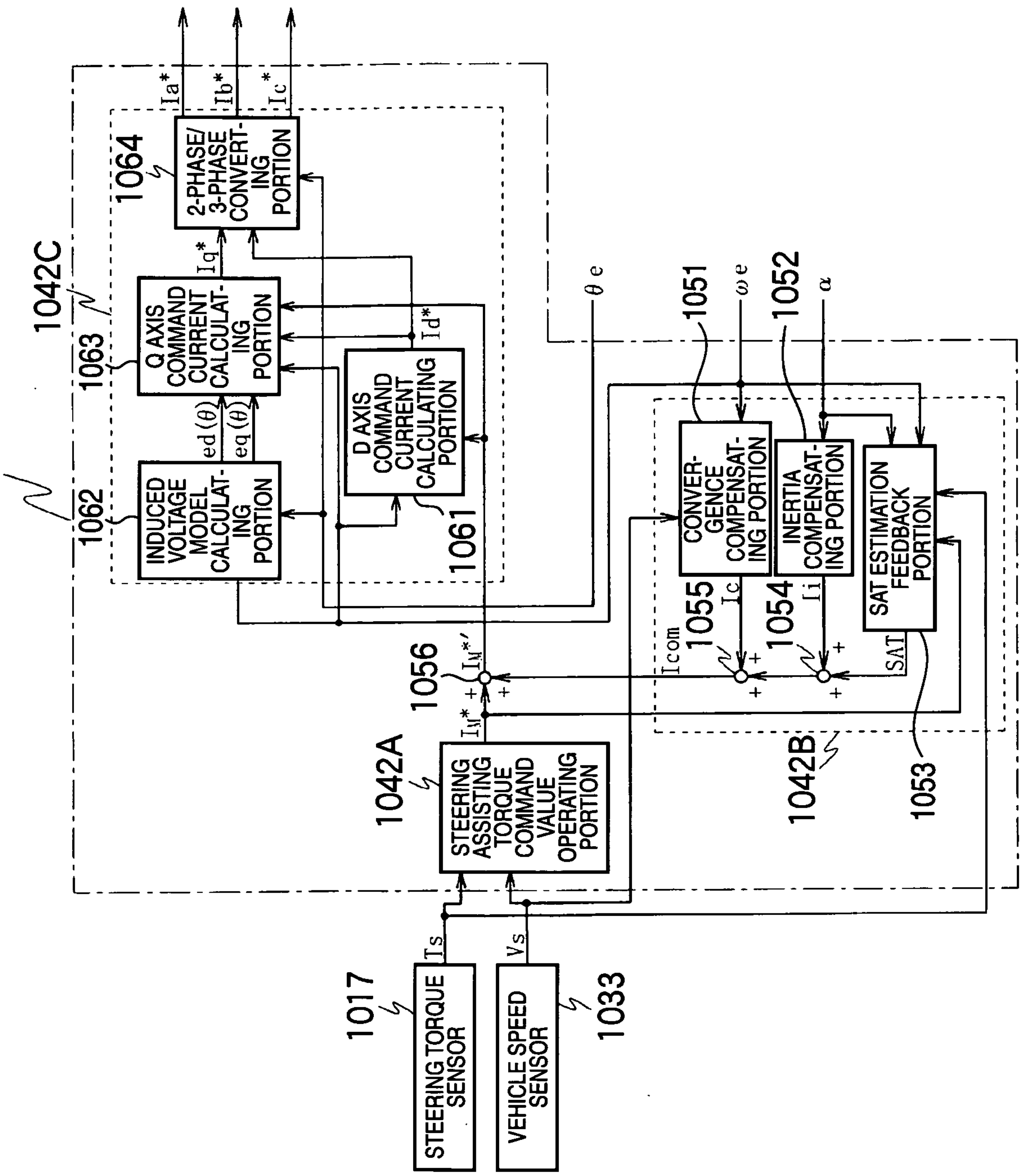
1042
1042C
1042A
1042B
1064
2-PHASE/ 3-PHASE CONVERT-ING PORTION
Ia*
Ib*
Ic*
1063
Q AXIS COMMAND CURRENT CALCULAT-ING PORTION
Iq*
Id*
1062
INDUCED VOLTAGE MODEL CALCULAT-ING PORTION
ed(θ)
eq(θ)
1061
D AXIS COMMAND CURRENT CALCULATING PORTION
θe
ωe
α
1051
CONVER-GENCE COMPENSAT-ING PORTION
1052
INERTIA COMPENSAT-ING PORTION
1053
SAT ESTIMATION FEEDBACK PORTION
SAT
1055
Ic
1054
Ii
Icom
1056
IM*
IM*'
STEERING ASSISTING TORQUE COMMAND VALUE OPERATING PORTION
Ts
Vs
1017
STEERING TORQUE SENSOR
1033
VEHICLE SPEED SENSOR

FIG. 5

FIG. 6

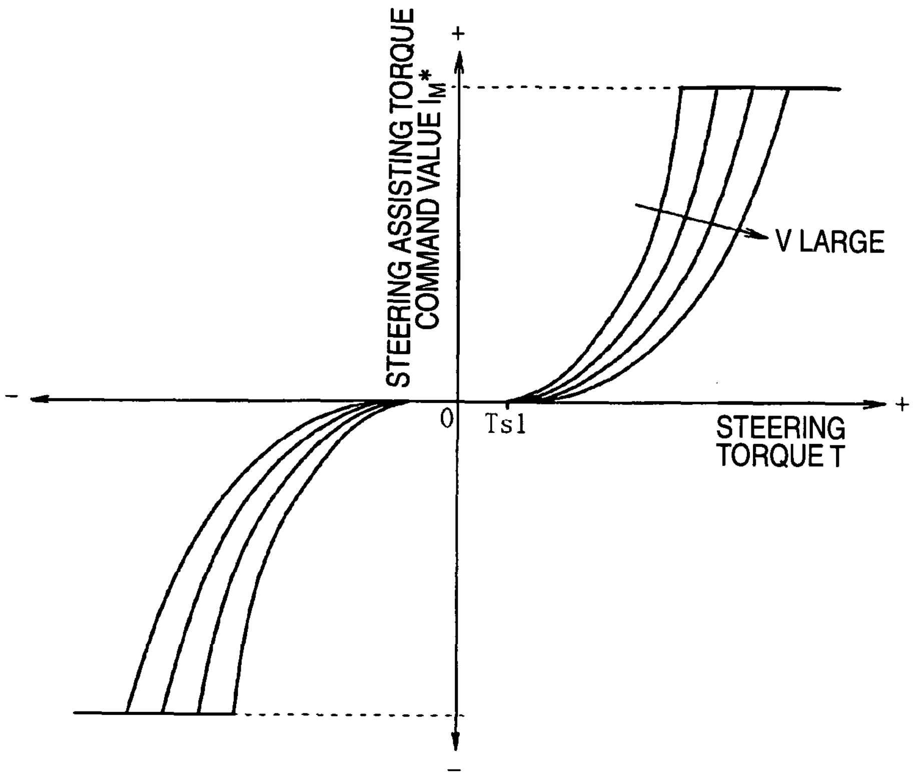
STEERING ASSISTING TORQUE COMMAND VALUE $I_M$*
+
-
V LARGE
0
Ts1
STEERING TORQUE T
+
-

FIG. 7

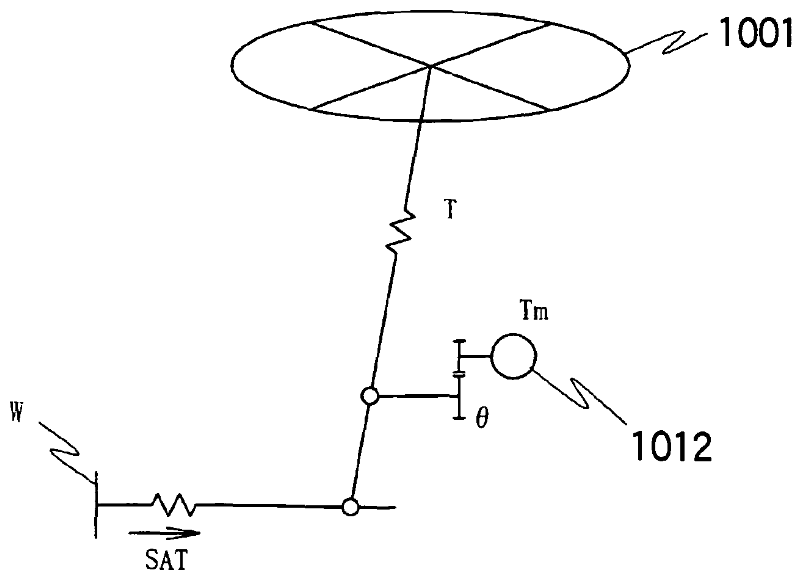
1001
T
Tm
θ
W
1012
SAT

FIG. 8

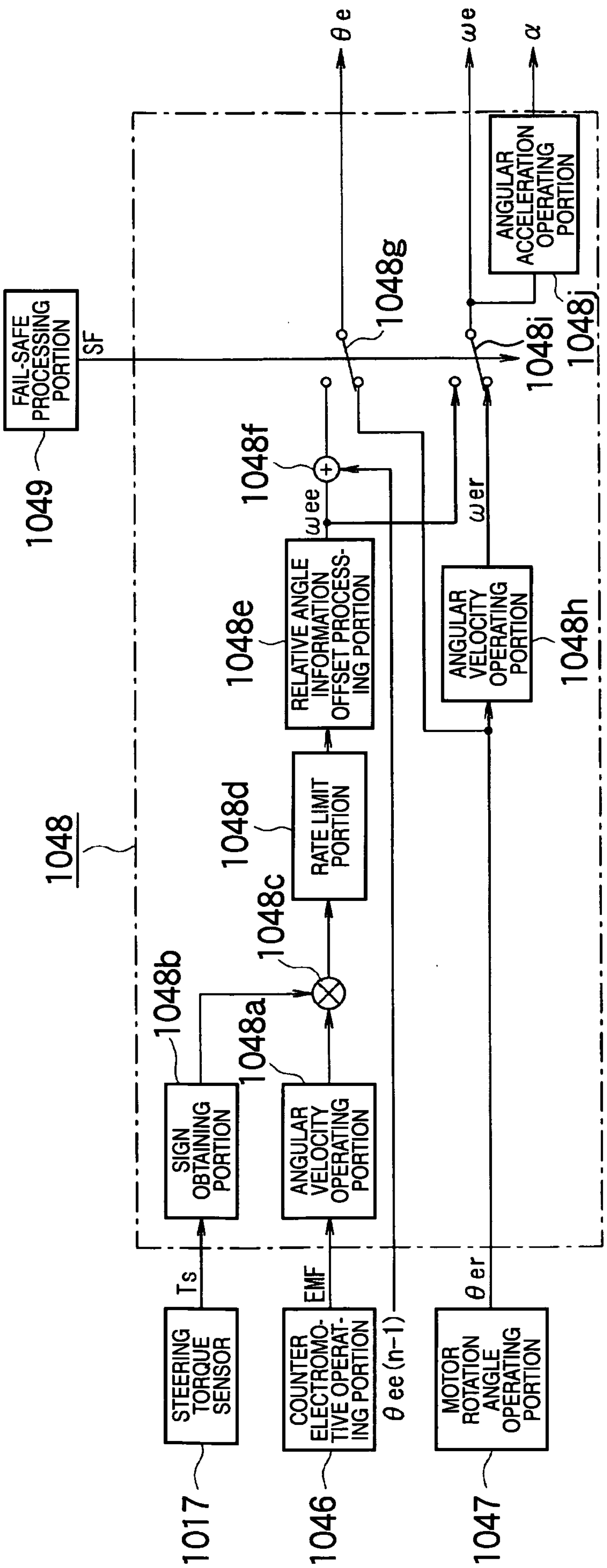
1048
1017
STEERING TORQUE SENSOR
Ts
1046
COUNTER ELECTROMOTIVE OPERATING PORTION
EMF
θ ee (n−1)
1047
MOTOR ROTATION ANGLE OPERATING PORTION
θ er
SIGN OBTAINING PORTION
1048b
ANGULAR VELOCITY OPERATING PORTION
1048a
1048c
RATE LIMIT PORTION
1048d
RELATIVE ANGLE INFORMATION OFFSET PROCESSING PORTION
1048e
ωee
1048f
ANGULAR VELOCITY OPERATING PORTION
1048h
ωer
1049
FAIL-SAFE PROCESSING PORTION
SF
1048g
1048i
1048j
ANGULAR ACCELERATION OPERATING PORTION
θe
ωe
α

*FIG. 9*

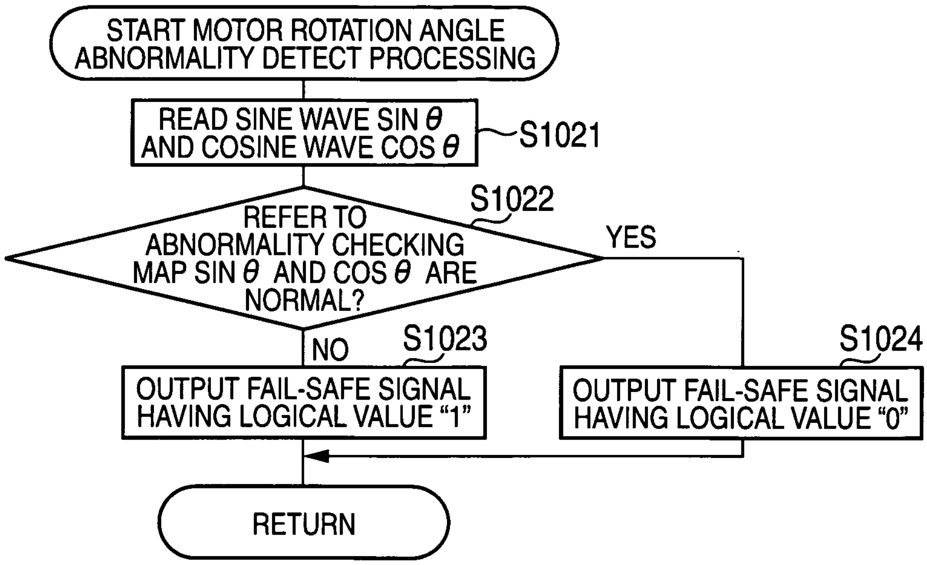
START MOTOR ROTATION ANGLE ABNORMALITY DETECT PROCESSING
READ SINE WAVE SIN θ AND COSINE WAVE COS θ
S1021
REFER TO ABNORMALITY CHECKING MAP SIN θ AND COS θ ARE NORMAL?
S1022
YES
NO
S1023
OUTPUT FAIL-SAFE SIGNAL HAVING LOGICAL VALUE "1"
S1024
OUTPUT FAIL-SAFE SIGNAL HAVING LOGICAL VALUE "0"
RETURN

*FIG. 10*

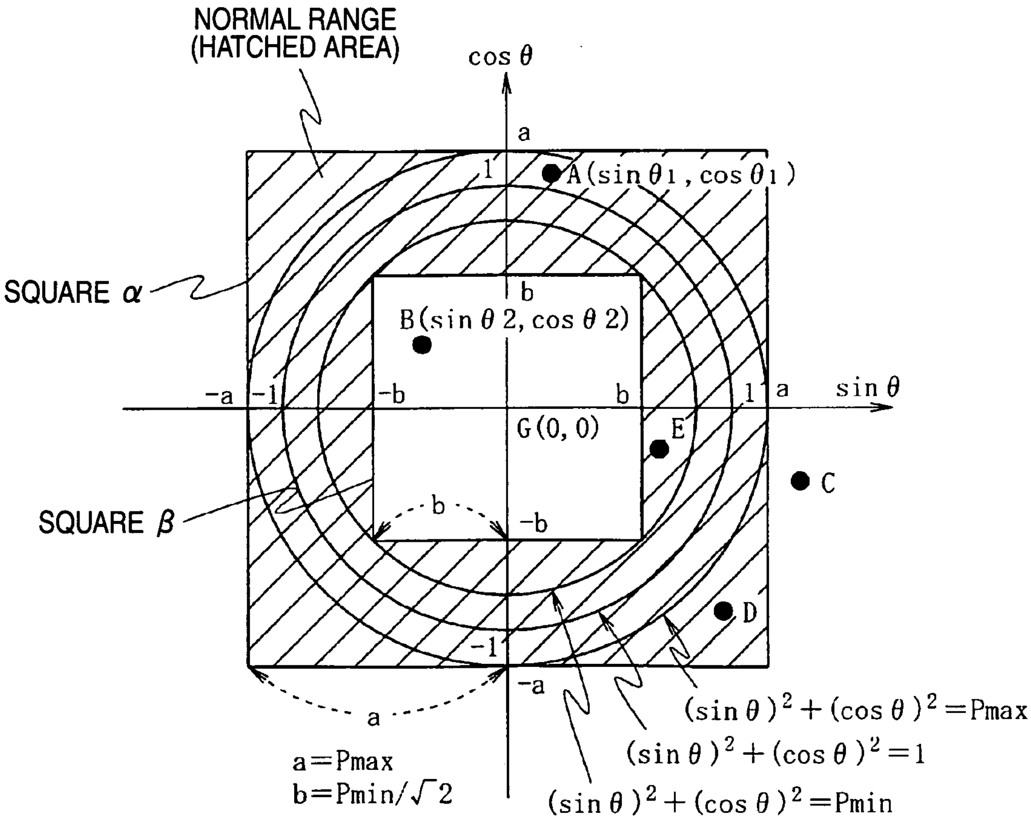
NORMAL RANGE (HATCHED AREA)
cos θ
sin θ
SQUARE α
SQUARE β
A(sin θ1, cos θ1)
B(sin θ 2, cos θ 2)
G(0, 0)
E
C
D
a
b
-a
-b
1
-1
(sin θ)² + (cos θ)² = Pmax
(sin θ)² + (cos θ)² = 1
(sin θ)² + (cos θ)² = Pmin
a=Pmax
b=Pmin/√2

FIG. 11

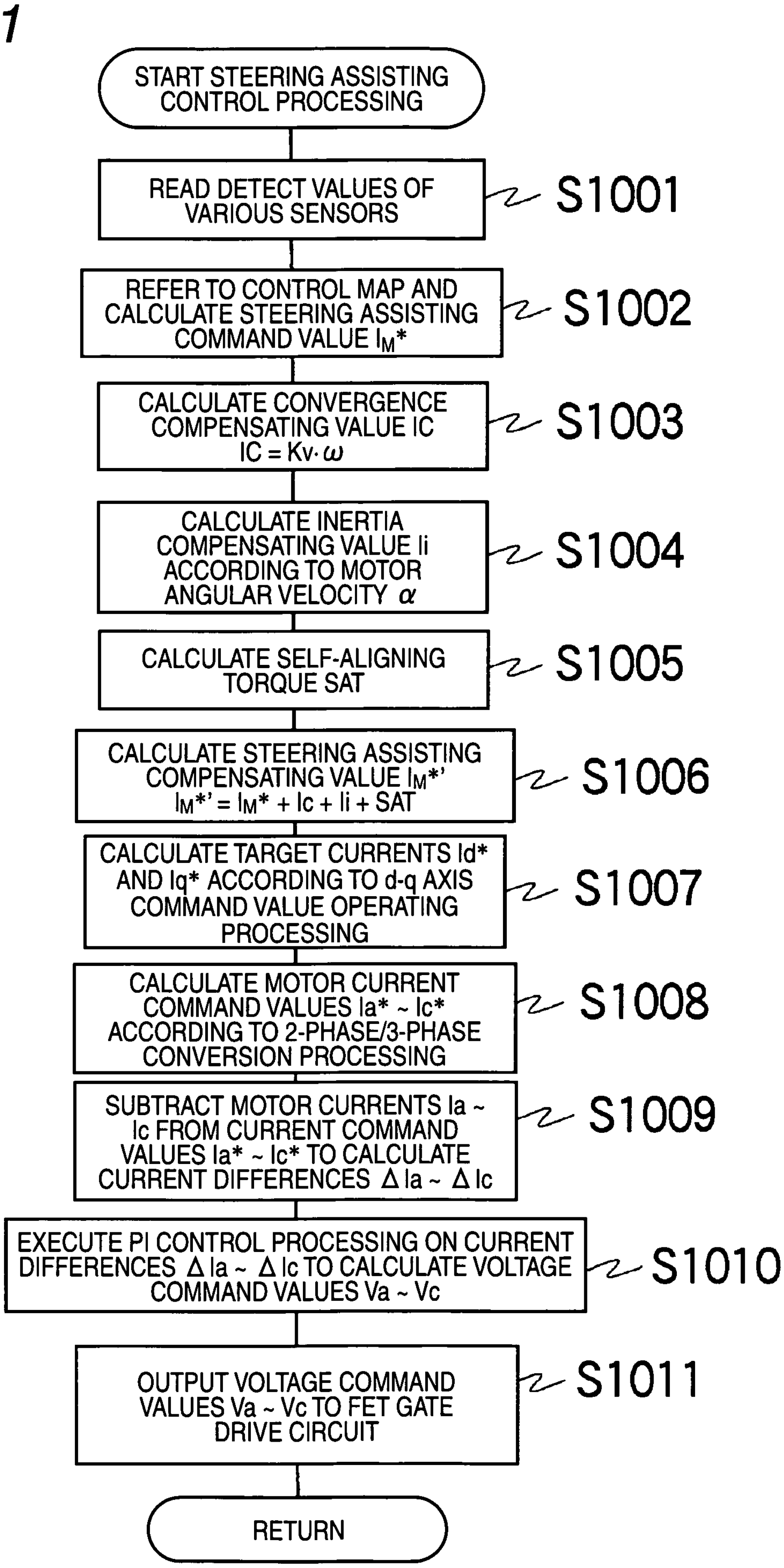
START STEERING ASSISTING CONTROL PROCESSING
READ DETECT VALUES OF VARIOUS SENSORS
S1001
REFER TO CONTROL MAP AND CALCULATE STEERING ASSISTING COMMAND VALUE $I_M$*
S1002
CALCULATE CONVERGENCE COMPENSATING VALUE IC IC = Kv·ω
S1003
CALCULATE INERTIA COMPENSATING VALUE Ii ACCORDING TO MOTOR ANGULAR VELOCITY α
S1004
CALCULATE SELF-ALIGNING TORQUE SAT
S1005
CALCULATE STEERING ASSISTING COMPENSATING VALUE $I_M$*' $I_M$*' = $I_M$* + Ic + Ii + SAT
S1006
CALCULATE TARGET CURRENTS Id* AND Iq* ACCORDING TO d-q AXIS COMMAND VALUE OPERATING PROCESSING
S1007
CALCULATE MOTOR CURRENT COMMAND VALUES Ia* ~ Ic* ACCORDING TO 2-PHASE/3-PHASE CONVERSION PROCESSING
S1008
SUBTRACT MOTOR CURRENTS Ia ~ Ic FROM CURRENT COMMAND VALUES Ia* ~ Ic* TO CALCULATE CURRENT DIFFERENCES ΔIa ~ ΔIc
S1009
EXECUTE PI CONTROL PROCESSING ON CURRENT DIFFERENCES ΔIa ~ ΔIc TO CALCULATE VOLTAGE COMMAND VALUES Va ~ Vc
S1010
OUTPUT VOLTAGE COMMAND VALUES Va ~ Vc TO FET GATE DRIVE CIRCUIT
S1011
RETURN

FIG. 12

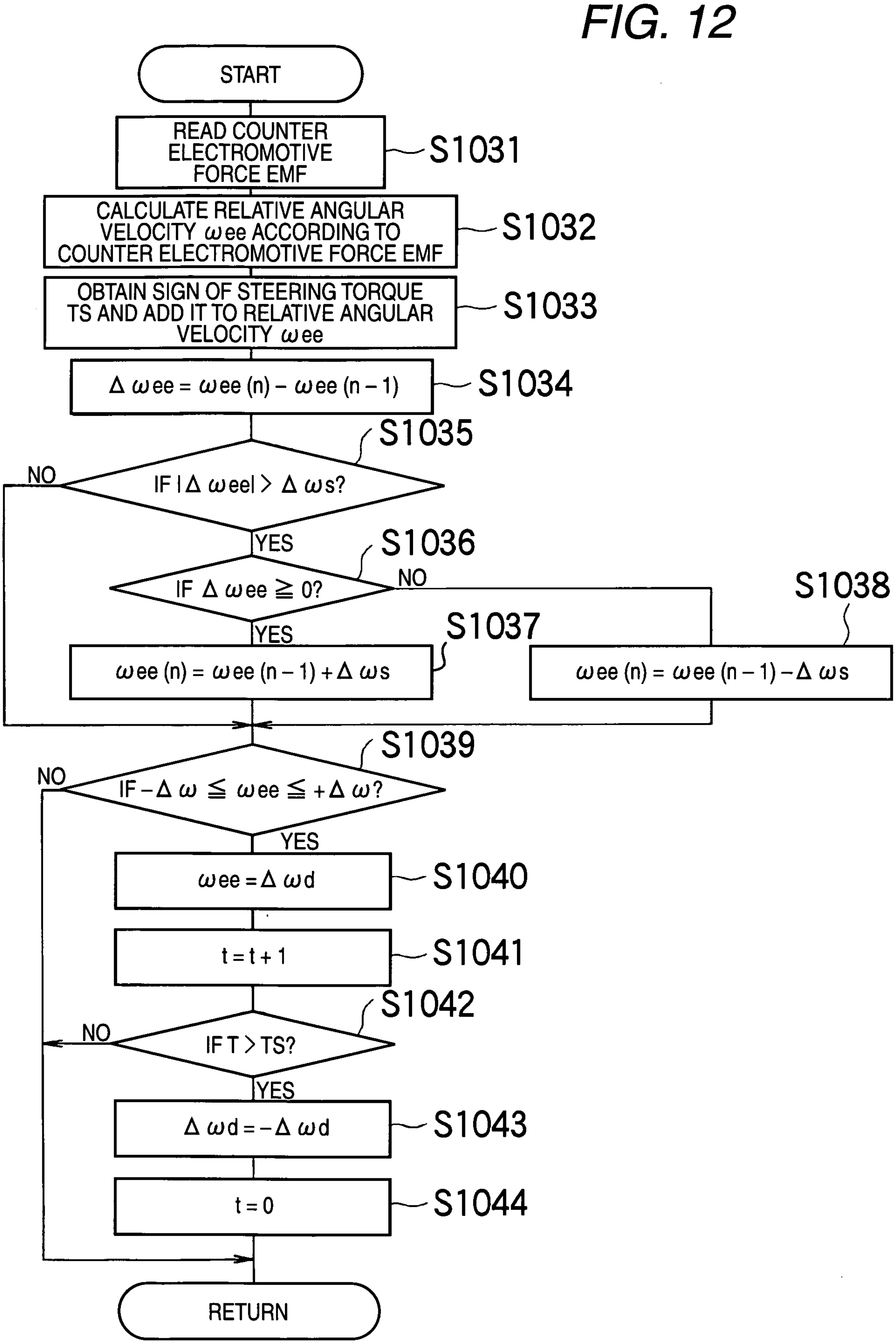
START
READ COUNTER ELECTROMOTIVE FORCE EMF
S1031
CALCULATE RELATIVE ANGULAR VELOCITY ωee ACCORDING TO COUNTER ELECTROMOTIVE FORCE EMF
S1032
OBTAIN SIGN OF STEERING TORQUE TS AND ADD IT TO RELATIVE ANGULAR VELOCITY ωee
S1033
Δωee = ωee (n) − ωee (n − 1)
S1034
S1035
IF |Δωee| > Δωs?
NO
YES
S1036
IF Δωee ≧ 0?
NO
YES
S1037
ωee (n) = ωee (n − 1) + Δωs
S1038
ωee (n) = ωee (n − 1) − Δωs
S1039
IF −Δω ≦ ωee ≦ +Δω?
NO
YES
ωee = Δωd
S1040
t = t + 1
S1041
S1042
IF T > TS?
NO
YES
Δωd = −Δωd
S1043
t = 0
S1044
RETURN

FIG. 13

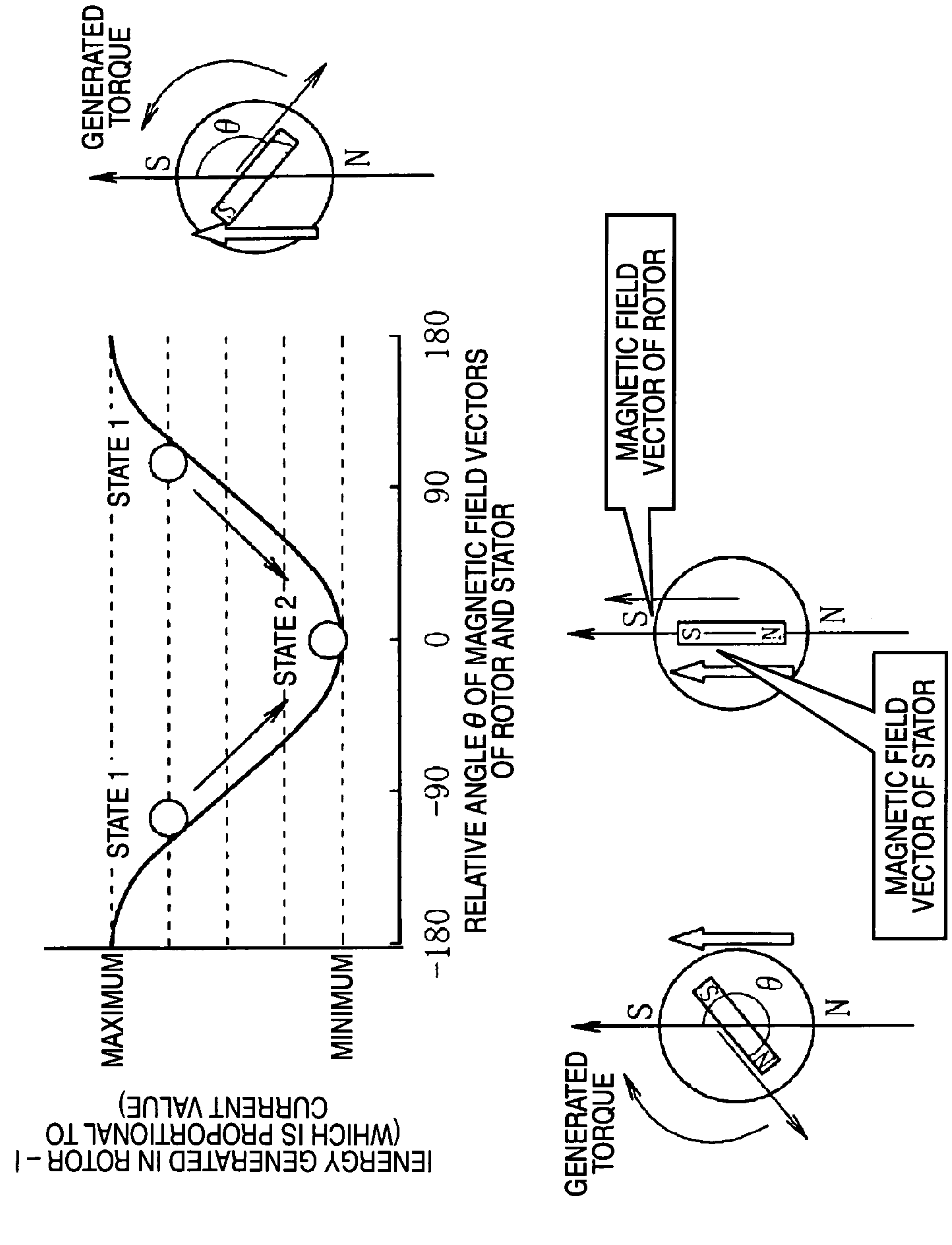
GENERATED TORQUE
S
N
θ
MAXIMUM
MINIMUM
STATE 1
STATE 2
STATE 1
−180
−90
0
90
180
RELATIVE ANGLE θ OF MAGNETIC FIELD VECTORS OF ROTOR AND STATOR
IENERGY GENERATED IN ROTOR − I (WHICH IS PROPORTIONAL TO CURRENT VALUE)
MAGNETIC FIELD VECTOR OF ROTOR
MAGNETIC FIELD VECTOR OF STATOR
GENERATED TORQUE

FIG. 14

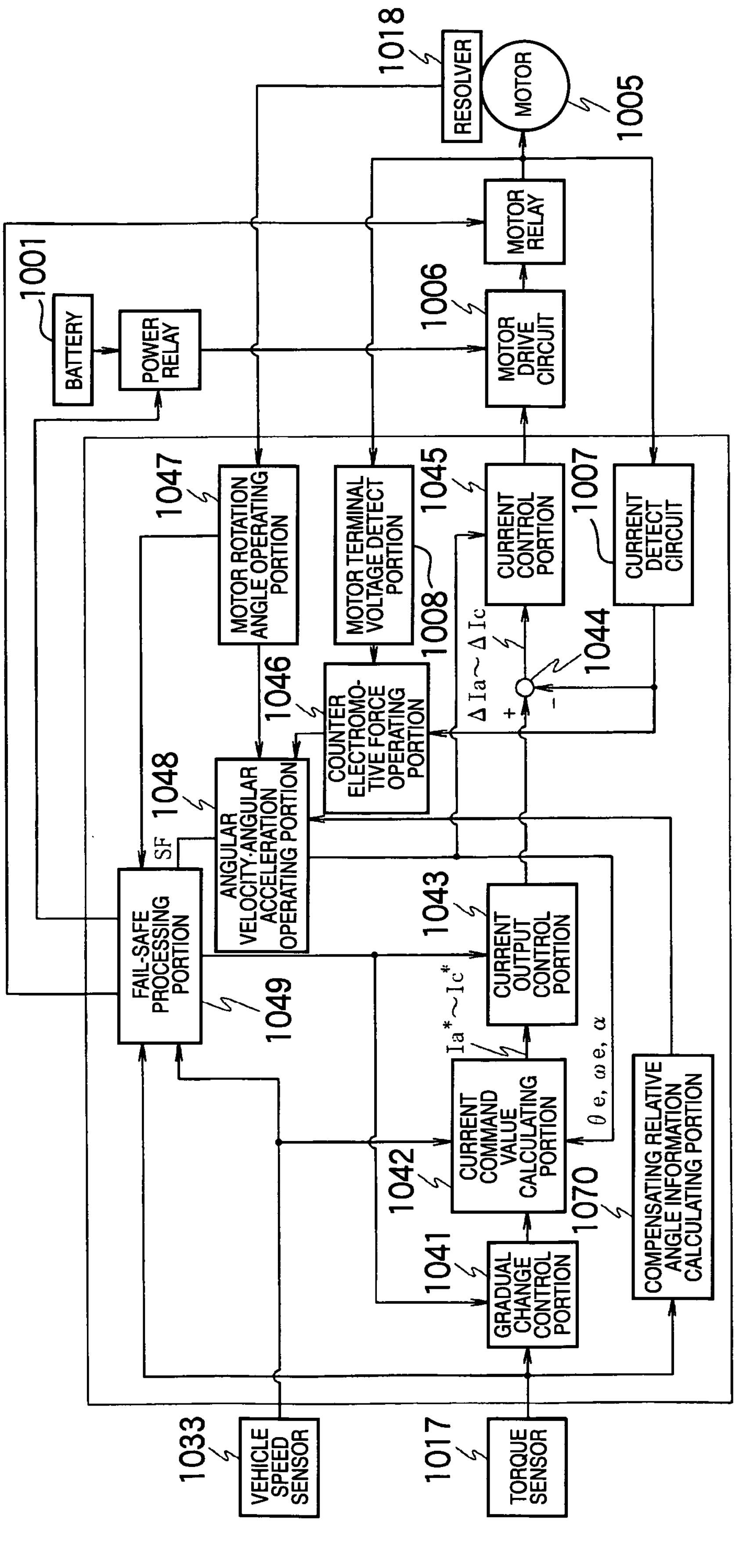

BATTERY
1001
POWER RELAY
RESOLVER
1018
MOTOR
1005
MOTOR RELAY
MOTOR DRIVE CIRCUIT
1006
MOTOR ROTATION ANGLE OPERATING PORTION
1047
MOTOR TERMINAL VOLTAGE DETECT PORTION
1008
CURRENT CONTROL PORTION
1045
CURRENT DETECT CIRCUIT
1007
1044
+
-
ΔIa~ΔIc
COUNTER ELECTROMOTIVE FORCE OPERATING PORTION
1046
ANGULAR VELOCITY·ANGULAR ACCELERATION OPERATING PORTION
1048
SF
FAIL-SAFE PROCESSING PORTION
1049
CURRENT OUTPUT CONTROL PORTION
1043
Ia*~Ic*
θe, ωe, α
CURRENT COMMAND VALUE CALCULATING PORTION
1042
GRADUAL CHANGE CONTROL PORTION
1041
COMPENSATING RELATIVE ANGLE INFORMATION CALCULATING PORTION
1070
VEHICLE SPEED SENSOR
1033
TORQUE SENSOR
1017

FIG. 15

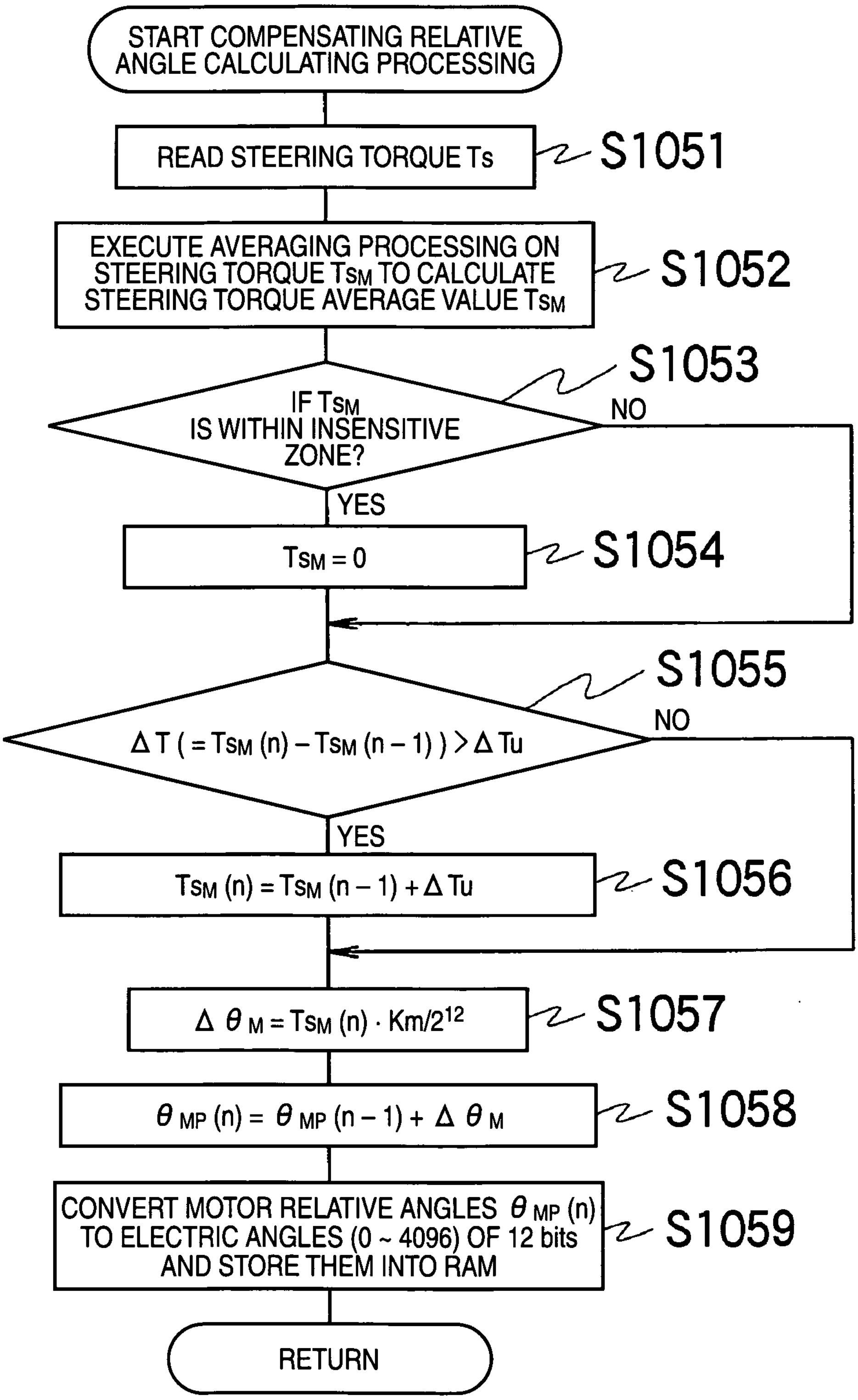
START COMPENSATING RELATIVE ANGLE CALCULATING PROCESSING
READ STEERING TORQUE Ts
S1051
EXECUTE AVERAGING PROCESSING ON STEERING TORQUE TsM TO CALCULATE STEERING TORQUE AVERAGE VALUE TsM
S1052
IF TsM IS WITHIN INSENSITIVE ZONE?
S1053
NO
YES
TsM = 0
S1054
ΔT ( = TsM (n) – TsM (n – 1) ) > ΔTu
S1055
NO
YES
TsM (n) = TsM (n – 1) + ΔTu
S1056
Δ θM = TsM (n) · Km/2^12
S1057
θMP (n) = θMP (n – 1) + Δ θM
S1058
CONVERT MOTOR RELATIVE ANGLES θMP (n) TO ELECTRIC ANGLES (0 ~ 4096) OF 12 bits AND STORE THEM INTO RAM
S1059
RETURN

FIG. 16

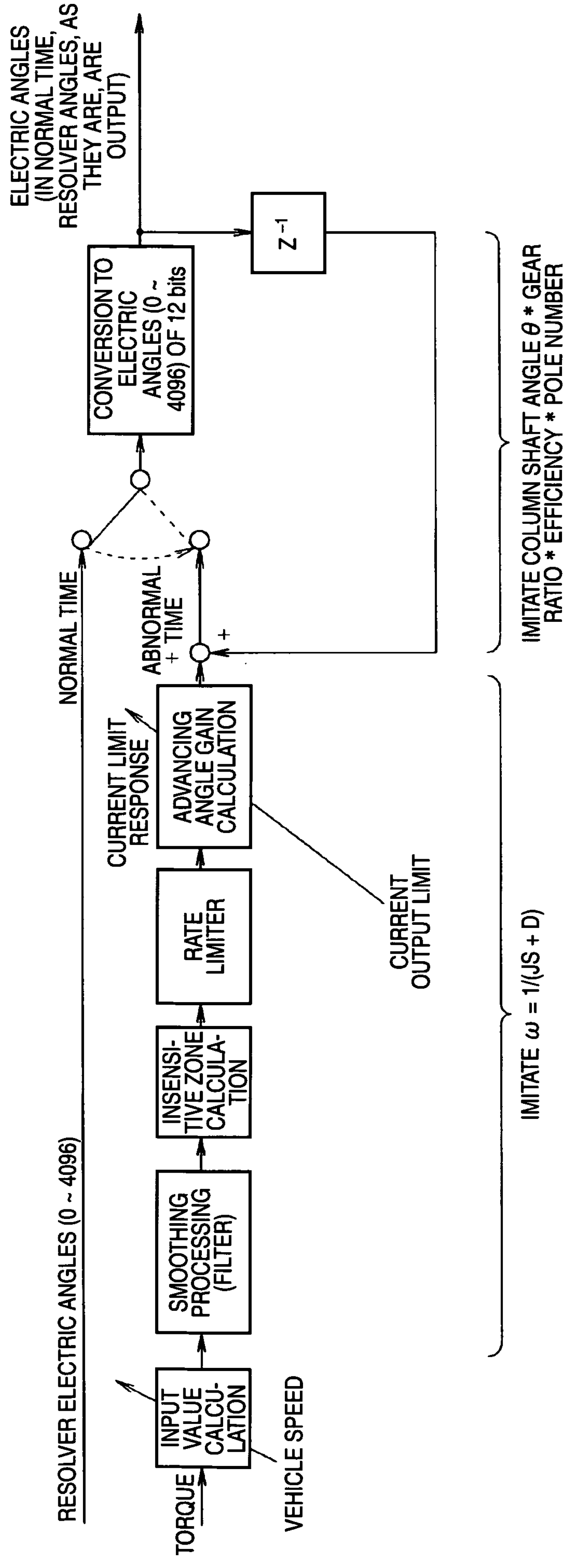
RESOLVER ELECTRIC ANGLES (0 ~ 4096)
TORQUE
INPUT VALUE CALCU-LATION
VEHICLE SPEED
SMOOTHING PROCESSING (FILTER)
INSENSI-TIVE ZONE CALCULA-TION
RATE LIMITER
ADVANCING ANGLE GAIN CALCULATION
CURRENT LIMIT RESPONSE
CURRENT OUTPUT LIMIT
NORMAL TIME
ABNORMAL TIME
+
+
CONVERSION TO ELECTRIC ANGLES (0 ~ 4096) OF 12 bits
ELECTRIC ANGLES (IN NORMAL TIME, RESOLVER ANGLES, AS THEY ARE, ARE OUTPUT)
Z$^{-1}$
IMITATE ω = 1/(JS + D)
IMITATE COLUMN SHAFT ANGLE θ * GEAR RATIO * EFFICIENCY * POLE NUMBER

FIG. 17

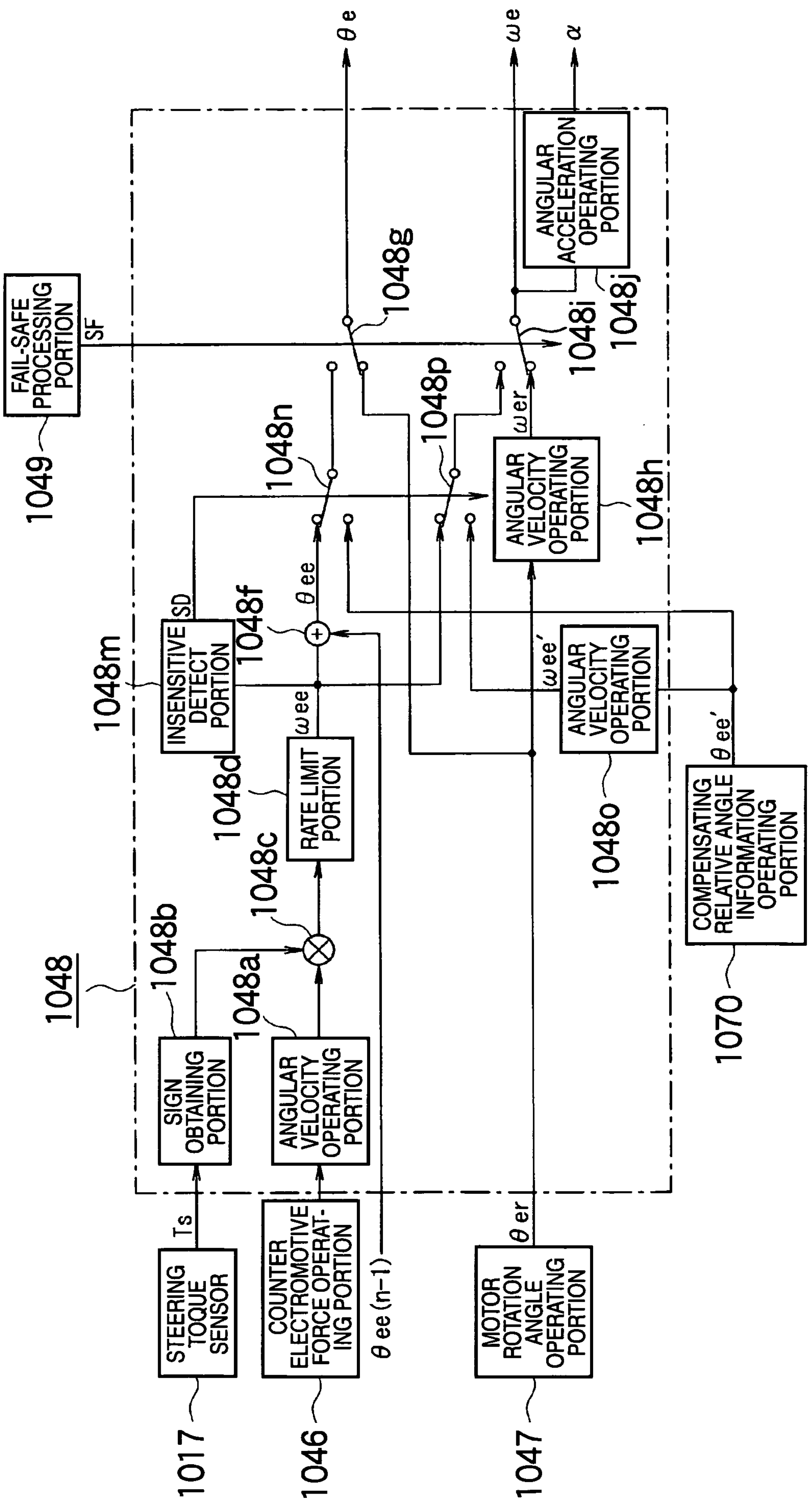
1048
1017
STEERING TOQUE SENSOR
Ts
1046
COUNTER ELECTROMOTIVE FORCE OPERAT-ING PORTION
θ ee (n-1)
1047
MOTOR ROTATION ANGLE OPERATING PORTION
θ er
SIGN OBTAINING PORTION
1048b
ANGULAR VELOCITY OPERATING PORTION
1048a
1048c
RATE LIMIT PORTION
1048d
ωee
INSENSITIVE DETECT PORTION
1048m
SD
1048f
θ ee
1048n
1048p
ANGULAR VELOCITY OPERATING PORTION
1048h
ωer
ωee'
ANGULAR VELOCITY OPERATING PORTION
1048o
θ ee'
COMPENSATING RELATIVE ANGLE INFORMATION OPERATING PORTION
1070
FAIL-SAFE PROCESSING PORTION
1049
SF
1048g
1048i
1048j
ANGULAR ACCELERATION OPERATING PORTION
θ e
ωe
α

FIG. 18

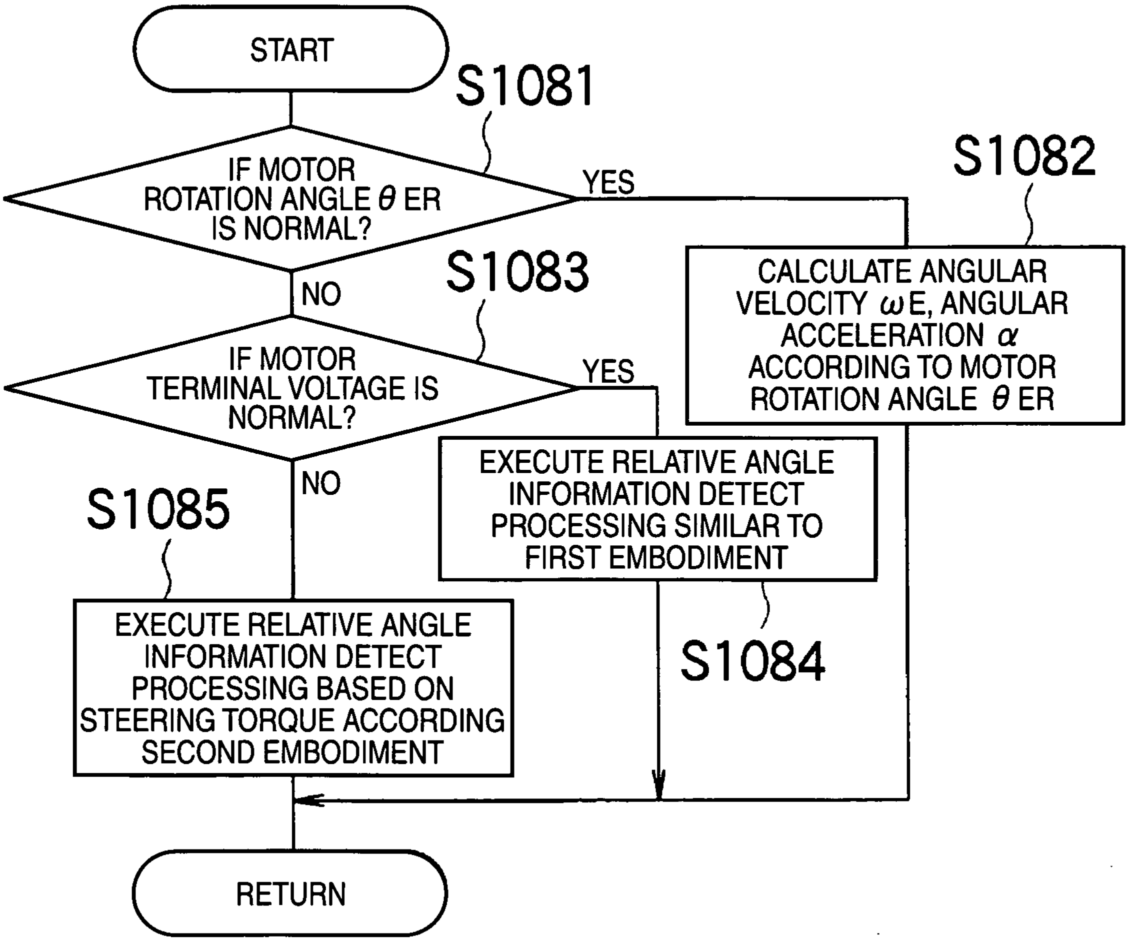
START
S1081
IF MOTOR ROTATION ANGLE θ ER IS NORMAL?
YES
NO
S1082
CALCULATE ANGULAR VELOCITY ωE, ANGULAR ACCELERATION α ACCORDING TO MOTOR ROTATION ANGLE θ ER
S1083
IF MOTOR TERMINAL VOLTAGE IS NORMAL?
YES
NO
EXECUTE RELATIVE ANGLE INFORMATION DETECT PROCESSING SIMILAR TO FIRST EMBODIMENT
S1084
S1085
EXECUTE RELATIVE ANGLE INFORMATION DETECT PROCESSING BASED ON STEERING TORQUE ACCORDING SECOND EMBODIMENT
RETURN

FIG. 19

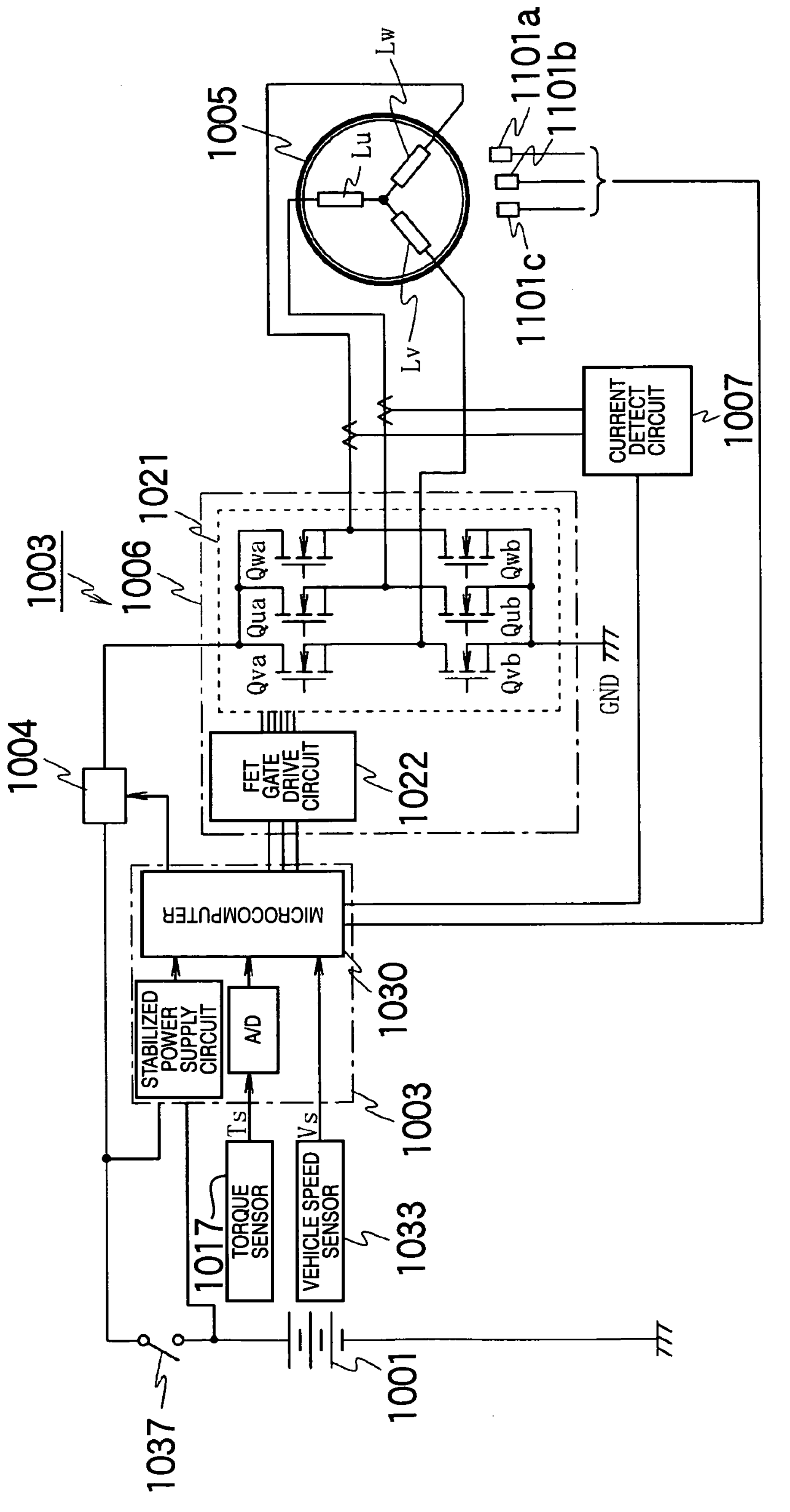
1003
1006
1021
1005
Lu
Lw
Lv
1101a
1101b
1101c
CURRENT DETECT CIRCUIT
1007
Qwa
Qua
Qva
Qwb
Qub
Qvb
GND
1004
FET GATE DRIVE CIRCUIT
1022
MICROCOMPUTER
1030
STABILIZED POWER SUPPLY CIRCUIT
A/D
Ts
Vs
1003
TORQUE SENSOR
1017
VEHICLE SPEED SENSOR
1033
1001
1037

# FIG. 20

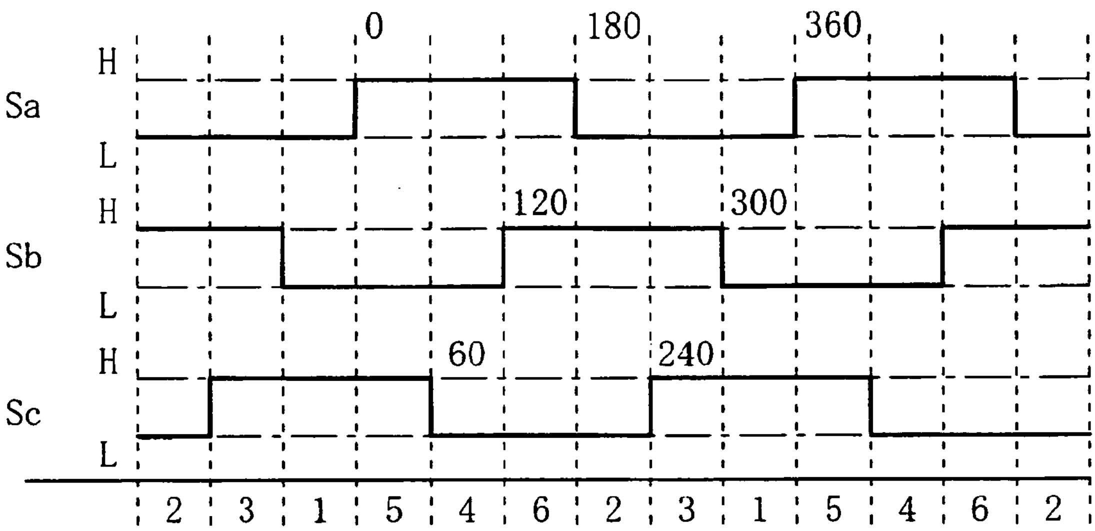


WHEN a, b, c PHASES ARE NORMAL

# FIG. 21

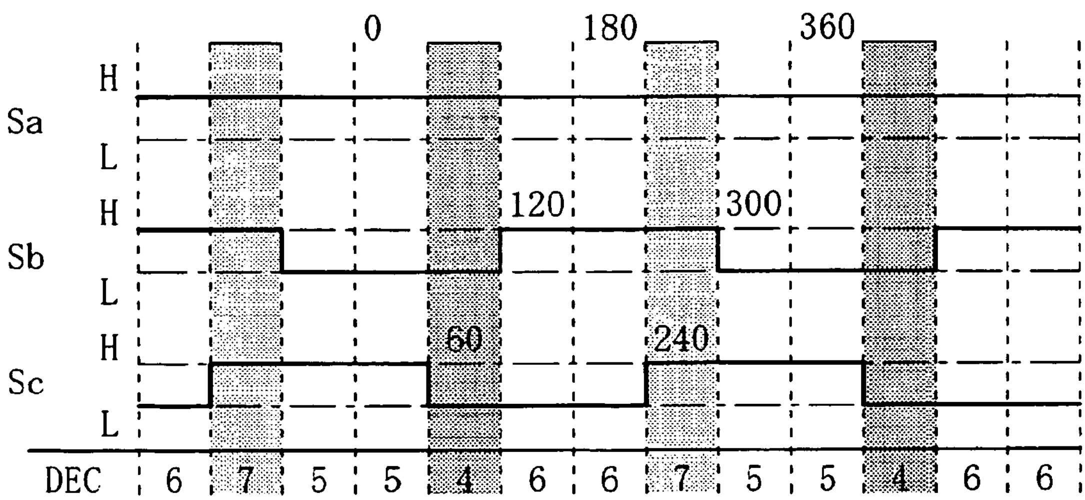


WHEN a PHASE H IS FIXED

FIG. 22

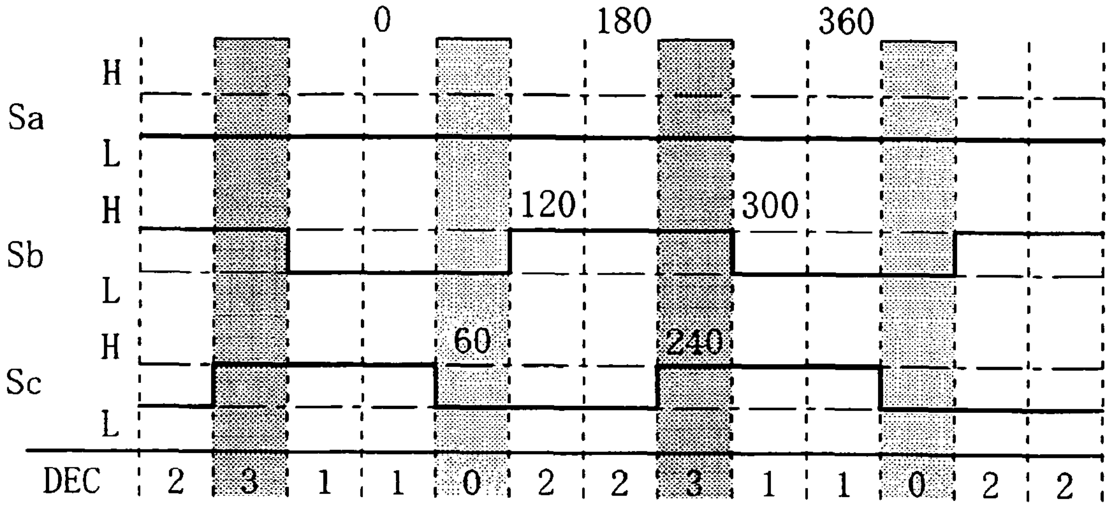


WHEN a PHASE L IS FIXED

FIG. 23

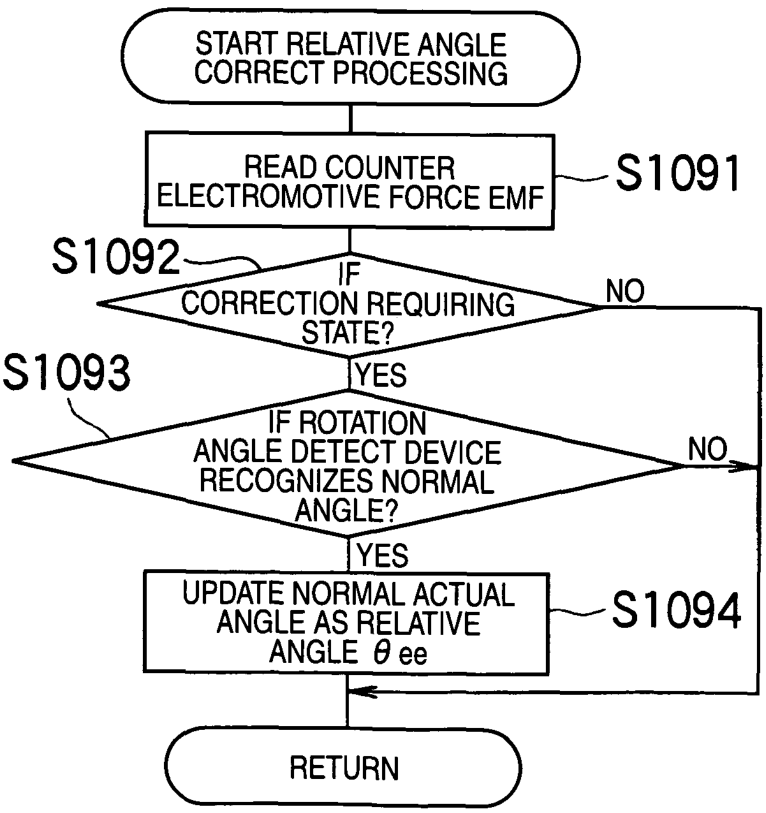

*FIG. 24*

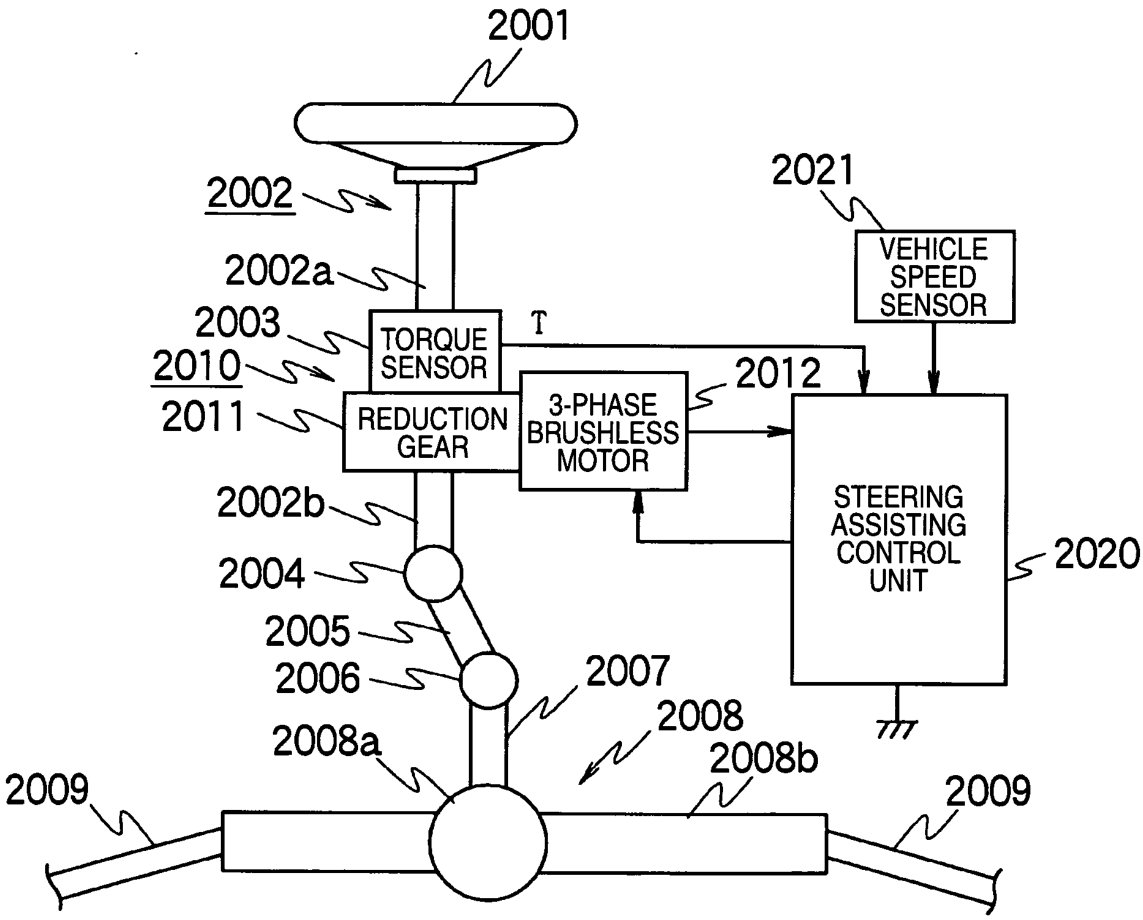
2001
2002
2002a
2003
2010
2011
TORQUE SENSOR
T
REDUCTION GEAR
3-PHASE BRUSHLESS MOTOR
2012
2021
VEHICLE SPEED SENSOR
STEERING ASSISTING CONTROL UNIT
2020
2002b
2004
2005
2006
2007
2008
2008a
2008b
2009
2009

FIG. 25

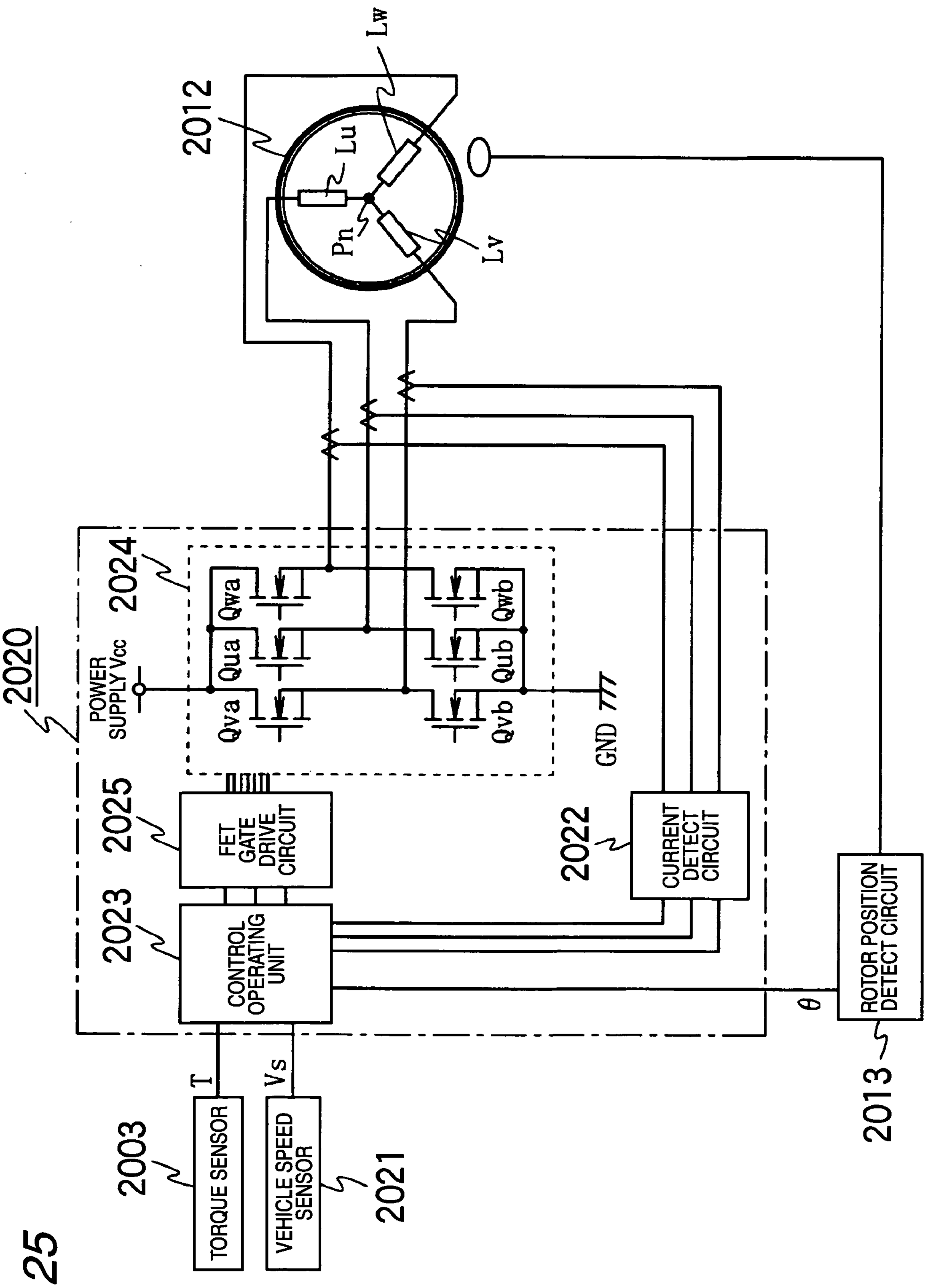
2012
Lw
Lu
Pn
Lv
2020
POWER SUPPLY Vcc
2024
Qwa
Qua
Qva
Qwb
Qub
Qvb
GND
2025
FET GATE DRIVE CIRCUIT
2023
CONTROL OPERATING UNIT
2022
CURRENT DETECT CIRCUIT
θ
ROTOR POSITION DETECT CIRCUIT
2013
T
Vs
2003
TORQUE SENSOR
VEHICLE SPEED SENSOR
2021

FIG. 26

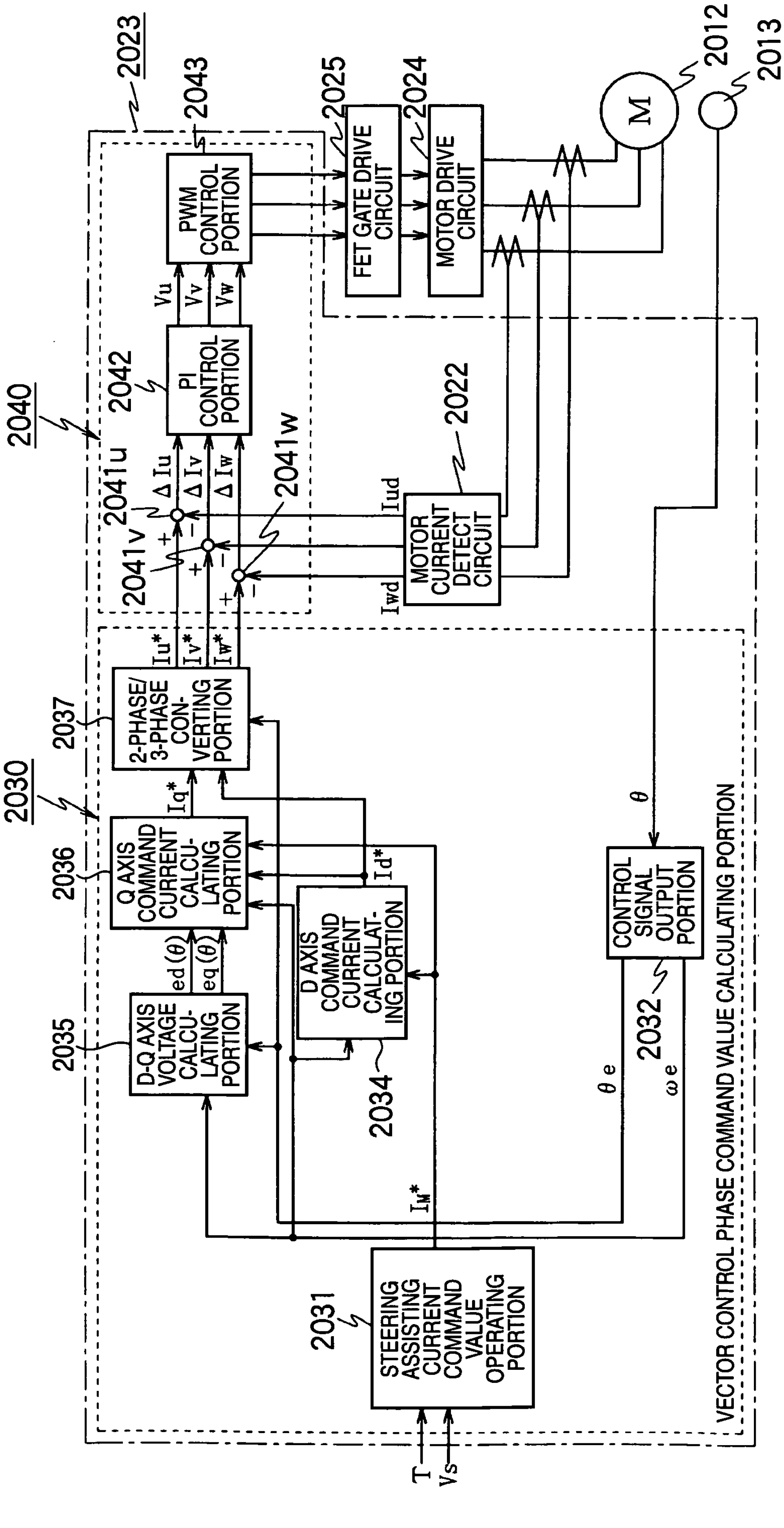
2023
2043
2025
2024
2012
2013
M
PWM CONTROL PORTION
FET GATE DRIVE CIRCUIT
MOTOR DRIVE CIRCUIT
Vu
Vv
Vw
2040
2042
PI CONTROL PORTION
2041u
ΔIu
ΔIv
ΔIw
2041w
2022
Iud
2041v
MOTOR CURRENT DETECT CIRCUIT
Iwd
2037
2-PHASE/ 3-PHASE CON- VERTING PORTION
Iu*
Iv*
Iw*
2030
2036
Q AXIS COMMAND CURRENT CALCU- LATING PORTION
Iq*
Id*
θ
2035
D-Q AXIS VOLTAGE CALCU- LATING PORTION
ed(θ)
eq(θ)
D AXIS COMMAND CURRENT CALCULAT- ING PORTION
2034
CONTROL SIGNAL OUTPUT PORTION
2032
θe
ωe
IM*
2031
STEERING ASSISTING CURRENT COMMAND VALUE OPERATING PORTION
T
Vs
VECTOR CONTROL PHASE COMMAND VALUE CALCULATING PORTION

FIG. 27

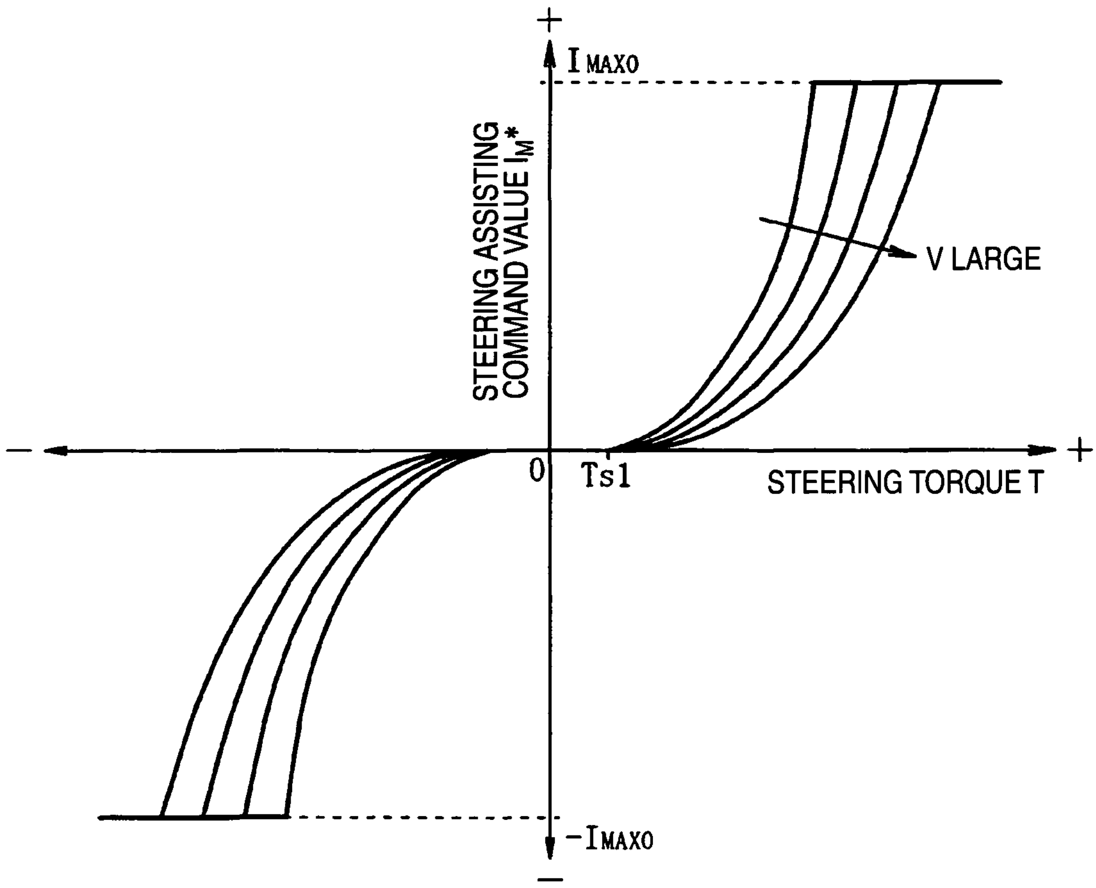

+
I MAXO
STEERING ASSISTING COMMAND VALUE IM*
V LARGE
−
0
Ts1
STEERING TORQUE T
+
−IMAXO
−

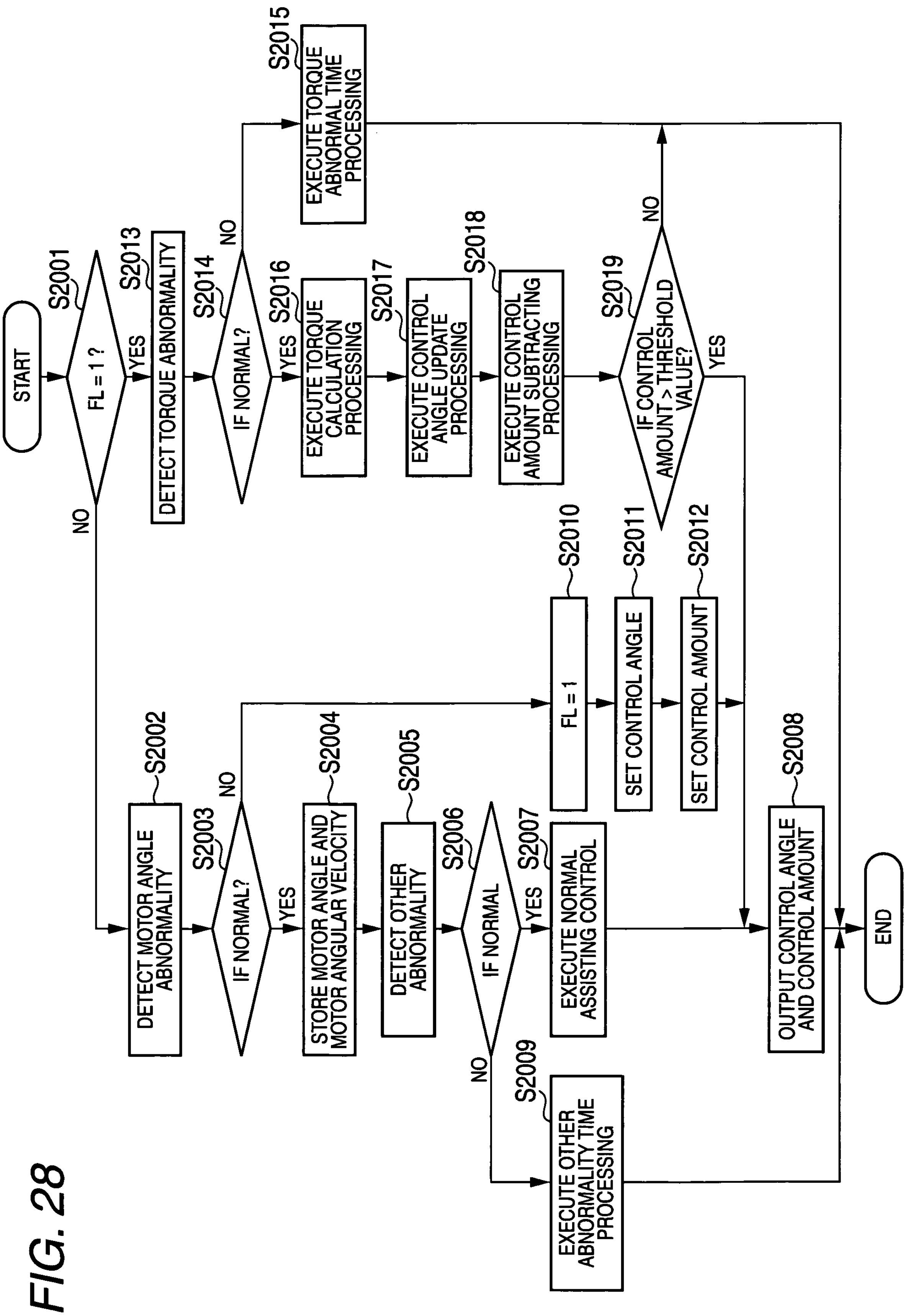
START
S2001
FL = 1 ?
YES
NO
S2013
DETECT TORQUE ABNORMALITY
S2014
IF NORMAL?
YES
NO
S2015
EXECUTE TORQUE ABNORMAL TIME PROCESSING
S2016
EXECUTE TORQUE CALCULATION PROCESSING
S2017
EXECUTE CONTROL ANGLE UPDATE PROCESSING
S2018
EXECUTE CONTROL AMOUNT SUBTRACTING PROCESSING
S2019
IF CONTROL AMOUNT > THRESHOLD VALUE?
YES
NO
S2002
DETECT MOTOR ANGLE ABNORMALITY
S2003
IF NORMAL?
YES
NO
S2004
STORE MOTOR ANGLE AND MOTOR ANGULAR VELOCITY
S2005
DETECT OTHER ABNORMALITY
S2006
IF NORMAL
YES
NO
S2007
EXECUTE NORMAL ASSISTING CONTROL
S2009
EXECUTE OTHER ABNORMALITY TIME PROCESSING
S2010
FL = 1
S2011
SET CONTROL ANGLE
S2012
SET CONTROL AMOUNT
S2008
OUTPUT CONTROL ANGLE AND CONTROL AMOUNT
END

FIG. 28

FIG. 29

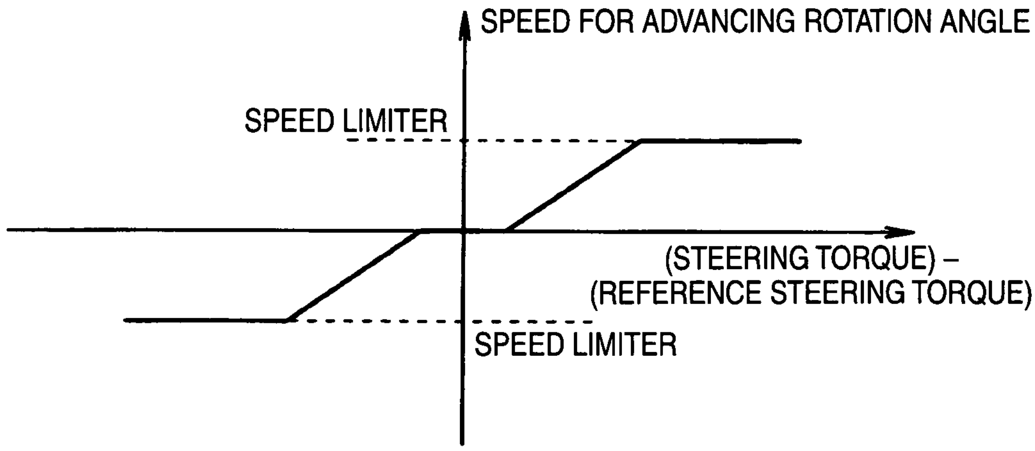
SPEED FOR ADVANCING ROTATION ANGLE
SPEED LIMITER
(STEERING TORQUE) –
(REFERENCE STEERING TORQUE)
SPEED LIMITER

FIG. 30

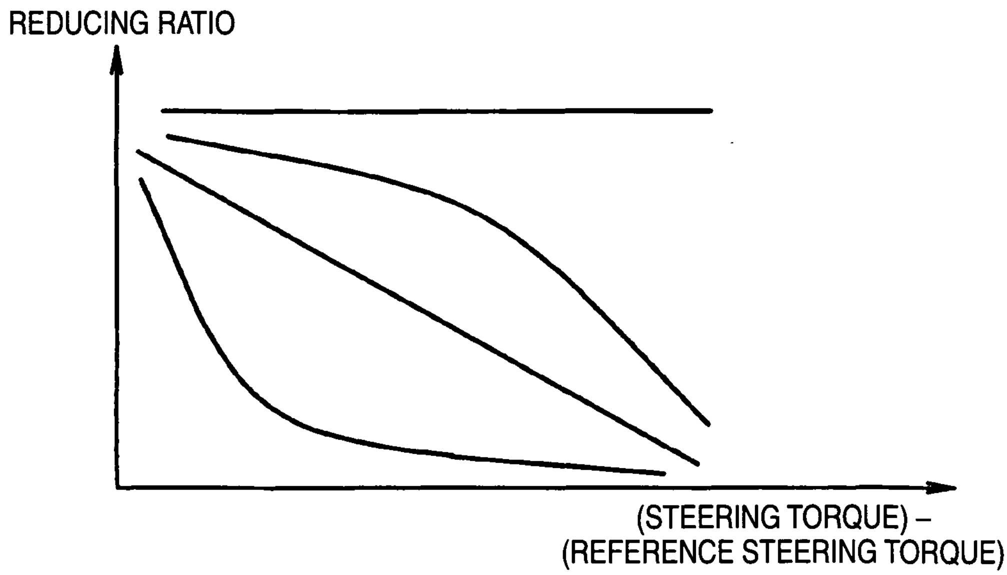
REDUCING RATIO
(STEERING TORQUE) –
(REFERENCE STEERING TORQUE)

FIG. 31

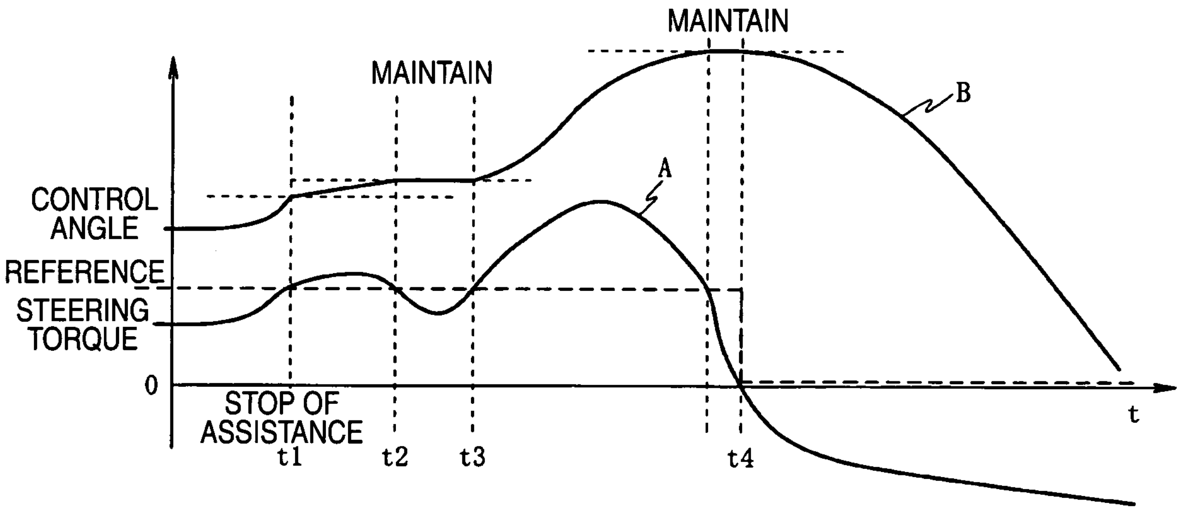
MAINTAIN
MAINTAIN
B
A
CONTROL ANGLE
REFERENCE STEERING TORQUE
0
STOP OF ASSISTANCE
t1
t2
t3
t4
t

FIG. 32

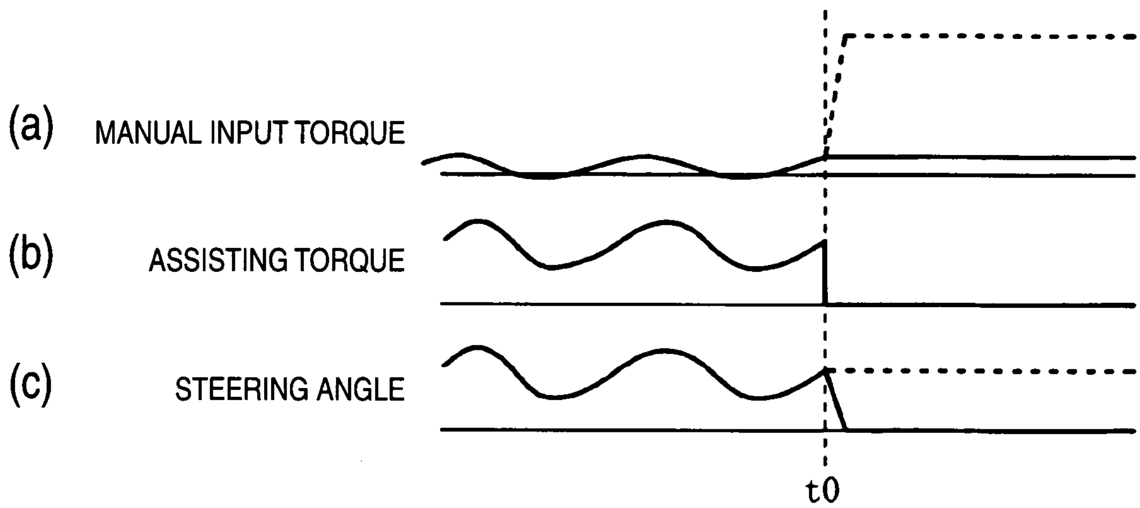
(a) MANUAL INPUT TORQUE
(b) ASSISTING TORQUE
(c) STEERING ANGLE
t0

# FIG. 33

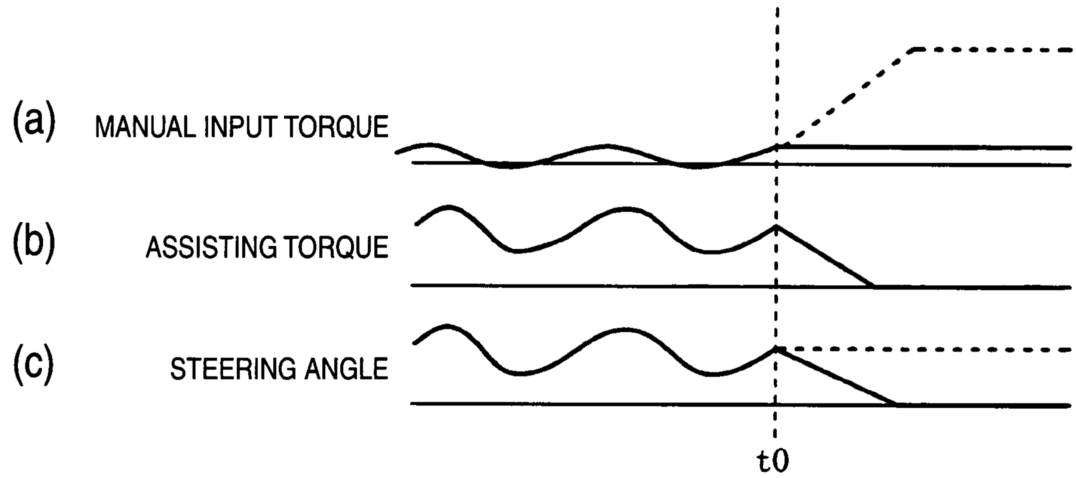
(a) MANUAL INPUT TORQUE
(b) ASSISTING TORQUE
(c) STEERING ANGLE
t0

# FIG. 34

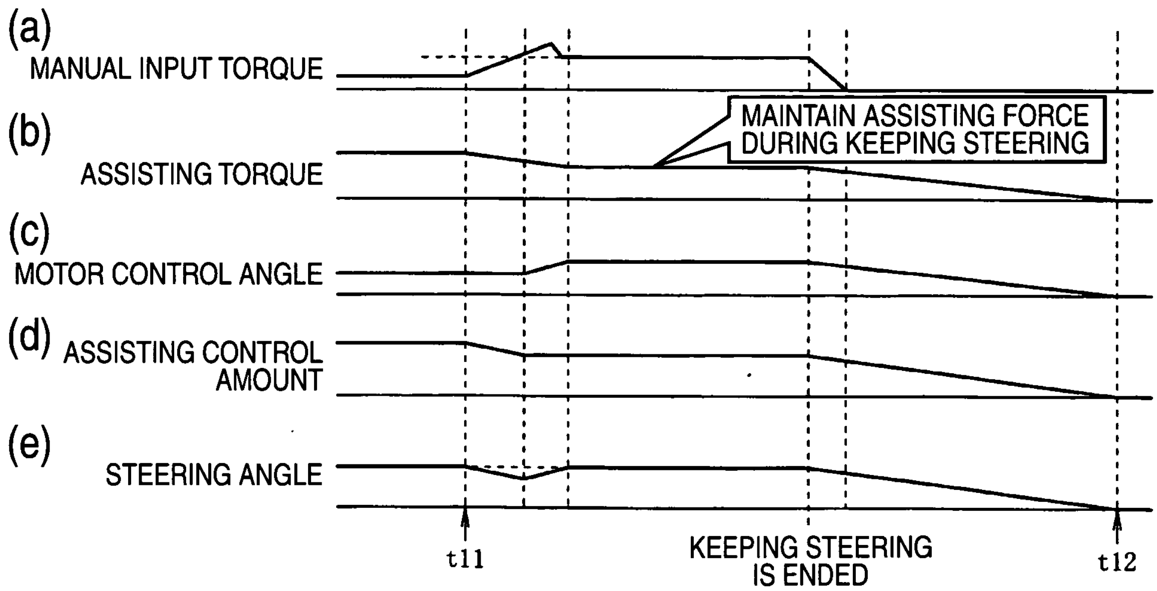
(a) MANUAL INPUT TORQUE
(b) ASSISTING TORQUE
MAINTAIN ASSISTING FORCE DURING KEEPING STEERING
(c) MOTOR CONTROL ANGLE
(d) ASSISTING CONTROL AMOUNT
(e) STEERING ANGLE
t11
KEEPING STEERING IS ENDED
t12

FIG. 35

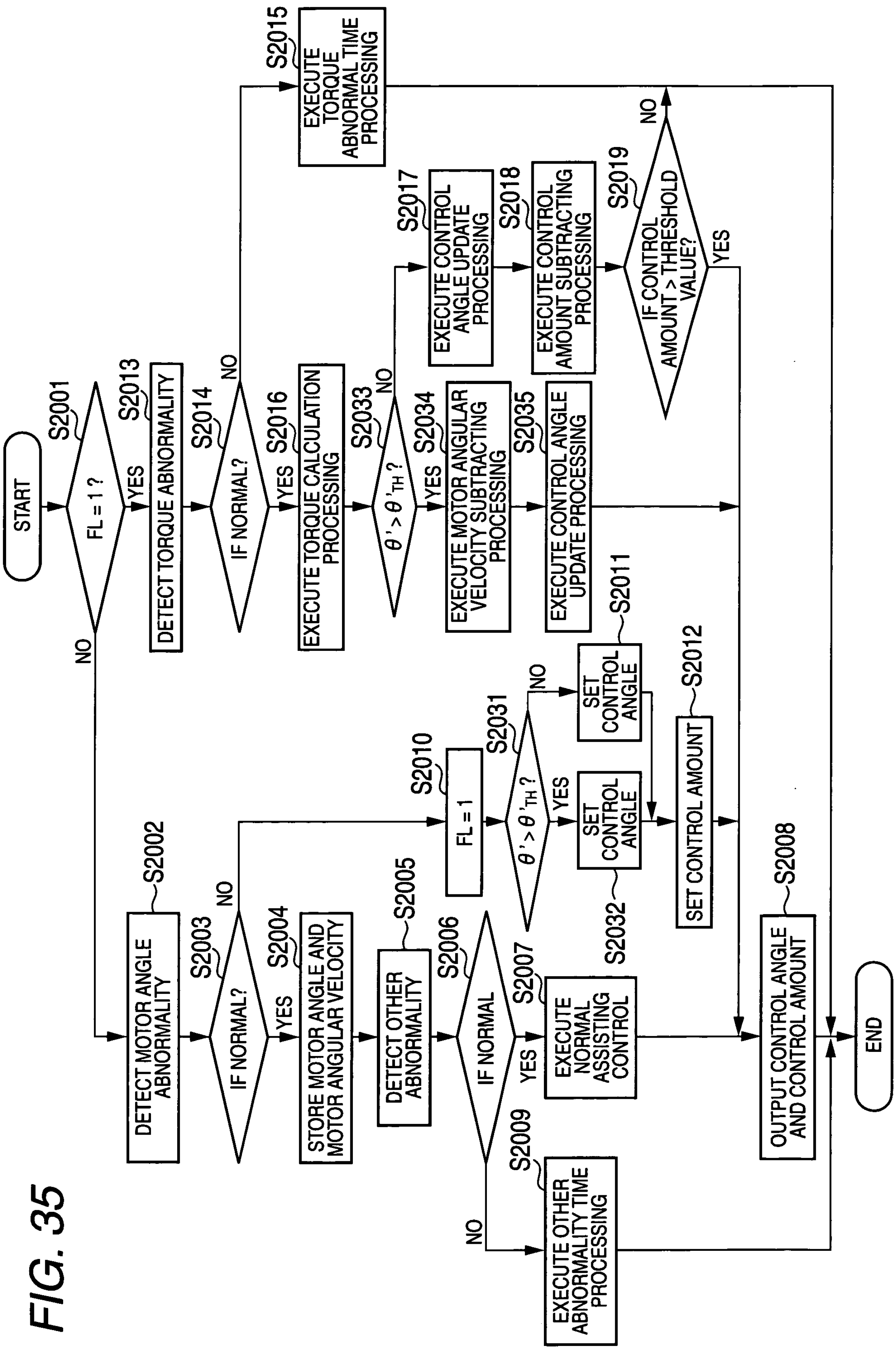

START
S2001
FL = 1 ?
YES
NO
S2013
DETECT TORQUE ABNORMALITY
S2014
IF NORMAL?
YES
NO
S2015
EXECUTE TORQUE ABNORMAL TIME PROCESSING
S2016
EXECUTE TORQUE CALCULATION PROCESSING
S2033
θ' > θ'TH ?
YES
NO
S2034
EXECUTE MOTOR ANGULAR VELOCITY SUBTRACTING PROCESSING
S2035
EXECUTE CONTROL ANGLE UPDATE PROCESSING
S2017
EXECUTE CONTROL ANGLE UPDATE PROCESSING
S2018
EXECUTE CONTROL AMOUNT SUBTRACTING PROCESSING
S2019
IF CONTROL AMOUNT > THRESHOLD VALUE?
YES
NO
S2002
DETECT MOTOR ANGLE ABNORMALITY
S2003
IF NORMAL?
YES
NO
S2010
FL = 1
S2031
θ' > θ'TH ?
YES
NO
S2032
SET CONTROL ANGLE
S2011
SET CONTROL ANGLE
S2012
SET CONTROL AMOUNT
S2004
STORE MOTOR ANGLE AND MOTOR ANGULAR VELOCITY
S2005
DETECT OTHER ABNORMALITY
S2006
IF NORMAL
YES
NO
S2007
EXECUTE NORMAL ASSISTING CONTROL
S2009
EXECUTE OTHER ABNORMALITY TIME PROCESSING
S2008
OUTPUT CONTROL ANGLE AND CONTROL AMOUNT
END

FIG. 36

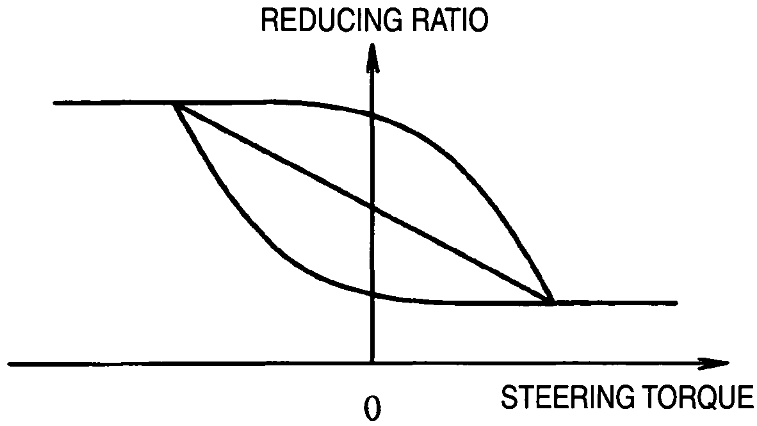
REDUCING RATIO
0
STEERING TORQUE

FIG. 37

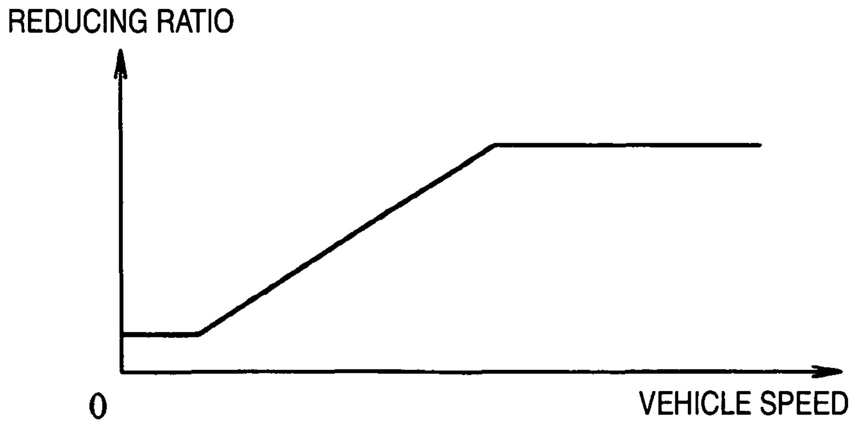
REDUCING RATIO
0
VEHICLE SPEED

FIG. 38

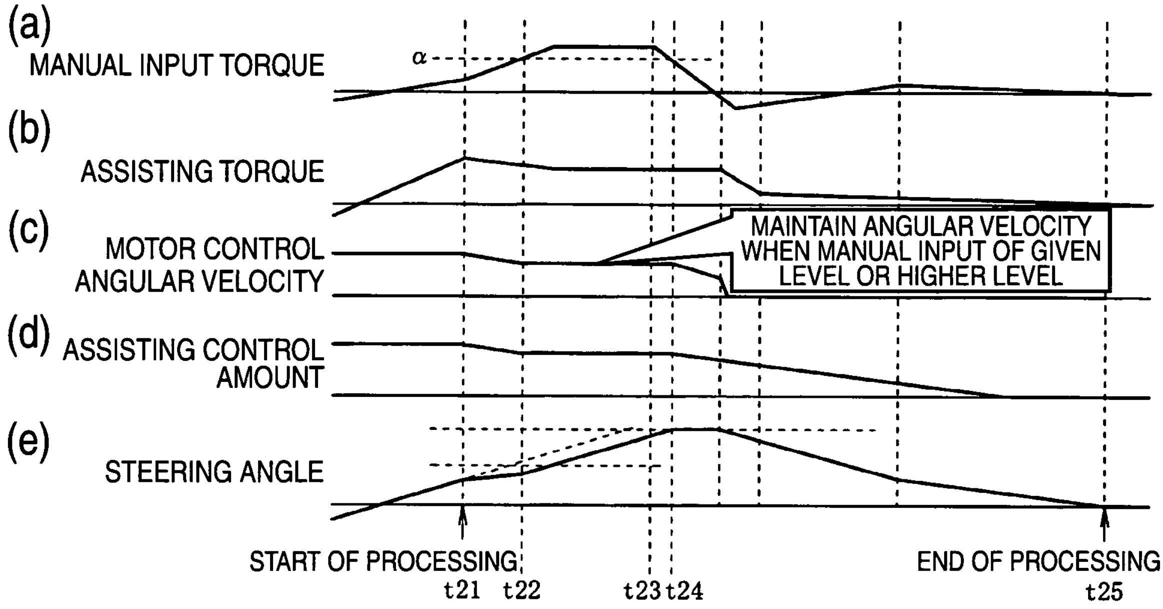
(a)
MANUAL INPUT TORQUE
α
(b)
ASSISTING TORQUE
(c)
MOTOR CONTROL
ANGULAR VELOCITY
MAINTAIN ANGULAR VELOCITY WHEN MANUAL INPUT OF GIVEN LEVEL OR HIGHER LEVEL
(d)
ASSISTING CONTROL AMOUNT
(e)
STEERING ANGLE
START OF PROCESSING
t21 t22 t23 t24
END OF PROCESSING
t25

FIG. 39

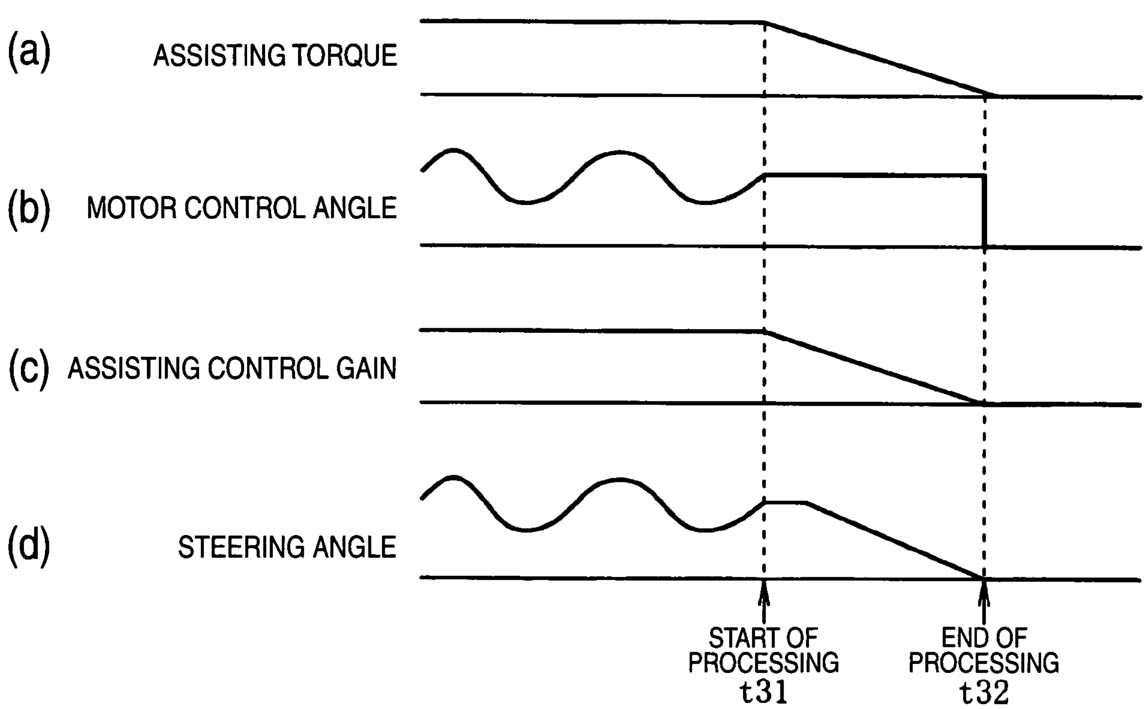
(a) ASSISTING TORQUE
(b) MOTOR CONTROL ANGLE
(c) ASSISTING CONTROL GAIN
(d) STEERING ANGLE
START OF PROCESSING
t31
END OF PROCESSING
t32

**INTERNATIONAL SEARCH REPORT**

International application No. PCT/JP2007/060725

A. CLASSIFICATION OF SUBJECT MATTER
*H02P6/16*(2006.01)i, *B62D5/04*(2006.01)i, *B62D6/00*(2006.01)i, *B62D101/00*(2006.01)n, *B62D113/00*(2006.01)n, *B62D119/00*(2006.01)n, *B62D137/00*(2006.01)n

According to International Patent Classification (IPC) or to both national classification and IPC

B. FIELDS SEARCHED

Minimum documentation searched (classification system followed by classification symbols)
H02P6/16, B62D5/04, B62D6/00, B62D101/00, B62D113/00, B62D119/00, B62D137/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2006-123775 A (NSK Ltd.), 18 May, 2006 (18.05.06), Par. No. [0018]; Figs. 1, 2 (Family: none) | 1-14,16,17, 21-24<br>15,18-20 |
| Y | JP 2004-112941 A (Aisin AW Co., Ltd.), 08 April, 2004 (08.04.04), Par. Nos. [0017], [0073] to [0080] (Family: none) | 1-14 16,17,21-24 |
| Y | JP 2005-308634 A (Hitachi, Ltd.), 04 November, 2005 (04.11.05), Par. Nos. [0006], [0056], [0057] & US 2005/0252272 A1 & EP 1589323 A2 | 13,14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 August, 2007 (21.08.07) | 28 August, 2007 (28.08.07) |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

International application No.
PCT/JP2007/060725

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2001-128482 A (Yamaha Motor Co., Ltd.), 11 May, 2001 (11.05.01), Par. No. [0020] (Family: none) | 16,17,21-24 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3600805 B
- JP 2005253226 A
- JP 2003040119 A
- JP 3399226 B
- JP 2004020548 A
- JP 2006152531 A
- JP 2006243470 A